# EUROPEAN PATENT APPLICATION

(11) **EP 4 726 978 A1**
(43) Date of publication of application: **15.04.2026**
(21) Application number: 25751623.7
(22) Date of filing: 07.02.2025
(51) Int. Cl.: H02K 33/12, H04N 23/68, G03B 5/00

(54) **ANTI-SHAKE MOTOR, IMAGE SENSOR MODULE, CAMERA MODULE AND ELECTRONIC DEVICE**

(30) Priority: 08.02.2024 CN 202410177188; 23.02.2024 CN 202410204970; 07.04.2024 CN 202410414403
(71) Applicant: Huawei Technologies Co., Ltd., Shenzhen, Guangdong 518129 (CN)
(72) Inventor: LU, Lei, Shenzhen, Guangdong 518129 (CN); SONG, Baizhe, Shenzhen, Guangdong 518129 (CN); LIN, Huan, Shenzhen, Guangdong 518129 (CN); LI, Zhilong, Shenzhen, Guangdong 518129 (CN); KUO, Li-Te, Shenzhen, Guangdong 518129 (CN); DING, Ruiming, Shenzhen, Guangdong 518129 (CN)
(74) Representative: Isarpatent
(86) International application number: PCT/CN2025/076102
(87) International publication number: WO 2025/168024

(57) **Abstract**

This application provides an image-stabilization motor, an image sensor assembly, a camera module, and an electronic device. The image-stabilization motor includes a stationary carrier, a movable carrier, a drive magnetic piece, a first drive coil, and a second drive coil. The movable carrier is configured to fasten an image sensor module. The drive magnetic piece is fastened to the stationary carrier. Both the first drive coil and the second drive coil are fastened to the movable carrier. The drive magnetic piece is located between the first drive coil and the second drive coil. Both the first drive coil and the second drive coil face the drive magnetic piece, to drive the movable carrier to move relative to the stationary carrier. It can be understood that, this application provides a drive architecture similar to a "sandwich"-type magnet coil. Magnetic induction lines on both sides of the drive magnetic piece can be fully used by the first drive coil and the second drive coil. Utilization of a magnetic field of the drive magnetic piece is high. This helps increase a drive stroke of the image-stabilization motor.

## Description

This application claims priorities to Chinese Patent Application No. 202410177188.0, filed with the China National Intellectual Property Administration on February 8, 2024 and entitled "IMAGE-STABILIZATION MOTOR, IMAGE SENSOR ASSEMBLY, CAMERA MODULE, AND ELECTRONIC DEVICE", to Chinese Patent Application No. 202410204970.7, filed with the China National Intellectual Property Administration on February 23, 2024 and entitled "IMAGE-STABILIZATION MOTOR, IMAGE SENSOR ASSEMBLY, CAMERA MODULE, AND ELECTRONIC DEVICE", and to Chinese Patent Application No. 202410414403.4, filed with the China National Intellectual Property Administration on April 7, 2024 and entitled "IMAGE-STABILIZATION MOTOR, IMAGE SENSOR ASSEMBLY, CAMERA MODULE, AND ELECTRONIC DEVICE", all of which are incorporated herein by reference in their entireties.

### TECHNICAL FIELD

This application relates to the field of camera technologies, and in particular, to an image-stabilization motor, an image sensor assembly, a camera module, and an electronic device.

### BACKGROUND

With popularization and development of smartphones, photographing with a mobile phone becomes an image shooting method commonly used by people, and a mobile phone with an optical image stabilization function is increasingly popular among users. A conventional camera module includes an image-stabilization motor for an image sensor, and an image sensor. The image-stabilization motor for an image sensor implements image stabilization for the camera module by controlling motion of the image sensor. The conventional image-stabilization motor for an image sensor usually implements a driving force through cooperation between a coil and a magnet. However, because only a single side of a magnetic induction line of a conventional magnet is effectively used by a drive coil, utilization of a magnetic field in a Z direction is low, and a drive stroke of the conventional image-stabilization motor for an image sensor is small.

### SUMMARY

Embodiments of this application provide an image-stabilization motor, an image sensor assembly, a camera module, and an electronic device, to obtain an image-stabilization motor that can improve utilization of magnetic induction lines and implement a larger rated stroke.

According to a first aspect, an image-stabilization motor is provided. The image-stabilization motor includes a stationary carrier, a movable carrier, a drive magnetic piece, a first drive coil, and a second drive coil. The movable carrier is configured to fasten an image sensor module.

The drive magnetic piece is fastened to the stationary carrier. Both the first drive coil and the second drive coil are fastened to the movable carrier. The drive magnetic piece is located between the first drive coil and the second drive coil.

Both the first drive coil and the second drive coil face the drive magnetic piece, to drive the movable carrier to move relative to the stationary carrier.

It can be understood that, this application provides a drive architecture similar to a "sandwich"-type magnet coil. The drive magnetic piece is fastened to the stationary carrier. Both the first drive coil and the second drive coil are fastened to the movable carrier. The drive magnetic piece is located between the first drive coil and the second drive coil. It can be understood that magnetic induction lines on both sides of the drive magnetic piece can be fully used by the first drive coil and the second drive coil. Utilization of a magnetic field of the drive magnetic piece is high. This helps increase a drive stroke of the image-stabilization motor. In addition, compared with a solution in which the first drive coil and the second drive coil are tiled on an X-Y plane, in this application, the first drive coil, the drive magnetic piece, and the second drive coil are sequentially disposed in a Z-axis direction, to effectively use space in the Z-axis direction and reduce dimensions in an X-axis direction and a Y-axis direction. This can greatly improve space utilization in the Z-axis direction, and improve utilization of magnetic induction lines to increase a thrust, making it possible to apply image stabilization to a long-focus module that has more compact space and needs a larger rated stroke.

In addition, because a first drive magnetic piece and a second drive magnetic piece may be disposed in the Z-axis direction, quantities of magnets, arranged on the X-Y plane, of the first drive magnetic piece and the second drive magnetic piece do not affect each other, so that large quantities of first drive magnetic pieces and second drive magnetic pieces can be disposed.

In a possible implementation, the stationary carrier includes a magnetic isolation sheet, the magnetic isolation sheet includes a first surface and a second surface that are arranged facing away from each other, the first surface faces the first drive coil, and the second surface faces a second drive coil. The drive magnetic piece includes a first drive magnetic piece and a second drive magnetic piece, the first drive magnetic piece is fastened to the first surface, and the second drive magnetic piece is fastened to the second surface.

The first drive coil faces the first drive magnetic piece, to drive the movable carrier to move relative to the stationary carrier in a first direction.

The second drive coil includes a first drive sub-coil, and the first drive sub-coil faces the second drive magnetic piece, to drive the movable carrier to move relative to the stationary carrier in a second direction. The second direction is different from the first direction.

It can be understood that the first drive coil faces the first drive magnetic piece, to drive the movable carrier to move relative to the stationary carrier in the first direction X, and the first drive sub-coil of the second drive magnetic piece faces the second drive magnetic piece, to drive the movable carrier to move relative to the stationary carrier in the second direction Y. In this way, the movable carrier can move relative to the stationary carrier along a plane perpendicular to a third direction Z (that is, the X-Y plane). When a camera module captures ambient light, if an electronic device shakes on the X-Y plane due to an external force, movement of the image sensor module on the X-Y plane may be controlled, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In addition, the first drive magnetic piece is fastened to the first surface of the magnetic isolation sheet, and the second drive magnetic piece is fastened to the second surface of the magnetic isolation sheet. In this way, the magnetic isolation sheet can effectively prevent crosstalk between magnetic induction lines of the first drive magnetic piece and the second drive magnetic piece, to ensure utilization of the magnetic induction lines of the first drive magnetic piece and the second drive magnetic piece.

In addition, because the first drive magnetic piece and the second drive magnetic piece may be disposed in the Z-axis direction, quantities of magnets, arranged on the X-Y plane, of the first drive magnetic piece and the second drive magnetic piece do not affect each other, so that large quantities of first drive magnetic pieces and second drive magnetic pieces can be disposed.

In a possible implementation, the second drive coil includes a second drive sub-coil, the second drive sub-coil and the first drive sub-coil are disposed at a spacing, and the second drive sub-coil faces the second drive magnetic piece, to drive the movable carrier to rotate relative to the stationary carrier.

It can be understood that the second drive sub-coil is disposed facing the second drive magnetic piece, to drive the movable carrier to rotate relative to the stationary carrier, to perform rotation compensation. For example, when the movable carrier is driven to rotate clockwise relative to the stationary carrier, the movable carrier drives the image sensor module to rotate clockwise. In this case, a direction and a magnitude of a current on the second drive sub-coil of the second drive coil are controlled, to obtain a compensation driving force for the movable carrier to rotate counterclockwise relative to the stationary carrier, to implement rotation compensation for the movable carrier around the Z-axis direction. In this case, the image sensor module also performs rotation compensation around the Z-axis direction, to counteract a shake stroke produced by rotating around the Z-axis direction by the camera module, to avoid or reduce a position offset of the camera module that is caused by the shake. In this way, optical image stabilization is implemented for the camera module, to improve imaging quality of the camera module.

In a possible implementation, there are two second drive sub-coils, the two second drive sub-coils are connected in series, and current directions of the two second drive sub-coils are opposite. In this way, after the two second drive sub-coils are energized, the two second drive sub-coils are subject to opposite acting forces. For example, when a 1^{st} second drive sub-coil is subject to an acting force in a positive direction of a Y axis, a 2^{nd} second drive sub-coil is subject to an acting force in a negative direction of the Y axis. In this case, torques applied by the two second drive sub-coils to the movable carrier enable the movable carrier to rotate relative to the stationary carrier.

In a possible implementation, the image-stabilization motor includes a first position sensor, a second position sensor, and a third position sensor, and all of the first position sensor, the second position sensor, and the third position sensor are fastened to the movable carrier at spacings, where
the first position sensor and the second position sensor are configured to separately detect a displacement of the movable carrier moving relative to the stationary carrier in the first direction, and are further configured to cooperate with each other to detect a rotation angle of the movable carrier relative to the stationary carrier; and/or
the image-stabilization motor includes the third position sensor, the third position sensor is fastened to the movable carrier, and the third position sensor is configured to detect a displacement of the movable carrier moving relative to the stationary carrier in the second direction.

In a possible implementation, the movable carrier is movably connected to the stationary carrier through a rolling piece. It can be understood that, compared with a solution in which the movable carrier is movably connected to the stationary carrier through a guide bracket, in this implementation, a connection manner is simpler, and a structure is simpler. This facilitates miniaturization of the image-stabilization motor.

For example, there are three rolling pieces, and the three rolling pieces are distributed at different positions to support the stationary carrier at three points, so that the image-stabilization motor can be stably disposed.

In a possible implementation, the stationary carrier includes a metal piece and an insulation piece, the metal piece is embedded in the insulation piece, the metal piece includes an extension portion, and the extension portion is exposed relative to the insulation piece. The rolling piece is disposed on the movable carrier, and the rolling piece is in contact with the extension portion.

It can be understood that, because the extension portion of the stationary carrier is made of a metal material, a friction force between the rolling piece and the stationary carrier is small. This facilitates stable movement of the movable carrier relative to the stationary carrier.

In a possible implementation, the movable carrier is provided with a rolling piece slot. The rolling piece is located in the rolling piece slot. In this way, the rolling piece is not likely to be detached from the movable carrier.

In a possible implementation, lubricating grease is applied between the rolling piece and the rolling piece slot. This can further reduce a friction force between the rolling piece and the stationary carrier, to better implement a rolling piece-based superlubricity system. In addition, the rolling piece is not likely to be detached from the rolling piece slot.

In a possible implementation, the extension portion is made of a magnetic-attractive material, the movable carrier is provided with a magnetic-attractive magnetic piece, and the magnetic-attractive magnetic piece is disposed opposite to the extension portion.

It can be understood that the magnetic-attractive magnetic piece is disposed opposite to the extension portion, and a magnetic attraction force may be produced between the magnetic-attractive magnetic piece and the extension portion. The magnetic attraction force can enable the movable carrier to tend to approach the stationary carrier. In this way, the movable carrier can be stably attached to the stationary carrier in the Z-axis direction, and when the movable carrier moves relative to the stationary carrier, the movable carrier achieves higher stability.

It can be understood that the extension portion of the stationary carrier not only can provide a smooth contact surface for the rolling piece, but also can serve as a magnetic-attractive piece of the magnetic-attractive magnetic piece. The extension portion of the stationary carrier can be used for "a plurality of purposes".

It can be understood that both the rolling piece and the magnetic-attractive magnetic piece are disposed on the movable carrier, so that when the movable carrier moves relative to the stationary carrier, relative positions of the rolling piece and the magnetic-attractive magnetic piece are not likely to change greatly. Particularly, when there are a plurality of rolling pieces and a plurality of magnetic-attractive magnetic pieces, relative positions of a center of contact between the plurality of rolling pieces and the stationary carrier and a center of magnetic attraction forces of the plurality of magnetic-attractive magnetic pieces are not likely to change. In this case, when the movable carrier moves relative to the stationary carrier, the movable carrier achieves high stability. To be specific, stable press-fitting and smooth movement are implemented between the movable carrier and the stationary carrier.

In a possible implementation, the movable carrier includes a first bracket and a second bracket. The first bracket includes a bottom plate, a first bump, and a second bump. The first bump and the second bump are convexly disposed on a same side of the bottom plate. The second bracket is fastened to the first bump and the second bump, and is disposed opposite to the bottom plate at a spacing.

The first drive coil is fastened to the bottom plate, and the second drive coil is fastened to the second bracket.

It can be understood that the movable carrier is disposed to include the first bracket and the second bracket, so that when the second bracket is mounted on the first bump and the second bump of the first bracket, the second bracket is disposed opposite to the bottom plate at a spacing. That is, there is mounting space between the second bracket and the bottom plate. In this case, a part of the stationary carrier is further disposed between the bottom plate of the first bracket and the second bracket. In this way, when the drive magnetic piece is fastened to the stationary carrier and both the first drive coil and the second drive coil are fastened to the movable carrier, the drive magnetic piece may be located between the first drive coil and the second drive coil.

It can be understood that the movable carrier is disposed to include the first bracket and the second bracket, to facilitate assembly of the movable carrier and the stationary carrier.

In a possible implementation, the image-stabilization motor further includes a movable circuit board. The movable circuit board includes a first stationary portion, an elastic portion, and a second stationary portion. The elastic portion is connected between the first stationary portion and the second stationary portion. The bottom plate of the first bracket is fastened to the first stationary portion, and the stationary carrier is fastened to the second stationary portion. The image sensor module is fastened to a side, away from the movable carrier, of the first stationary portion.

It can be understood that, when the movable carrier moves in the first direction X, the elastic portion of the movable circuit board is deformed in the first direction X. The image sensor module and the first stationary portion of the movable circuit board may move along with the movable carrier in the first direction X. When the movable carrier moves relative to the stationary carrier in the second direction Y, the elastic portion of the movable circuit board is deformed in the second direction Y. The image sensor module and the first stationary portion of the movable circuit board may move along with the movable carrier in the second direction Y. Therefore, the movable carrier may control, through the movable circuit board, the image sensor module to move along the plane perpendicular to the third direction Z (that is, the X-Y plane). When the camera module captures ambient light, if the electronic device shakes on the X-Y plane due to an external force, movement of the image sensor module on the X-Y plane may be controlled, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In addition, when the movable carrier is driven to rotate clockwise relative to the stationary carrier, the movable carrier drives, through the elastic portion of the movable circuit board, the image sensor module to rotate clockwise. In this implementation, a direction and a magnitude of a current on the second drive sub-coil of the second drive coil are controlled, to obtain a compensation driving force for the movable carrier to rotate counterclockwise relative to the stationary carrier, to implement rotation compensation for the movable carrier around the Z-axis direction. In this case, the image sensor module also performs rotation compensation around the Z-axis direction, to counteract a shake stroke produced by rotating around the Z-axis direction by the camera module, to avoid or reduce a position offset of the camera module that is caused by the shake. In this way, optical image stabilization is implemented for the camera module, to improve imaging quality of the camera module.

For example, the image sensor module is further electrically connected to the first stationary portion of the movable circuit board. An image sensor may be electrically connected to the first stationary portion of the movable circuit board through the module circuit board, and electrically connected to the outside of an image sensor assembly through the elastic portion and the second stationary portion of the movable circuit board.

In a possible implementation, the elastic portion is in a spiral shape, a broken-line shape, or a curved shape. This can increase a length of the elastic portion, to greatly reduce an elasticity coefficient of the elastic portion. A movement stroke of the movable circuit board is subject to a small limitation, so that the movable carrier can have a large image-stabilization stroke. In addition, in an elastic portion in a spiral form and with a small K value, dimensions in the X-axis direction and the Y-axis direction can be effectively reduced while a small dimension is kept in the Z-axis direction, to reduce crosstalk (crosstalk) during movement on the X-Y plane, optimize electromagnetic drive performance, and reduce power consumption.

In a possible implementation, a length of the elastic portion is greater than half of a perimeter of an edge of the first stationary portion. This can increase a length of the elastic portion, to greatly reduce an elasticity coefficient of the elastic portion.

In a possible implementation, the elastic portion surrounds at least half of the edge of the first stationary portion, or the elastic portion surrounds the edge of the first stationary portion by a plurality of circles. This can increase a length of the elastic portion, to greatly reduce an elasticity coefficient of the elastic portion.

In a possible implementation, an elasticity coefficient of the movable circuit board in a length direction is Ky, and a value of Ky ranges from 25 to 35; and/or an elasticity coefficient of the movable circuit board in a width direction is K_{X}, and a value of K_{X} ranges from 85 to 100. In this case, K_{Y} of the movable circuit board is less than K_{X}.

It can be understood that, because K_{Y} of the movable circuit board is less than K_{X}, a limitation on a stroke of the movable carrier moving relative to the stationary carrier in the second direction Y is smaller than a limitation on a stroke of the movable carrier moving relative to the stationary carrier in the first direction X. In this case, in this embodiment, a driving force produced by the first drive sub-coil and the second drive magnetic piece may be designed to be less than a driving force produced by the first drive coil and the first drive magnetic piece, to better match the fact that K_{Y} of the movable circuit board is less than K_{X}. For example, a small quantity of first drive sub-coils and a small quantity of second drive magnetic pieces may be disposed, to facilitate miniaturization of the image-stabilization motor.

In a possible implementation, the movable circuit board further includes a reinforcing portion, the reinforcing portion is located on the first stationary portion, and the movable carrier is fastened to the reinforcing portion. It can be understood that the reinforcing portion may be a steel plate or another metal plate. The reinforcing portion can improve overall strength of the first stationary portion.

In a possible implementation, the first bracket further includes a stationary bump. The stationary bump is convexly disposed on the bottom plate, and is located on a side, away from the first bump, of the bottom plate and/or a side, away from the second bump, of the bottom plate. The stationary bump passes through a gap of the elastic portion, and is fastened to the image sensor module.

It can be understood that the stationary bump is disposed on the bottom plate of the first bracket, and the stationary bump passes through the movable circuit board and is directly fastened to the image sensor module. In this way, compared with a solution in which the image sensor module is fastened to the first bracket through the movable circuit board, in this implementation, an assembly tolerance chain between the image sensor module and the first bracket is short, an assembly tolerance between the image sensor module and the first bracket is small, and the image sensor module and the bottom plate of the first bracket may be located on a same plane to a large extent. In addition, when the movable carrier moves on the X-Y plane, the movable carrier may directly drive the image sensor module to move, and a movement status of the image sensor module is slightly affected by the movable circuit board.

In a possible implementation, the image-stabilization motor includes a first circuit board and an image-stabilization drive chip. The first circuit board is fastened to the bottom plate of the first bracket. Both the first drive coil and the image-stabilization drive chip are fastened to the first circuit board. An input end and an output end of the first drive coil form a current loop through the first circuit board and the image-stabilization drive chip.

In a possible implementation, the bottom plate of the first bracket is provided with a first avoidance hole, the first circuit board is provided with a second avoidance hole, and the first avoidance hole and the second avoidance hole are arranged opposite to each other. The movable circuit board includes an electrical connection portion. The electrical connection portion is fastened to the first stationary portion. A part of the electrical connection portion passes through the first avoidance hole and is located in the second avoidance hole. A pin end of the electrical connection portion is electrically connected to a second pin end of the first circuit board. The image-stabilization drive chip is electrically connected to the electrical connection portion through the first circuit board, and is electrically connected to the outside through the first stationary portion, the elastic portion, and the second stationary portion of the movable circuit board.

It can be understood that, compared with a conventional image stabilization solution for a primary camera, in this implementation, the image sensor module, the movable circuit board, the first circuit board, and the image-stabilization drive chip are separately designed in the Z-axis direction, and the electrical connection portion is disposed on the movable circuit board, to implement an electrical connection between the image sensor and the image-stabilization drive chip, effectively utilize space along a Z axis, and further improve space utilization on the X-Y plane.

In a possible implementation, the image-stabilization motor includes a second circuit board, the second circuit board is fastened to the second bracket, and the second drive coil is fastened to the second circuit board. The second drive coil forms a current loop with the image-stabilization drive chip through the second circuit board, an electric-conductor in the movable carrier, and the first circuit board. In this way, an electrical connection path between the second drive coil and the image-stabilization drive chip is simple.

In a possible implementation, the stationary carrier includes a top plate, and a first side plate and a second side plate that are disposed opposite to each other. The top plate is connected between the first side plate and the second side plate.

The top plate and the first side plate are disposed at an obtuse angle, and/or the top plate and the second side plate are disposed at an obtuse angle.

At least a part of the top plate forms the magnetic isolation sheet. The first surface of the magnetic isolation sheet is a surface, facing an inner side of the stationary carrier, of the top plate. The second surface of the magnetic isolation sheet is a surface, facing away from an outer side of the stationary carrier, of the top plate.

It can be understood that the top plate and the first side plate are disposed at an obtuse angle, and/or the top plate and the second side plate are disposed at an obtuse angle, so that the stationary carrier is approximately in a "pyramid" shape. In this case, the second drive coil is disposed on a side of the top plate of the stationary carrier, the first drive magnetic piece and the second drive magnetic piece are disposed on the top plate of the stationary carrier, and the second drive coil is located on a bottom side of the stationary carrier. In this way, in this implementation, the image-stabilization motor is in a "pyramid" stacked architecture, the second drive coil is disposed at a pyramid tip layer, the first drive magnetic piece and the second drive magnetic piece are disposed at middle layers from top to bottom, and the first drive coil is disposed at a pyramid bottom layer, to jointly implement a three-axis-decoupled image stabilization function for the image sensor.

In a possible implementation, the image-stabilization motor further includes a guide bracket, and the guide bracket includes a first support portion, a second support portion, and a third support portion.

The first support portion, the second support portion, and the third support portion are connected to the first support of the movable carrier through a plurality of first support pieces, and are connected to the stationary carrier through a plurality of second support pieces, to make a direction of relative movement between the movable carrier and the guide bracket different from a direction of relative movement between the guide bracket and the stationary carrier.

It can be understood that the movable carrier is movably connected to the stationary carrier through the guide bracket, and the movable carrier is not likely to rotate relative to the stationary carrier. A movement mode of the movable carrier is more stable.

In a possible implementation,
the drive magnetic piece includes a first drive magnetic piece and a second drive magnetic piece, the first drive coil includes a first drive sub-coil and a second drive sub-coil, and the second drive coil includes a first drive sub-coil and a second drive sub-coil. The first drive magnetic piece is located between the first drive sub-coil of the first drive coil and the first drive sub-coil of the second drive coil. The second drive magnetic piece is located between the second drive sub-coil of the first drive coil and the second drive sub-coil of the second drive coil.

Both the first drive sub-coil of the first drive coil and the first drive sub-coil of the second drive coil face the first drive magnetic piece, to drive the movable carrier to move relative to the stationary carrier in a first direction.

Both the second drive sub-coil of the first drive coil and the second drive sub-coil of the second drive coil face the second drive magnetic piece, to drive the movable carrier to move relative to the stationary carrier in a second direction. The second direction is different from the first direction.

It can be understood that the first drive magnetic piece is disposed between the first drive sub-coil of the first drive coil and the first drive sub-coil of the second drive coil, so that magnetic induction lines on both sides of the first drive magnetic piece can be fully used by the first drive sub-coil of the first drive coil and the first drive sub-coil of the second drive coil. Utilization of a magnetic field of the first drive magnetic piece is high. This helps increase a drive stroke of the image-stabilization motor.

It can be understood that the second drive magnetic piece is disposed between the second drive sub-coil of the first drive coil and the second drive sub-coil of the second drive coil, so that magnetic induction lines on both sides of the second drive magnetic piece can be fully used by the second drive sub-coil of the first drive coil and the second drive sub-coil of the second drive coil. Utilization of a magnetic field of the second drive magnetic piece is high. This helps increase a drive stroke of the image-stabilization motor.

In a possible implementation, the stationary carrier is provided with a first through hole and a second through hole, the first drive magnetic piece is located in the first through hole, and the second drive magnetic piece is located in the second through hole.

In a possible implementation, the drive magnetic piece includes a third drive magnetic piece, the first drive coil includes a third drive sub-coil, the second drive coil includes a third drive sub-coil, and the third drive magnetic piece is located between the third drive sub-coil of the first drive coil and the third drive sub-coil of the second drive coil. The third drive sub-coil of the first drive coil and the third drive sub-coil of the second drive coil face the third drive magnetic piece, to drive the movable carrier to rotate relative to the stationary carrier.

It can be understood that the third drive magnetic piece is disposed between the third drive sub-coil of the first drive coil and the third drive sub-coil of the second drive coil, so that magnetic induction lines on both sides of the third drive magnetic piece can be fully used by the third drive sub-coil of the first drive coil and the third drive sub-coil of the second drive coil. Utilization of a magnetic field of the third drive magnetic piece is high. This helps increase a drive stroke of the image-stabilization motor.

In a possible implementation, the stationary carrier is provided with a third through hole, and the third drive magnetic piece is located in the third through hole.

According to a second aspect, an image-stabilization motor is provided. The image-stabilization motor includes a stationary carrier, a movable carrier, a drive coil, a first drive magnetic piece, and a second drive magnetic piece. The movable carrier is configured to fasten an image sensor module. The drive coil is fastened to the stationary carrier. Both the first drive magnetic piece and the second drive magnetic piece are fastened to the movable carrier. The drive coil is located between the first drive magnetic piece and the second drive magnetic piece.

The drive coil faces the first drive magnetic piece and the second drive magnetic piece, to drive the movable carrier to move relative to the stationary carrier.

It can be understood that, this implementation provides a drive architecture similar to a "sandwich"-type magnet coil. Specifically, the drive coil is fastened to the stationary carrier, both the first drive magnetic piece and the second drive magnetic piece are fastened to the movable carrier, and the drive coil is located between the first drive magnetic piece and the second drive magnetic piece. Compared with a solution in which the first drive magnetic piece and the second drive magnetic piece are tiled on an X-Y plane, in this application, the first drive magnetic piece, the drive coil, and the second drive magnetic piece are sequentially disposed in a Z-axis direction, to effectively use space in the Z-axis direction and reduce dimensions in an X-axis direction and a Y-axis direction. This can greatly improve space utilization in the Z-axis direction.

In addition, because a first drive magnetic piece and a second drive magnetic piece may be disposed in the Z-axis direction, quantities of magnets, arranged on the X-Y plane, of the first drive magnetic piece and the second drive magnetic piece do not affect each other, so that large quantities of first drive magnetic pieces and second drive magnetic pieces can be disposed.

It can be understood that, because the drive coil is fastened to the stationary carrier and both the first drive magnetic piece and the second drive magnetic piece are fastened to the movable carrier, the image-stabilization motor in this implementation is a moving-magnet motor. In this way, compared with that in a moving-coil motor, an electrical connection manner of the drive coil in this implementation is simpler.

It can be understood that, because the drive coil is located between the first drive magnetic piece and the second drive magnetic piece and the first drive magnetic piece and the second drive magnetic piece are away from each other, crosstalk between magnetic induction lines of the first drive magnetic piece and the second drive magnetic piece can be reduced, to ensure utilization of the magnetic induction lines of the first drive magnetic piece and the second drive magnetic piece.

In a possible implementation, the drive coil includes a first drive coil and a second drive coil, and the second drive magnetic piece includes a first drive magnetic sub-piece. The first drive coil faces the first drive magnetic piece, to drive the movable carrier to move relative to the stationary carrier in a first direction. The second drive coil faces the first drive magnetic sub-piece, to drive the movable carrier to move relative to the stationary carrier in a second direction. The second direction is different from the first direction.

It can be understood that the first drive coil faces the first drive magnetic piece, to drive the movable carrier to move relative to the stationary carrier in the first direction X, and the second drive coil faces the first drive magnetic sub-piece, to drive the movable carrier to move relative to the stationary carrier in the second direction Y. In this way, the movable carrier can move relative to the stationary carrier along a plane perpendicular to a third direction Z (that is, the X-Y plane). When a camera module captures ambient light, if an electronic device shakes on the X-Y plane due to an external force, movement of the image sensor module on the X-Y plane may be controlled, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In a possible implementation, the first drive coil and the second drive coil are arranged in a third direction, and the third direction is different from both the first direction and the second direction.

Compared with a solution in which the first drive coil and the second drive coil are tiled on the X-Y plane, in this application, the first drive coil and the second drive coil are arranged in the third direction, so that space in the Z-axis direction can be further used, to further reduce dimensions in the X-axis direction and the Y-axis direction. This can greatly improve space utilization in the Z-axis direction.

In a possible implementation, the image-stabilization motor includes a motor circuit board, and the motor circuit board is fastened to the stationary carrier. The motor circuit board includes a first surface and a second surface that are arranged in the third direction. The first drive coil is fastened to the first surface of the motor circuit board, and the second drive coil is fastened to the second surface of the motor circuit board.

In a possible implementation, the stationary carrier is provided with a mounting hole, the mounting hole is in communication with inner space of the stationary carrier, and at least a part of the first drive coil is located in the mounting hole. In this way, the stationary carrier may no longer isolate the first drive coil from the first drive magnetic piece, so that the first drive coil can be disposed close to the first drive magnetic piece as much as possible. In addition, in the Z-axis direction, the first drive coil and the stationary carrier have an overlapping region, so that a dimension in the Z-axis direction can be reduced.

In a possible implementation, the drive coil includes a third drive coil, and the third drive coil faces the first drive magnetic sub-piece, to drive the movable carrier to rotate relative to the stationary carrier.

It can be understood that the third drive coil and the first drive magnetic sub-piece are disposed, to implement rotation compensation around the Z-axis direction. For example, when the movable carrier rotates clockwise relative to the stationary carrier, a direction and a magnitude of a current on the second drive sub-coil of the second drive coil may be controlled, to obtain a compensation driving force for the movable carrier to rotate counterclockwise relative to the stationary carrier, to implement rotation compensation for the movable carrier around the Z-axis direction. In addition, because the third drive coil and the second drive coil may share a same first drive magnetic sub-piece, a structure of the image-stabilization motor is simplified. This facilitates miniaturization of the image-stabilization motor.

It can be understood that the third drive coil and the second drive coil may share the first drive magnetic sub-piece. Therefore, a structure of the image-stabilization motor in this implementation is simple.

In a possible implementation, there are a plurality of third drive coils, and the plurality of third drive coils are located on two sides of the second drive coil in a length direction, or the plurality of third drive coils are located on a same side of the second drive coil in a width direction. In this way, the third drive coils and the second drive coil are arranged more compactly.

In a possible implementation, the drive coil includes a fourth drive coil, and the fourth drive coil and the second drive coil are disposed at a same layer.

The second drive magnetic piece includes a second drive magnetic sub-piece, and the second drive magnetic sub-piece and the first drive magnetic sub-piece are disposed at a same layer. The fourth drive coil faces the second drive magnetic sub-piece, to drive the movable carrier to move relative to the stationary carrier in the first direction.

It can be understood that the fourth drive coil is additionally disposed at a layer at which the second drive coil is located, the second drive magnetic sub-piece is additionally disposed at a layer at which the first drive magnetic sub-piece is located, and the fourth drive coil and the second drive magnetic sub-piece are used to drive the movable carrier to move relative to the stationary carrier in the first direction X. In this case, the fourth drive coil and the second drive magnetic sub-piece may cooperate with the first drive coil and the first drive magnetic piece, to greatly increase a driving force for the movable carrier to move relative to the stationary carrier in the first direction X. This helps increase a stroke of the movable carrier to move relative to the stationary carrier in the first direction X.

In a possible implementation, the movable carrier includes a first bracket and a second bracket.

The first bracket includes a bottom plate, a first bump, and a second bump. The first bump and the second bump are convexly disposed on a same side of the bottom plate. The second bracket is fastened to the first bump and the second bump, and is disposed opposite to the bottom plate at a spacing. At least a part of the stationary carrier is located between the bottom plate and the second bracket. The first drive magnetic piece is fastened to the bottom plate, and the second drive magnetic piece is fastened to the second bracket.

It can be understood that, because the movable carrier may be formed by assembling the first bracket and the second bracket, when the movable carrier is assembled with another mechanical part, the first bracket and the second bracket may be first assembled with the another mechanical part, and then the second bracket is fastened to the first bracket. In this assembly manner, assembly of the another mechanical part and the movable carrier can be simplified.

In a possible implementation, the movable carrier is movably connected to the stationary carrier through a connecting piece.

In a possible implementation, there are three connecting pieces, and the three connecting pieces are distributed at different positions to support the stationary carrier at three points, so that the image-stabilization motor can be stably disposed.

In a possible implementation, the movable carrier is provided with a first groove. The connecting piece is located in the first groove. In this way, the connecting piece is not likely to be detached from the movable carrier.

In a possible implementation, lubricating grease is applied between the connecting piece and the first groove. This can further reduce a friction force between the connecting piece and the stationary carrier, to better implement a connecting piece-based superlubricity system. In addition, the connecting piece is not likely to be detached from the first groove.

In a possible implementation, the stationary carrier is provided with a magnetic-attractive piece, the movable carrier is provided with a magnetic-attractive magnetic piece, and a magnetic attraction force between the magnetic-attractive magnetic piece and the magnetic-attractive piece enables the stationary carrier, the connecting piece, and the movable carrier to remain in contact.

It can be understood that the magnetic-attractive magnetic piece is disposed opposite to the magnetic-attractive piece, and a magnetic attraction force may be produced between the magnetic-attractive magnetic piece and the magnetic-attractive piece. The magnetic attraction force can enable the movable carrier to tend to approach the stationary carrier, so that the stationary carrier, the connecting piece, and the movable carrier remain in contact. In this way, the movable carrier can be stably attached to the stationary carrier in the Z-axis direction, and when the movable carrier moves relative to the stationary carrier, the movable carrier achieves higher stability.

In a possible implementation, the magnetic-attractive piece is a part of the stationary carrier.

In a possible implementation, there are a plurality of connecting pieces, and the plurality of connecting pieces are disposed around the magnetic-attractive magnetic piece. In this way, when the movable carrier moves relative to the stationary carrier, the movable carrier achieves higher stability.

In a possible implementation, the image-stabilization motor further includes a movable circuit board. The movable circuit board includes a first stationary portion, an elastic portion, and a second stationary portion. The elastic portion is connected between the first stationary portion and the second stationary portion. The movable carrier is fastened to the first stationary portion, and the stationary carrier is fastened to the second stationary portion. The image sensor module is fastened to a side, away from the movable carrier, of the first stationary portion.

It can be understood that, when the movable carrier moves relative to the stationary carrier in the first direction X, the elastic portion of the movable circuit board is deformed in the first direction X. The image sensor module and the first stationary portion of the movable circuit board may move along with the movable carrier in the first direction X. When the movable carrier moves relative to the stationary carrier in the second direction Y, the elastic portion of the movable circuit board is deformed in the second direction Y. The image sensor module and the first stationary portion of the movable circuit board may move along with the movable carrier in the second direction Y. Therefore, the movable carrier may control, through the movable circuit board, the image sensor module to move along the plane perpendicular to the third direction Z (that is, the X-Y plane). When the camera module captures ambient light, if the electronic device shakes on the X-Y plane due to an external force, movement of the image sensor module on the X-Y plane may be controlled, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In a possible implementation, the elastic portion is in a spiral shape, a broken-line shape, or a curved shape. This can increase a length of the elastic portion, to greatly reduce an elasticity coefficient of the elastic portion. A movement stroke of the movable circuit board is subject to a small limitation, so that the movable carrier can have a large image-stabilization stroke. In addition, in an elastic portion in a spiral form and with a small K value, dimensions in the X-axis direction and the Y-axis direction can be effectively reduced while a small dimension is kept in the Z-axis direction, to reduce crosstalk (crosstalk) during movement on the X-Y plane, optimize electromagnetic drive performance, and reduce power consumption.

In a possible implementation, a length of the elastic portion is greater than half of a perimeter of an edge of the first stationary portion. This can increase a length of the elastic portion, to greatly reduce an elasticity coefficient of the elastic portion.

In a possible implementation, the elastic portion surrounds at least half of the edge of the first stationary portion, or the elastic portion surrounds the edge of the first stationary portion by a plurality of circles. This can increase a length of the elastic portion, to greatly reduce an elasticity coefficient of the elastic portion.

In a possible implementation, the movable circuit board further includes a reinforcing portion, the reinforcing portion is located on the first stationary portion, and the movable carrier is fastened to the reinforcing portion. It can be understood that the reinforcing portion may be a steel plate or another metal plate. The reinforcing portion can improve overall strength of the first stationary portion.

In a possible implementation, the first bracket further includes a stationary bump. The stationary bump is convexly disposed on the bottom plate, and is located on a side, away from the first bump, of the bottom plate and/or a side, away from the second bump, of the bottom plate. The stationary bump passes through the movable circuit board, and is fastened to the image sensor module. In this way, an assembly tolerance chain between the image sensor module and the first bracket is short, an assembly tolerance between the image sensor module and the first bracket is small, and the image sensor module and the bottom plate of the first bracket may be located on a same plane to a large extent. In addition, when the movable carrier moves on the X-Y plane, the movable carrier may directly drive the image sensor module to move, and a movement status of the image sensor module is slightly affected by the movable circuit board.

In a possible implementation, the drive coil is electrically connected to the second stationary portion of the movable circuit board through the motor circuit board.

It can be understood that, in this implementation, in a solution in which the drive coil is electrically connected to the outside of an image sensor assembly, the motor circuit board may no longer need to be electrically connected to the first stationary portion or the elastic portion of the movable circuit board. In this implementation, a drive chip may be directly electrically connected to the second stationary portion 3 of the movable circuit board. A solution in which the drive chip is electrically connected to the outside of the image sensor assembly is simple, and is more suitable for mass production.

In a possible implementation, the image-stabilization motor includes a drive chip. The drive chip is fastened to the motor circuit board, and is electrically connected to the motor circuit board. An input end and an output end of the drive coil form a current loop through the motor circuit board and the drive chip.

In a possible implementation, the stationary carrier includes a top plate, and a first side plate and a second side plate that are disposed opposite to each other. The top plate is connected between the first side plate and the second side plate.

The top plate and the first side plate are disposed at an obtuse angle, and/or the top plate and the second side plate are disposed at an obtuse angle.

The drive coil is fastened to the top plate.

It can be understood that the top plate and the first side plate are disposed at an obtuse angle, and/or the top plate and the second side plate are disposed at an obtuse angle, so that the stationary carrier is approximately in a "pyramid" shape. In this case, the first drive magnetic piece is disposed on a side of the top plate of the stationary carrier, the drive coil is disposed on the top plate of the stationary carrier, and the second drive magnetic piece is located on a bottom side of the stationary carrier. In this way, in this implementation, the image-stabilization motor is in a "pyramid" stacked architecture, the second drive magnetic piece is disposed at a pyramid tip layer, the first drive coil, the second drive coil, the third drive coil, and the fourth drive coil are disposed at middle layers from top to bottom, and the first drive magnetic piece is disposed at a pyramid bottom layer, to jointly implement a three-axis-decoupled image stabilization function for an image sensor.

According to a third aspect, an image sensor assembly is provided. The image sensor assembly includes an image sensor module and the image-stabilization motor according to the first aspect, and the image sensor module is fastened to a movable carrier. Alternatively, the image sensor assembly includes an image sensor module and the image-stabilization motor according to the second aspect, and the image sensor module is fastened to a movable carrier.

It can be understood that, when the movable carrier moves in a first direction X, the image sensor module may move along with the movable carrier in the first direction X, and when the movable carrier moves relative to a stationary carrier in a second direction Y, the image sensor module may move along with the movable carrier in the second direction Y. Therefore, the movable carrier may control the image sensor module to move along a plane perpendicular to a third direction Z (that is, an X-Y plane). When the image sensor assembly is used in a camera module, if the camera module shakes on the X-Y plane due to an external force, movement of the image sensor module on the X-Y plane may be controlled, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In addition, when the movable carrier is driven to rotate clockwise relative to the stationary carrier, the movable carrier drives the image sensor module to rotate clockwise. In this implementation, a direction and a magnitude of a current on a second drive sub-coil of a second drive coil are controlled, to obtain a compensation driving force for the movable carrier to rotate counterclockwise relative to the stationary carrier, to implement rotation compensation for the movable carrier around a Z-axis direction. In this case, the image sensor module also performs rotation compensation around the Z-axis direction, to counteract a shake stroke produced by rotating around the Z-axis direction by the camera module, to avoid or reduce a position offset of the camera module that is caused by the shake. In this way, optical image stabilization is implemented for the camera module, to improve imaging quality of the camera module.

In a possible implementation, the image sensor module is fastened to a side, away from a first drive coil, of the movable carrier. In this way, the image sensor module is not likely to interfere with the image-stabilization motor.

Alternatively, the image sensor module is fastened to a side, away from a first drive magnetic piece, of the movable carrier. In this way, the image sensor module is not likely to interfere with the image-stabilization motor.

According to a fourth aspect, a camera module is provided. The camera module includes a first optical element and the foregoing image sensor assembly. The image sensor assembly is located on an image side of the first optical element.

It can be understood that, if the camera module shakes on an X-Y plane, an image-stabilization motor may control movement of an image sensor module on the X-Y plane, to counteract a shake stroke produced by the camera module on the X-Y plane, to avoid or reduce a position offset of the camera module that is caused by the shake. In this way, optical image stabilization is implemented for the camera module, to improve imaging quality of the camera module.

In a possible implementation, the camera module further includes a first optical path conversion element. The first optical path conversion element is located between the first optical element and the image sensor assembly. The first optical path conversion element is configured to change an optical-axis direction of the camera module.

In a possible implementation, the first optical path conversion element includes a first side surface, a second side surface, and a third side surface that are connected to each other. After passing through the first optical element, light enters the first optical path conversion element, is totally reflected by the second side surface of the first optical path conversion element and reflected by the third side surface of the first optical path conversion element, and is then propagated to the image sensor assembly.

The image sensor assembly is located on a side on which the third side surface of the first optical path conversion element is located. In this way, the image sensor assembly can effectively use space in which the third side surface of the first optical path conversion element is located. In addition, the image sensor assembly and the first optical path conversion element have an overlapping region in a thickness direction of an electronic device, and a thickness of the electronic device is not likely to increase at a position of the image sensor assembly.

In a possible implementation, the first side surface and the second side surface of the first optical path conversion element are perpendicular to each other, and the third side surface of the first optical path conversion element is an inclined surface.

In a possible implementation, the camera module further includes a second optical conversion element, the second optical conversion element is located on an object side of the first optical element, and the second optical conversion element is configured to change the optical-axis direction of the camera module.

According to a fifth aspect, an electronic device is provided. The electronic device includes a device housing and the foregoing camera module, and the camera module is disposed in the device housing. It can be understood that the camera module of the electronic device in this implementation has an image-stabilization motor with a larger rated stroke.

### BRIEF DESCRIPTION OF DRAWINGS

FIG. 1 is a diagram of a structure of an electronic device according to an embodiment of this application;
FIG. 2 is a partial sectional view of an electronic device shown in FIG. 1 along a line A-A according to an implementation;
FIG. 3 is a diagram of a structure of an image sensor assembly shown in FIG. 2 according to an implementation;
FIG. 4 is a partial schematic exploded view of an image sensor assembly shown in FIG. 3 according to an implementation;
FIG. 5 is a partial schematic exploded view of an image-stabilization motor shown in FIG. 4 according to an implementation;
FIG. 6 is a diagram of a structure of a stationary carrier shown in FIG. 5 from different perspectives;
FIG. 7 is a diagram of a structure of a stationary carrier shown in FIG. 5 from another perspective;
FIG. 8 is a partial schematic exploded view of a stationary carrier shown in FIG. 6 according to an implementation;
FIG. 9 is a first diagram of a partial structure of an image-stabilization motor shown in FIG. 4 according to an implementation;
FIG. 10 is a diagram of a structure of a partial image-stabilization motor shown in FIG. 9 from another perspective;
FIG. 11 is a diagram of a structure of a first bracket shown in FIG. 5 from another perspective;
FIG. 12 is a second diagram of a partial structure of an image-stabilization motor shown in FIG. 4 according to an implementation;
FIG. 13 is a third diagram of a partial structure of an image-stabilization motor shown in FIG. 4 according to an implementation;
FIG. 14 is a fourth diagram of a partial structure of an image-stabilization motor shown in FIG. 4 according to an implementation;
FIG. 15 is a fifth diagram of a partial structure of an image-stabilization motor shown in FIG. 4 according to an implementation;
FIG. 16 is a diagram of a structure of a second bracket shown in FIG. 5 from different perspectives;
FIG. 17 is a diagram of a structure of a second circuit board shown in FIG. 5 from another perspective;
FIG. 18 is a fifth diagram of a partial structure of an image-stabilization motor shown in FIG. 4 according to an implementation;
FIG. 19 is a sixth diagram of a partial structure of an image-stabilization motor shown in FIG. 4 according to an implementation;
FIG. 20 is a seventh diagram of a partial structure of an image-stabilization motor shown in FIG. 4 according to an implementation;
FIG. 21 is a diagram of a structure of a partial image-stabilization motor shown in FIG. 20 from another perspective;
FIG. 22 is an eighth diagram of a partial structure of an image-stabilization motor shown in FIG. 4 according to an implementation;
FIG. 23 is a partial sectional view of an image-stabilization motor shown in FIG. 22 along a line B-B according to an implementation;
FIG. 24 is a partial exploded view of an image-stabilization motor shown in FIG. 5 according to an implementation;
FIG. 25A is a partial sectional view of an image-stabilization motor shown in FIG. 22 according to another implementation;
FIG. 25B is a partial sectional view of an image-stabilization motor shown in FIG. 22 along a line C-C according to an implementation;
FIG. 26 is a diagram of a structure of a movable circuit board shown in FIG. 5 from another perspective;
FIG. 27 is a partial schematic exploded view of a movable circuit board shown in FIG. 5 according to an implementation;
FIG. 28 is a ninth diagram of a partial structure of an image-stabilization motor shown in FIG. 4 according to an implementation;
FIG. 29 is a partial sectional view of an image-stabilization motor shown in FIG. 28 along a line D-D according to an implementation;
FIG. 30 is a tenth diagram of a partial structure of an image-stabilization motor shown in FIG. 4 according to an implementation;
FIG. 31 is a schematic exploded view of an image sensor module shown in FIG. 4 according to an implementation;
FIG. 32 is a diagram of a partial structure of an image sensor module shown in FIG. 4 according to an implementation;
FIG. 33 is a diagram of a structure of a partial image sensor module shown in FIG. 32 from another perspective;
FIG. 34 is a first partial schematic sectional view of an image sensor assembly shown in FIG. 3 along a line E-E according to an implementation;
FIG. 35 is a diagram of a partial structure of an image sensor assembly shown in FIG. 3 according to an implementation;
FIG. 36 is a second partial schematic sectional view of an image sensor assembly shown in FIG. 3 along a line E-E according to an implementation;
FIG. 37 is a diagram of a structure of a first bracket shown in FIG. 5 from another perspective;
FIG. 38 is a partial schematic sectional view of an image sensor assembly shown in FIG. 3 along a line F-F according to an implementation;
FIG. 39 is a third partial schematic sectional view of an image sensor assembly shown in FIG. 3 along a line E-E according to an implementation;
FIG. 40 is a fourth partial schematic sectional view of an image sensor assembly shown in FIG. 3 along a line E-E according to an implementation;
FIG. 41 is a diagram of a structure of an image sensor assembly shown in FIG. 2 according to another implementation;
FIG. 42 is a partial schematic exploded view of an image sensor assembly shown in FIG. 41 according to an implementation;
FIG. 43 is a first diagram of a partial structure of an image-stabilization motor shown in FIG. 41 according to an implementation;
FIG. 44 is a second diagram of a partial structure of an image-stabilization motor shown in FIG. 41 according to an implementation;
FIG. 45 is a third diagram of a partial structure of an image-stabilization motor shown in FIG. 41 according to an implementation;
FIG. 46 is a fourth diagram of a partial structure of an image-stabilization motor shown in FIG. 41 according to an implementation;
FIG. 47 is a fifth diagram of a partial structure of an image-stabilization motor shown in FIG. 41 according to an implementation;
FIG. 48 is a partial schematic exploded view of a drive magnetic piece, a first drive coil, and a second drive coil shown in FIG. 47 according to an implementation;
FIG. 49 is a partial schematic exploded view of an image sensor assembly shown in FIG. 2 according to still another implementation;
FIG. 50 is a diagram of a structure of an image sensor assembly shown in FIG. 2 according to still another implementation;
FIG. 51 is a partial schematic exploded view of an image sensor assembly shown in FIG. 50 according to an implementation;
FIG. 52 is a partial schematic exploded view of an image-stabilization motor shown in FIG. 51 according to an implementation;
FIG. 53 is a diagram of a structure of a stationary carrier shown in FIG. 52 from another perspective;
FIG. 54 is a diagram of a structure of a stationary carrier shown in FIG. 52 from still another perspective;
FIG. 55 is a diagram of a structure of a stationary carrier shown in FIG. 52 from yet another perspective;
FIG. 56 is a diagram of a partial structure of a circuit board assembly shown in FIG. 52 according to an implementation;
FIG. 57 is a first diagram of a partial structure of an image-stabilization motor shown in FIG. 51 according to an implementation;
FIG. 58 is a diagram of a structure of a partial image-stabilization motor shown in FIG. 57 from another perspective;
FIG. 59 is a second diagram of a partial structure of an image-stabilization motor shown in FIG. 51 according to an implementation;
FIG. 60 is a diagram of a structure of a partial image-stabilization motor shown in FIG. 59 from another perspective;
FIG. 61 is a schematic enlarged view of a first bracket shown in FIG. 52 according to an implementation;
FIG. 62 is a third diagram of a partial structure of an image-stabilization motor shown in FIG. 51 according to an implementation;
FIG. 63 is a diagram of a structure of a second bracket shown in FIG. 52 from different perspectives according to an implementation;
FIG. 64 is a fourth diagram of a partial structure of an image-stabilization motor shown in FIG. 51 according to an implementation;
FIG. 65 is a fifth diagram of a partial structure of an image-stabilization motor shown in FIG. 51 according to an implementation;
FIG. 66 is a sixth diagram of a partial structure of an image-stabilization motor shown in FIG. 51 according to an implementation;
FIG. 67 is a partial sectional view of an image-stabilization motor shown in FIG. 66 along a line G-G according to an implementation;
FIG. 68 is a partial sectional view of an image-stabilization motor shown in FIG. 66 along a line H-H according to an implementation;
FIG. 69 is a partial exploded view of an image-stabilization motor shown in FIG. 51 according to an implementation;
FIG. 70 is a partial sectional view of an image-stabilization motor shown in FIG. 66 along a line I-I according to an implementation;
FIG. 71 is a schematic enlarged view of a movable circuit board shown in FIG. 52 according to an implementation;
FIG. 72 is a seventh diagram of a partial structure of an image-stabilization motor shown in FIG. 51 according to an implementation;
FIG. 73 is a diagram of a partial structure of an image sensor assembly shown in FIG. 50 according to an implementation;
FIG. 74 is a partial sectional view of an image sensor assembly shown in FIG. 73 along a line J-J according to an implementation;
FIG. 75 is a partial sectional view of an image sensor assembly shown in FIG. 50 along a line K-K according to an implementation; and
FIG. 76 is a diagram of an arrangement of a second drive coil and a third drive coil shown in FIG. 52 according to another implementation.

### DESCRIPTION OF EMBODIMENTS

The following clearly and completely describes the technical solutions in embodiments of this application with reference to the accompanying drawings in embodiments of this application.

Object-side surface: A lens is used as a boundary. A side on which a photographed object is located is an object side, and a surface, close to the object side, of the lens is referred to as the object-side surface.

Image-side surface: A lens is used as a boundary. A side on which an image of a photographed object is located is an image side, and a surface, close to the image side, of the lens is referred to as the image-side surface.

An optical axis is an axis that vertically runs through a center of a lens. An optical axis of a camera lens is an axis that passes through centers of all lenses of the camera lens. When light parallel to the optical axis enters a convex lens, in an ideal convex lens, all light should converge at a point behind the lens. The point at which all the light converges is a focal point.

Sensor shift optical image stabilizer (SOIS, Sensor shift optical image stabilizer).

Spring plate and signal line integrated component (TSA, Trace suspension assembly).

Moving tilt: dynamic tilting (tilting around an X axis or a Y axis) of a moving platform that indicates motion stability of the SOIS.

Shift Z: displacement fluctuation of a moving platform in a Z direction (optical-axis direction) that indicates motion stability of the SOIS.

In the descriptions of this application, it should be noted that, unless otherwise specified and limited, the terms "mounting", "connect", "connecting", and "connection" should be understood in a broad sense. For example, the "connection" may be a detachable connection or a non-detachable connection, or may be a direct connection or an indirect connection through an intermediate medium, or may be an electrical connection or a mechanical connection. "Fastened" means that two parts are connected to each other and a relative positional relationship remains unchanged after the two parts are connected to each other. "Movably connected" means that two parts are connected to each other and can move relative to each other after being connected to each other, and a positional relationship may change. "Rotatably connected" means that two parts are connected to each other and can rotate relative to each other after being connected to each other. "Slidably connected" means that two parts are connected to each other and can slide relative to each other after being connected to each other. In addition, obtaining an integrated structure of two components through an integral forming process means that, in a process of forming one of the two components, the component is connected to the other component, and the two components do not need to be connected through reprocessing (for example, bonding, welding, clamping, or screwing). That a part A and a part B are disposed opposite to each other may be as follows: The part A is projected in a target direction to obtain a projection C, the part B is projected in a target direction to obtain a projection D, and the projection C and the projection D may at least largely overlap. In some embodiments, largely overlapping may be any one of the following cases: The projection C is completely located in the projection D; or the projection D is completely located in the projection C; or the projection C and the projection D cross each other, and a proportion of a cross region of the projection C and the projection D to the projection C or the projection D is greater than 50%.

Orientation terms mentioned in embodiments of this application, for example, "top", "bottom", "inner", "outer", "above", and "below", merely indicate directions with reference to the accompanying drawings. Therefore, the orientation terms are intended for better and more clearly describing and understanding embodiments of this application, but not to indicate or imply that a specified apparatus or element needs to have a specific orientation or be constructed and operated in a specific orientation, and therefore cannot be construed as a limitation on embodiments of this application. A person of ordinary skill in the art may understand specific meanings of the foregoing terms based on specific cases.

In this specification and the claims of this application, the terms "first", "second", and the like are intended to distinguish between similar objects but do not indicate a specific order or sequence. It should be understood that data used in this way is interchangeable in proper circumstances, so that embodiments of this application can be implemented in an order other than the order illustrated or described herein. In addition, objects distinguished by "first", "second", and the like are usually of one type, and a quantity of objects is not limited. For example, there may be one or more first objects. In addition, in this specification and the claims, "and/or" indicates at least one of connected objects, and the character "/" usually indicates an "or" relationship between associated objects. "A plurality of" means at least two.

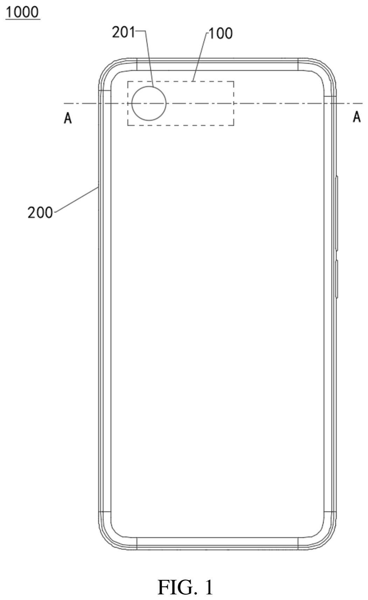

FIG. 1 is a diagram of a structure of an electronic device 1000 according to an embodiment of this application.

As shown in FIG. 1, the electronic device 1000 may be a device with a camera function, for example, a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, an example in which the electronic device 1000 is a mobile phone is used for description.

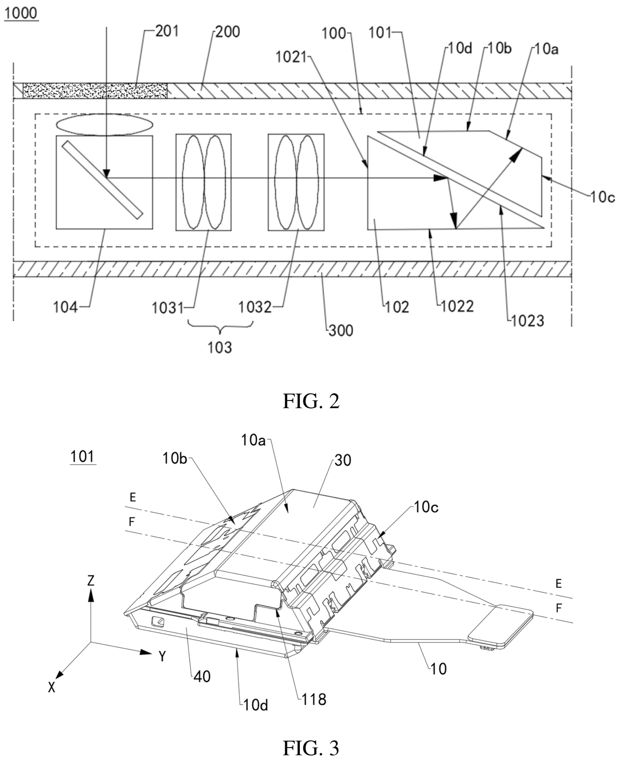

FIG. 2 is a partial sectional view of the electronic device 1000 shown in FIG. 1 along a line A-A according to an implementation.

As shown in FIG. 1 and FIG. 2, the electronic device 1000 may include a camera module 100, a device housing 200, and a screen 300. The camera module 100 may be a rear-facing camera module or a front-facing camera module. In FIG. 2, the camera module 100 is indicated by a dashed-line box. It can be understood that FIG. 1 and related accompanying drawings in the following descriptions merely show some components included in the electronic device 1000 as an example. Actual shapes, actual sizes, actual positions, and actual structures of the components are not limited by FIG. 1 or the accompanying drawings in the following descriptions. In addition, when the electronic device 1000 is a device in another form, the electronic device 1000 may alternatively not include the screen 300.

As shown in FIG. 1 and FIG. 2, in some embodiments, the screen 300 is mounted to the device housing 200, and encloses the inside of the electronic device 1000 together with the device housing 200. The inside of the electronic device 1000 may be used for placing a component, for example, a battery, a receiver, or a microphone, of the electronic device 1000. The screen 300 may be a flat screen or a curved screen.

For example, the camera module 100 may be located in the electronic device 1000. The device housing 200 has a light transmission portion 201. A shape of the light transmission portion 201 is not limited to a circular shape shown in FIG. 1, and may alternatively be an elliptic shape or an irregular shape. Light outside the electronic device 1000 may enter the electronic device 1000 through the light transmission portion 201. The camera module 100 may capture light that enters the electronic device 1000.

As shown in FIG. 2, the camera module 100 includes an image sensor assembly 101, a first optical path conversion element 102, and a first optical element 103 that are sequentially arranged from an image side to an object side. It can be understood that the first optical path conversion element 102 may be configured to change an optical-axis direction of the camera module 100. The image sensor assembly 101 may be configured to convert image information carried in ambient light into an electrical signal.

It can be understood that the first optical element 103, the first optical path conversion element 102, and the image sensor assembly 101 may form an integrated camera module 100. In this way, compared with a camera module 100 in which a first optical element 103, a first optical path conversion element 102, and an image sensor assembly 101 are separately disposed, the camera module 100 in this embodiment has a smaller size. This facilitates miniaturization of the camera module 100, and helps save internal space of the electronic device 1000.

For example, the first optical element 103 may include one or more lens groups. When the first optical element 103 includes a plurality of lens groups, at least one lens group may move in the optical-axis direction. For example, as shown in FIG. 2, the first optical element 103 includes a first lens group 1031 and a second lens group 1032. The first lens group 1031 may move in the optical-axis direction. The second lens group 1032 may be a lens group at a fixed position.

As shown in FIG. 2, for example, the first optical path conversion element 102 may include a prism. The first optical path conversion element 102 includes a first side surface 1021, a second side surface 1022, and a third side surface 1023 that are connected to each other. The first side surface 1021 of the first optical path conversion element 102 may face the first optical element 103. It can be understood that, after at least a part of light enters the first optical element 103 and passes through the first optical element 103, the light enters the first optical path conversion element 102 through the first side surface 1021 of the first optical path conversion element 102, is totally reflected by the third side surface 1023 of the first optical path conversion element 102 and reflected by the second side surface 1022, and is then propagated to the image sensor assembly 101.

For example, the second side surface 1022 of the first optical path conversion element 102 may face the screen 300. The image sensor assembly 101 is located on a side on which the third side surface 1023 of the first optical path conversion element 102 is located. In this way, the image sensor assembly 101 can effectively use space in which the third side surface 1023 of the first optical path conversion element 102 is located. In addition, the image sensor assembly 101 and the first optical path conversion element 102 have an overlapping region in a thickness direction of the electronic device 1000, and a thickness of the electronic device 1000 is not likely to increase at a position of the image sensor assembly 101.

In an implementation, the first side surface 1021 and the second side surface 1022 of the first optical path conversion element 102 are perpendicular to each other, and the third side surface 1023 of the first optical path conversion element 102 is an inclined surface.

FIG. 3 is a diagram of a structure of the image sensor assembly 101 shown in FIG. 2 according to an implementation.

Refer to FIG. 3, together with FIG. 2. The image sensor assembly 101 includes a top surface 10a and a bottom surface 10d that are arranged facing away from each other, and a first side surface 10b and a second side surface 10c that are arranged facing away from each other. The top surface 10a and the bottom surface 10d of the image sensor assembly 101 are connected between the first side surface 10b and the second side surface 10c of the image sensor assembly 101. The bottom surface 10d of the image sensor assembly 101 is arranged opposite to the third side surface 1023 of the first optical path conversion element 102.

It can be understood that, in an implementation, the image sensor assembly 101 does not include the top surface 10a. In this case, the first side surface 10b and the second side surface 10c of the image sensor assembly 101 are directly connected to each other and are perpendicular to each other. In this case, the image sensor assembly 101 has a large size. This is not conducive to miniaturization. However, in this implementation, the top surface 10a is formed on the image sensor assembly 101, so that space on a side on which the top surface 10a of the image sensor assembly 101 is located is not occupied by the image sensor assembly 101. In this case, the image sensor assembly 101 has a small size. This facilitates miniaturization.

For example, the first side surface 10b and the bottom surface 10d of the image sensor assembly 101 are arranged at an acute angle. It can be understood that, in an implementation, if a length of the bottom surface 10d of the image sensor assembly 101 remains unchanged and the first side surface 10b of the image sensor assembly 101 is perpendicular to the bottom surface 10d of the image sensor assembly 101, a height of the camera module 100 is likely to increase at the first side surface 10b of the image sensor assembly 101 (to be specific, the first side surface 10b of the image sensor assembly 101 extends out of the dashed-line box in FIG. 2). However, in this implementation, the first side surface 10b and the bottom surface 10d of the image sensor assembly 101 are arranged at an acute angle, to prevent the first side surface 10b of the image sensor assembly 101 from causing a large increase in the height of the camera module 100.

For example, the second side surface 10c and the bottom surface 10d of the image sensor assembly 101 are arranged at an acute angle. It can be understood that, in an implementation, if the length of the bottom surface 10d of the image sensor assembly 101 remains unchanged and the second side surface 10c of the image sensor assembly 101 is perpendicular to the bottom surface 10d of the image sensor assembly 101, a length of the camera module 100 is likely to increase at the second side surface 10c of the image sensor assembly 101 (to be specific, the second side surface 10c of the image sensor assembly 101 extends out of the dashed-line box in FIG. 2). However, in this implementation, the second side surface 10c and the bottom surface 10d of the image sensor assembly 101 are arranged at an acute angle, to prevent the second side surface 10c of the image sensor assembly 101 from causing a large increase in the height of the camera module 100.

For example, an included angle between the first side surface 10b and the bottom surface 10d of the image sensor assembly 101 is less than an included angle between the second side surface 10c and the bottom surface 10d of the image sensor assembly 101.

For example, the first side surface 10b and the top surface 10a of the image sensor assembly 101 are arranged at an obtuse angle; and/or the second side surface 10c and the top surface 10a of the image sensor assembly 101 are arranged at an obtuse angle. In this way, the image sensor assembly 101 can use, to a large extent, the space in which the third side surface 1023 of the first optical path conversion element 102 is located.

For example, the first side surface 10b of the image sensor assembly 101 is arranged parallel to the second side surface 1022 of the first optical path conversion element 102.

For example, the second side surface 10c of the image sensor assembly 101 is arranged parallel to the first side surface 1021 of the first optical path conversion element 102.

For example, a shape of the image sensor assembly 101 may be similar to a "pyramid" shape.

As shown in FIG. 2, the camera module 100 further includes a second optical path conversion element 104. The second optical path conversion element 104 is located on an object side of the first optical element 103. The second optical path conversion element 104 may also be configured to change the optical-axis direction of the camera module 100.

For example, the second optical path conversion element 104 may include a prism. A light entrance side of the second optical path conversion element 104 is arranged opposite to the light transmission portion 201. In this case, light passing through the light transmission portion 201 may enter the second optical path conversion element 104, is reflected by the second optical path conversion element 104, and is then propagated to the first optical element 103. After passing through the first optical element 103, the light enters the first optical path conversion element 102, is totally reflected by the third side surface 1023 of the first optical path conversion element 102 and reflected by the second side surface 1022, and is then propagated to the image sensor assembly 101.

In another implementation, the camera module 100 may alternatively not include the second optical path conversion element 104. A light entrance side of the first optical element 103 is arranged opposite to the light transmission portion 201. In this case, light passing through the light transmission portion 201 may directly enter the first optical element 103.

In another implementation, the second optical path conversion element 104 may further include an image-stabilization motor. The image-stabilization motor is configured to drive the prism of the second optical path conversion element 104 to move, to implement optical image stabilization for the camera module 100.

It can be understood that the foregoing merely provides an example implementation of using the image sensor assembly 101 in the camera module 100. In another implementation, the image sensor assembly 101 may alternatively be used a camera module 100 of another structure. This is not specifically limited in this application.

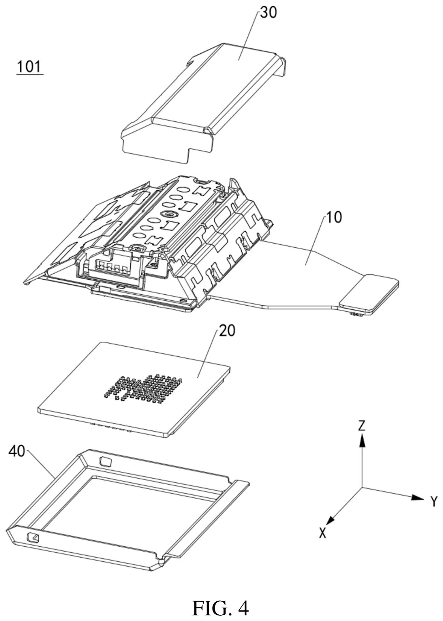

FIG. 4 is a partial schematic exploded view of the image sensor assembly 101 shown in FIG. 3 according to an implementation.

As shown in FIG. 3 and FIG. 4, the image sensor assembly 101 includes an image-stabilization motor 10, an image sensor module 20, an upper housing 30, and a lower housing 40. For ease of description, a width direction of the image sensor assembly 101 is defined as an X axis, a length direction of the image sensor assembly 101 is a Y axis, and a thickness direction of the image sensor assembly 101 is a Z axis. It can be understood that a coordinate system of the image sensor assembly 101 may be flexibly set according to a specific actual requirement.

It can be understood that the image-stabilization motor 10 may control the image sensor module 20 to move along a plane perpendicular to a third direction Z (that is, an X-Y plane). When the camera module 100 captures ambient light, if the electronic device 1000 shakes on the X-Y plane due to an external force, the image-stabilization motor 10 may control movement of the image sensor module 20 on the X-Y plane, to counteract a shake stroke produced by the camera module 100 on the X-Y plane, to avoid or reduce a position offset of the camera module 100 that is caused by the shake. According to the camera module 100 in this application, movement of the image sensor module 20 on the X-Y plane may be controlled by the image-stabilization motor 10, to implement optical image stabilization (optical image stabilization, OIS) for the camera module 100, and improve imaging quality of the camera module 100.

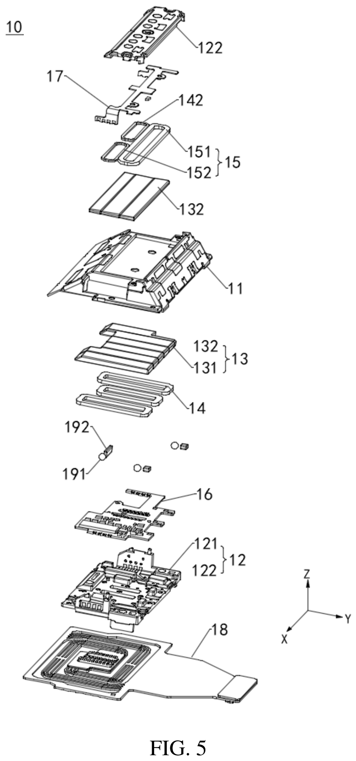

FIG. 5 is a partial schematic exploded view of the image-stabilization motor 10 shown in FIG. 4 according to an implementation.

As shown in FIG. 5, the image-stabilization motor 10 includes a stationary carrier 11, a movable carrier 12 (also referred to as a moving carrier), a drive magnetic piece 13, a first drive coil 14, and a second drive coil 15.

For example, the movable carrier 12 includes a first bracket 121 and a second bracket 122.

For example, the drive magnetic piece 13 includes a first drive magnetic piece 131 and a second drive magnetic piece 132.

For example, the second drive coil 15 includes a first drive sub-coil 151 and a second drive sub-coil 152.

It can be understood that the image-stabilization motor 10 may alternatively include more structures or fewer structures. For example, when the image-stabilization motor 10 includes more structures, the image-stabilization motor 10 may further include a first circuit board 16, a second circuit board 17, a movable circuit board 18 (also referred to as a TSA, or a flexible circuit board), a rolling piece 191, and a magnetic-attractive magnetic piece 192. For example, the rolling piece 191 may be a single ball, or may be a ball group including a plurality of balls, or may be a sliding shaft, or may be a protrusion structure.

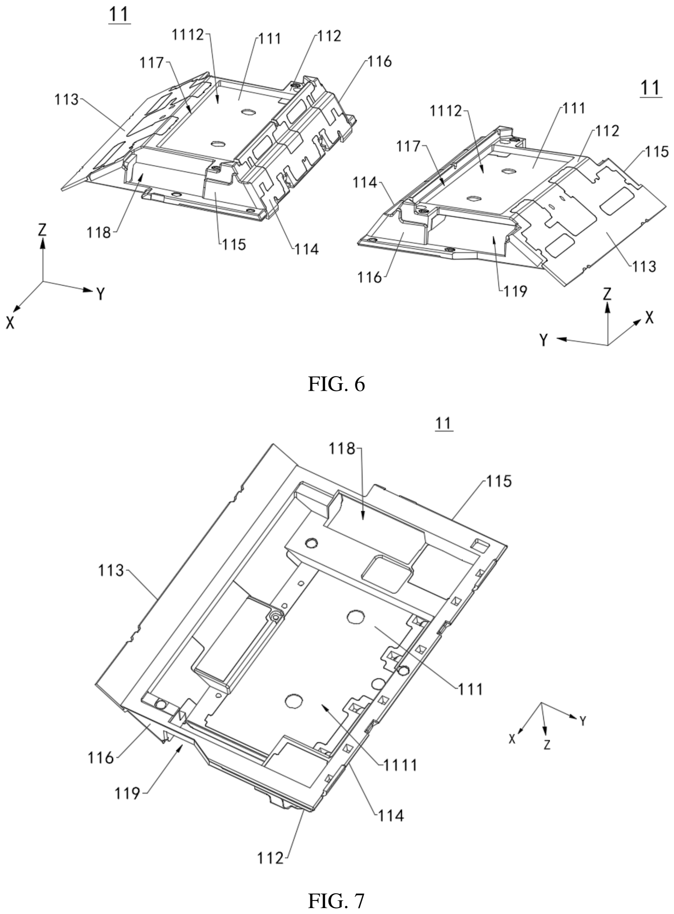

FIG. 6 is a diagram of a structure of the stationary carrier 11 shown in FIG. 5 from different perspectives. FIG. 7 is a diagram of a structure of the stationary carrier 11 shown in FIG. 5 from another perspective.

As shown in FIG. 6 and FIG. 7, the stationary carrier 11 includes a top plate 112, a first side plate 113 and a second side plate 114 that are disposed opposite to each other, and a third side plate 115 and a fourth side plate 116 that are disposed opposite to each other. The top plate 112 is connected between the first side plate 113 and the second side plate 114, and is further connected between the third side plate 115 and the fourth side plate 116. The third side plate 115 and the fourth side plate 116 are connected between the first side plate 113 and the second side plate 114. The top plate 112, the first side plate 113, the second side plate 114, the third side plate 115, and the fourth side plate 116 enclose inner space of the stationary carrier 11.

For example, the top plate 112 and the first side plate 113 are disposed at an obtuse angle; and/or the top plate 112 and the second side plate 114 are disposed at an obtuse angle.

For example, the stationary carrier 11 is provided with an accommodation slot 117. An opening of the accommodation slot 117 is formed on the top plate 112.

For example, the stationary carrier 11 is provided with a first through hole 118 and a second through hole 119 that are arranged at a spacing. The first through hole 118 and the second through hole 119 enables communication between the inner space of the stationary carrier 11 and outer space. In an implementation, the first through hole 118 is formed on the first side plate 113. The second through hole 119 is formed on the second side plate 114.

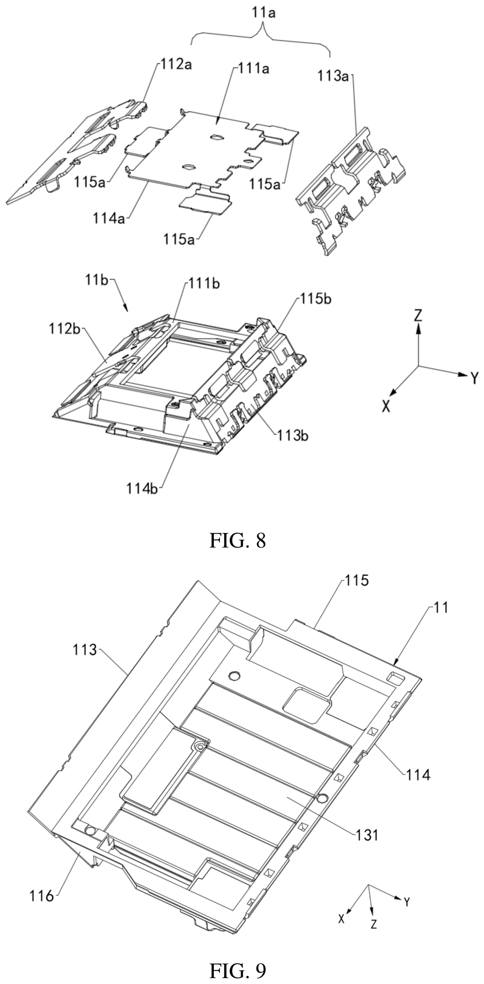

FIG. 8 is a partial schematic exploded view of the stationary carrier 11 shown in FIG. 6 according to an implementation.

As shown in FIG. 8, the stationary carrier 11 includes a metal piece 11a and an insulation piece 11b. The metal piece 11a may be embedded in the insulation piece 11b. For example, the metal piece 11a and the insulation piece 11b may form an integrated mechanical part through in-mold insert-molding (insert-molding). In this way, overall strength of the stationary carrier 11 is high.

For example, the insulation piece 11b includes a first insulation portion 111b, a second insulation portion 112b and a third insulation portion 113b that are disposed opposite to each other, and a fourth insulation portion 114b and a fifth insulation portion 115b that are disposed opposite to each other. The first insulation portion 111b is connected between the second insulation portion 112b and the third insulation portion 113b, and is connected between the fourth insulation portion 114b and the fifth insulation portion 115b. The fourth insulation portion 114b and the fifth insulation portion 115b are connected between the second insulation portion 112b and the third insulation portion 113b.

As shown in FIG. 8, the metal piece 11a includes a first metal piece 111a, a second metal piece 112a, and a third metal piece 113a. For example, the first metal piece 111a may be embedded in the first insulation portion 111b. The second metal piece 112a may be embedded in the second insulation portion 112b. The third metal piece 113a may be embedded in the third insulation portion 113b.

Refer to FIG. 8, together with FIG. 6 and FIG. 7. The first metal piece 111a and the first insulation portion 111b may be formed as the top plate 112 of the stationary carrier 11. The second metal piece 112a and the second insulation portion 112b may be formed as the first side plate 113 of the stationary carrier 11. The third metal piece 113a and the third insulation portion 113b may be formed as the second side plate 114 of the stationary carrier 11. The fourth insulation portion 114b may be formed as the third side plate 115 of the stationary carrier 11. The fifth insulation portion 115b may be formed as the fourth side plate 116 of the stationary carrier 11. The first through hole 118 and the second through hole 119 may be formed on the fourth insulation portion 114b and the fifth insulation portion 115b respectively. A part of the first metal piece 111a and the first insulation portion 111b enclose the accommodation slot 117.

As shown in FIG. 8, the first metal piece 111a includes a body portion 114a and a plurality of extension portions 115a. The plurality of extension portions 115a are connected to edges of the body portion 114a at spacings. For example, the plurality of extension portions 115a may be bent relative to the body portion 114a.

As shown in FIG. 6 to FIG. 8, at least a part of the body portion 114a of the first metal piece 111a forms a magnetic isolation sheet 111. The magnetic isolation sheet 111 may be exposed relative to the first insulation portion 111b. The magnetic isolation sheet 111 includes a first surface 1111 and a second surface 1112 that are arranged facing away from each other. The first surface 1111 of the magnetic isolation sheet 111 is a surface, facing an inner side of the stationary carrier 11, of the top plate 112. The second surface 1112 of the magnetic isolation sheet 111 is a surface, facing away from an outer side of the stationary carrier 11, of the top plate 112. In another implementation, the magnetic isolation sheet 111 may alternatively be embedded in the first insulation portion 111b.

For example, the plurality of extension portions 115a of the first metal piece 111a may be exposed relative to the first insulation portion 111b.

It can be understood that the foregoing merely describes an example structure of the stationary carrier 11. In another implementation, a structure of the stationary carrier 11 is not specifically limited.

FIG. 9 is a first diagram of a partial structure of the image-stabilization motor 10 shown in FIG. 4 according to an implementation.

Refer to FIG. 9, together with FIG. 7. The first drive magnetic piece 131 of the drive magnetic piece 13 is fastened to the first surface 1111 of the magnetic isolation sheet 111. To be specific, the first drive magnetic piece 131 is located in the inner space of the stationary carrier 11.

For example, the first drive magnetic piece 131 may include a plurality of magnets, and the plurality of magnets are arranged in a first direction X. The first drive magnetic piece 131 may be implemented in a plurality of structures. For example, the first drive magnetic piece 131 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. It can be understood that FIG. 9 merely shows six magnets as an example. For another example, the first drive magnetic piece 131 may be a Halbach magnet array. For another example, the first drive magnetic piece 131 may be of a dual-magnet structure. For example, the first drive magnetic piece 131 includes two magnets, and polarity directions of the two magnets are opposite. It can be understood that, when the first drive magnetic piece 131 is arranged in a form of a plurality of Halbach magnet combination arrays, distribution of magnetic induction lines is further compressed, to effectively increase a magnetic thrust, and improve utilization of the magnetic induction lines.

For example, the first drive magnetic piece 131 may include one magnet. In other words, the first drive magnetic piece 131 may be of a single-magnet structure. For example, the first drive magnetic piece 131 includes one magnet. The magnet includes two parts with opposite polarity directions, and the two parts may be arranged in the first direction X. The magnet may be made by using a bipolar magnetization technique. In addition, two parts with opposite polarity directions may form a magnet unit. One magnet may include a plurality of magnet units. A plurality of magnet units are arranged in the first direction X.

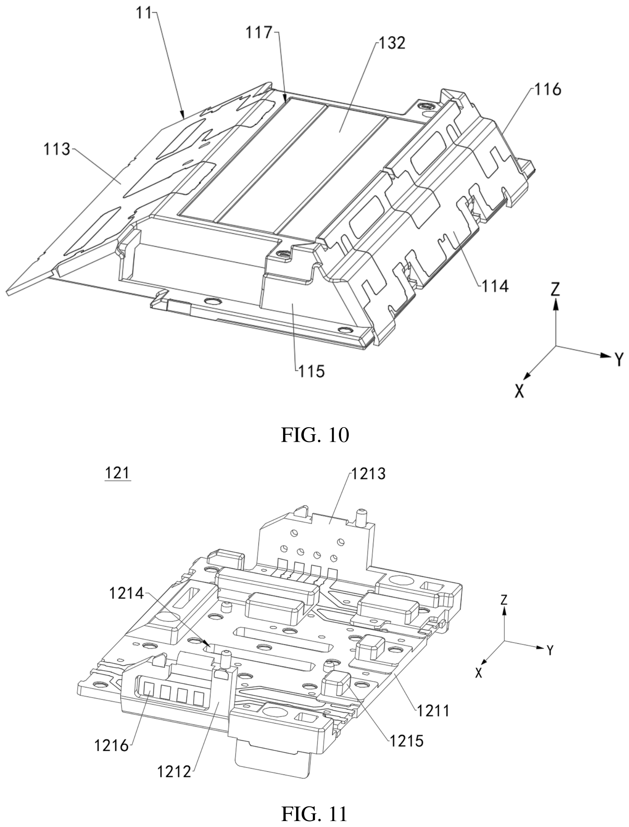

FIG. 10 is a diagram of a structure of the partial image-stabilization motor 10 shown in FIG. 9 from another perspective.

Refer to FIG. 10, together with FIG. 6. The second drive magnetic piece 132 of the drive magnetic piece 13 is fastened to the second surface 1112 of the magnetic isolation sheet 111. In an implementation, the second drive magnetic piece 132 is located in the accommodation slot 117 of the stationary carrier 11.

It can be understood that, in this implementation, the first drive magnetic piece 131 is fastened to the first surface 1111 of the magnetic isolation sheet 111, and the second drive magnetic piece 132 is fastened to the second surface 1112 of the magnetic isolation sheet 111, so that the drive magnetic piece 13 is fastened to the stationary carrier 11. In addition, the first drive magnetic piece 131 and the second drive magnetic piece 132 may be separately fastened to different positions on the stationary carrier 11, and the magnetic isolation sheet 111 may isolate the first drive magnetic piece 131 from the second drive magnetic piece 132.

For example, the second drive magnetic piece 132 may include a plurality of magnets, and the plurality of magnets are arranged in a second direction Y. The second drive magnetic piece 132 may be implemented in a plurality of structures. For example, the second drive magnetic piece 132 may include at least three magnets. In two adjacent magnets, polarity directions of the two magnets are opposite. It can be understood that FIG. 10 merely shows three magnets as an example. For another example, the second drive magnetic piece 132 may be of a dual-magnet structure. For example, the second drive magnetic piece 132 includes two magnets, and polarity directions of the two magnets are opposite. For another example, the second drive magnetic piece 132 may be a Halbach magnet array. For another example, the second drive magnetic piece 132 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. It can be understood that, when the second drive magnetic piece 132 is arranged in a form of a plurality of Halbach magnet combination arrays, distribution of magnetic induction lines is further compressed, to effectively increase a magnetic thrust, and improve utilization of the magnetic induction lines.

For example, the second drive magnetic piece 132 may include one magnet. In other words, the second drive magnetic piece 132 may be of a single-magnet structure. For example, the second drive magnetic piece 132 includes one magnet. The magnet includes two parts with opposite polarity directions, and the two parts may be arranged in the second direction Y. The magnet may be made by using a bipolar magnetization technique. In addition, two parts with opposite polarity directions may form a magnet unit. One magnet may include a plurality of magnet units. A plurality of magnet units are arranged in the second direction Y.

FIG. 11 is a diagram of a structure of the first bracket 121 shown in FIG. 5 from another perspective.

As shown in FIG. 11, the first bracket 121 includes a bottom plate 1211, a first bump 1212, and a second bump 1213. The first bump 1212 and the second bump 1213 are convexly disposed on a same side of the bottom plate 1211.

For example, the bottom plate 1211 is provided with a first avoidance hole 1214. The first avoidance hole 1214 may be located between the first bump 1212 and the second bump 1213. There may be two first avoidance holes 1214. The first avoidance hole 1214 may be in a long strip shape. In another implementation, a position, a size, a quantity, and a shape of the first avoidance hole 1214 are not specifically limited.

For example, the first bracket 121 has a plurality of first position-limiting protrusions 1215. The plurality of first position-limiting protrusions 1215 may perform position limiting for another mechanical part. A position, a size, a quantity, and a shape of the first position-limiting protrusion 1215 are not specifically limited. In addition, the first position-limiting protrusion 1215 may alternatively be replaced with a groove structure.

For example, the first bracket 121 has a plurality of first pin ends 1216. The plurality of first pin ends 1216 may be configured to be electrically connected to another mechanical part.

It can be understood that FIG. 11 merely shows reference numerals of some first position-limiting protrusions 1215 and first pin ends 1216 as an example.

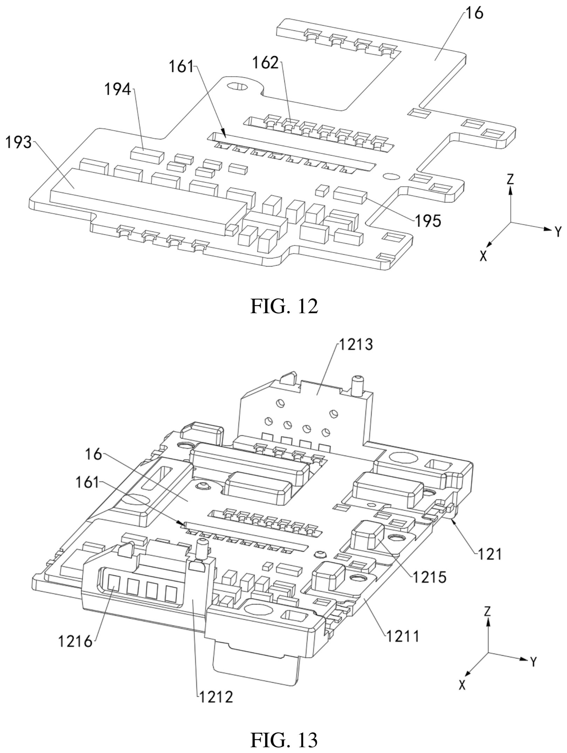

FIG. 12 is a second diagram of a partial structure of the image-stabilization motor 10 shown in FIG. 4 according to an implementation.

As shown in FIG. 12, the image-stabilization motor 10 includes an image-stabilization drive chip 193. The image-stabilization drive chip 193 is fastened to the first circuit board 16, and is electrically connected to the first circuit board 16.

For example, the image-stabilization motor 10 includes a first position sensor 194 and a second position sensor 195. Both the first position sensor 194 and the second position sensor 195 are fastened to the first circuit board 16, and are electrically connected to the first circuit board 16. In this case, the first position sensor 194 and the second position sensor 195 are fastened to the first bracket 121 of the movable carrier 12 through the first circuit board 16.

For example, the first circuit board 16 is provided with a second avoidance hole 161. There may be two second avoidance holes 161. The second avoidance hole 161 may be in a long strip shape. In another implementation, a position, a size, a quantity, and a shape of the second avoidance hole 161 are not specifically limited.

For example, the first circuit board 16 has a plurality of second pin ends 162. The plurality of second pin ends 162 may be configured to be electrically connected to another mechanical part.

FIG. 13 is a third diagram of a partial structure of the image-stabilization motor 10 shown in FIG. 4 according to an implementation.

Refer to FIG. 13, together with FIG. 11 and FIG. 12. The first circuit board 16 is fastened to the movable carrier 12. For example, the first circuit board 16 is fastened to the bottom plate 1211 of the first bracket 121. At least a part of the first circuit board 16 may be located between the first bump 1212 and the second bump 1213.

For example, the second avoidance hole 161 on the first circuit board 16 is arranged opposite to the first avoidance hole 1214 on the first bracket 121.

For example, the plurality of first position-limiting protrusions 1215 of the first bracket 121 may cooperate with each other to abut against the first circuit board 16, to perform position limiting for the first circuit board 16. In this case, a connection between the first circuit board 16 and the first bracket 121 is more stable. For example, there are two first position-limiting protrusions 1215. The two first position-limiting protrusions 1215 are arranged in the first direction X, and abut against the first circuit board 16 in the first direction X.

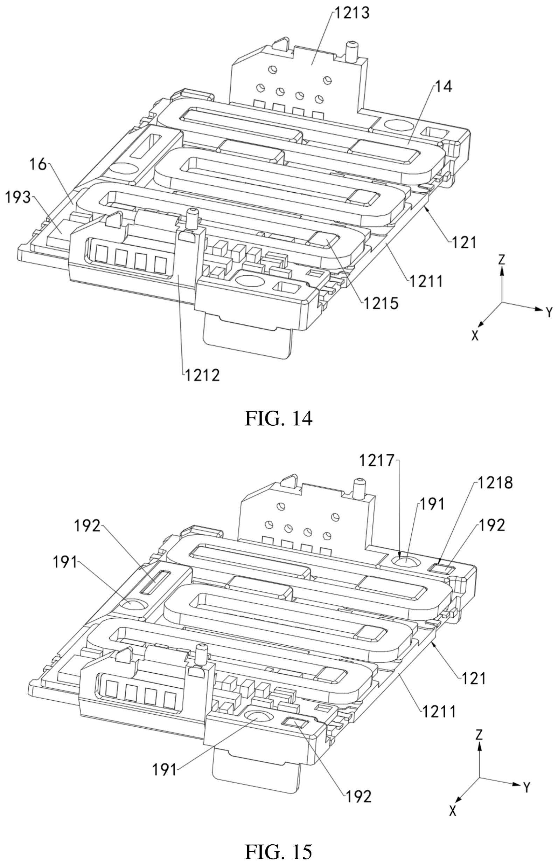

FIG. 14 is a fourth diagram of a partial structure of the image-stabilization motor 10 shown in FIG. 4 according to an implementation.

As shown in FIG. 14, the first drive coil 14 is fastened to the first circuit board 16, and is electrically connected to the first circuit board 16. The first drive coil 14 is fastened to the bottom plate 1211 of the first bracket 121 through the first circuit board 16.

For example, an input end and an output end of the first drive coil 14 form a current loop through the first circuit board 16 and the image-stabilization drive chip 193.

For example, the plurality of first position-limiting protrusions 1215 of the first bracket 121 may cooperate with each other to abut against the first drive coil 14, to perform position limiting for the first drive coil 14. In this case, a connection between the first drive coil 14 and the first circuit board 16 is more stable. For example, the first position-limiting protrusion 1215 of the first bracket 121 is located on an inner side of the first drive coil 14, and abuts against the first drive coil 14 in the first direction X.

FIG. 15 is a fifth diagram of a partial structure of the image-stabilization motor 10 shown in FIG. 4 according to an implementation.

As shown in FIG. 15, the bottom plate 1211 of the first bracket 121 is provided with a rolling piece slot 1217. The rolling piece 191 is located in the rolling piece slot 1217. In other words, the rolling piece 191 is disposed on the movable carrier 12. For example, there are three rolling pieces 191 and three rolling piece slots 1217. The three rolling pieces 191 are disposed in the three rolling piece slots 1217 in a one-to-one correspondence.

For example, lubricating grease is applied between the rolling piece 191 and the rolling piece slot 1217.

As shown in FIG. 15, the bottom plate 1211 of the first bracket 121 is provided with an accommodation slot 1218. The accommodation slot 1218 and the rolling piece slot 1217 are arranged at a spacing. The image-stabilization motor 10 includes a magnetic-attractive magnetic piece 192. The magnetic-attractive magnetic piece 192 is located in the accommodation slot 1218. In other words, the magnetic-attractive magnetic piece 192 is disposed on the movable carrier 12. For example, there are three magnetic-attractive magnetic pieces 192 and three accommodation slots 1218. The three magnetic-attractive magnetic pieces 192 are disposed in the three accommodation slots 1218 in a one-to-one correspondence.

For example, the three magnetic-attractive magnetic pieces 192 are disposed around the three rolling pieces 191 in a one-to-one correspondence.

It can be understood that both the rolling piece 191 and the magnetic-attractive magnetic piece 192 are disposed on the first bracket 121, in other words, both the rolling piece 191 and the magnetic-attractive magnetic piece 192 are disposed on a same mechanical part. In this way, when the first bracket 121 performs relative movement, relative positions of the rolling piece 191 and the magnetic-attractive magnetic piece 192 are not likely to change greatly.

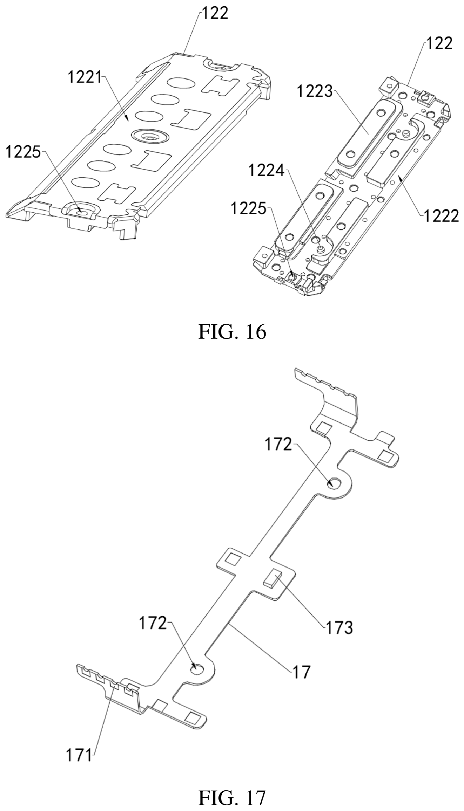

FIG. 16 is a diagram of a structure of the second bracket 122 shown in FIG. 5 from different perspectives.

As shown in FIG. 16, the second bracket 122 includes a top surface 1221 and a bottom surface 1222 that are arranged facing away from each other.

For example, a plurality of second position-limiting protrusions 1223 are convexly disposed on the bottom surface 1222 of the second bracket 122. The plurality of second position-limiting protrusions 1223 may perform position limiting for another mechanical part. A position, a size, a quantity, and a shape of the second position-limiting protrusion 1223 are not specifically limited.

For example, a position-limiting post 1224 is convexly disposed on the bottom surface 1222 of the second bracket 122. The position-limiting post 1224 may perform position limiting for another mechanical part. A position, a size, a quantity, and a shape of the position-limiting post 1224 are not specifically limited.

For example, the second bracket 122 is provided with a fastening hole 1225. There may be one or more fastening holes 1225. A position, a size, a quantity, and a shape of the fastening hole 1225 are not specifically limited.

FIG. 17 is a diagram of a structure of the second circuit board 17 shown in FIG. 5 from another perspective.

As shown in FIG. 17, the second circuit board 17 has a plurality of third pin ends 171. The plurality of third pin ends 171 may be configured to be electrically connected to another mechanical part.

For example, the second circuit board 17 is provided with a plurality of position-limiting holes 172. A position, a size, a quantity, and a shape of the position-limiting hole 172 are not specifically limited.

As shown in FIG. 17, the image-stabilization motor 10 includes a third position sensor 173. The third position sensor 173 is fastened to the second circuit board 17, and is electrically connected to the second circuit board 17.

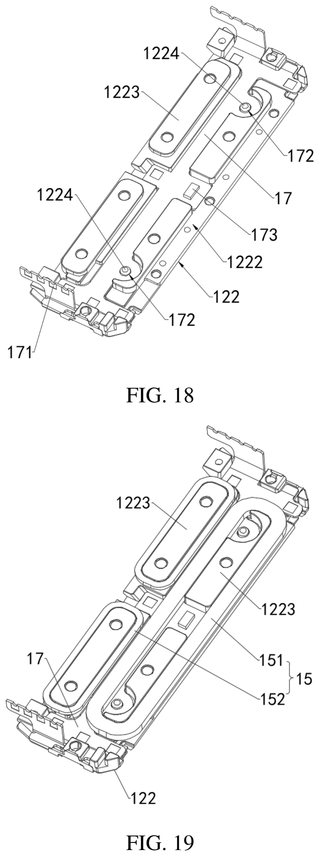

FIG. 18 is a fifth diagram of a partial structure of the image-stabilization motor 10 shown in FIG. 4 according to an implementation.

Refer to FIG. 18, together with FIG. 16 and FIG. 17. The second circuit board 17 is fastened to the bottom surface 1222 of the second bracket 122. In this case, the third position sensor 173 is fastened to the second bracket 122 through the second circuit board 17.

For example, the plurality of second position-limiting protrusions 1223 of the second bracket 122 may cooperate with each other to abut against the second circuit board 17, to perform position limiting for the second circuit board 17. In this case, a connection between the second circuit board 17 and the second bracket 122 is more stable. For example, the plurality of second position-limiting protrusions 1223 are arranged in the first direction X, and abut against the second circuit board 17 in the first direction X.

For example, the position-limiting post 1224 of the second bracket 122 may be inserted into the position-limiting hole 172 of the second circuit board 17, to further perform position limiting for the second circuit board 17, so that the connection between the second bracket 122 and the second circuit board 17 is more stable. For example, the position-limiting post 1224 of the second bracket 122 may be riveted into the position-limiting hole 172 of the second circuit board 17.

FIG. 19 is a sixth diagram of a partial structure of the image-stabilization motor 10 shown in FIG. 4 according to an implementation.

As shown in FIG. 19, the second drive coil 15 is fastened to the second circuit board 17, and is electrically connected to the second circuit board 17. In this case, the second drive coil 15 is fastened to the second bracket 122 through the second circuit board 17.

For example, both the first drive sub-coil 151 and the second drive sub-coil 152 are fastened to the second circuit board 17 at a spacing, and are electrically connected to the second circuit board 17.

For example, the plurality of second position-limiting protrusions 1223 of the second bracket 122 may cooperate with each other to abut against the second drive coil 15, to perform position limiting for the second drive coil 15. In this case, a connection between the second drive coil 15 and the second circuit board 17 is more stable. For example, the second position-limiting protrusion 1223 of the second bracket 122 is located on an inner side of the second drive coil 15, and abuts against the second drive coil 15 in the first direction X.

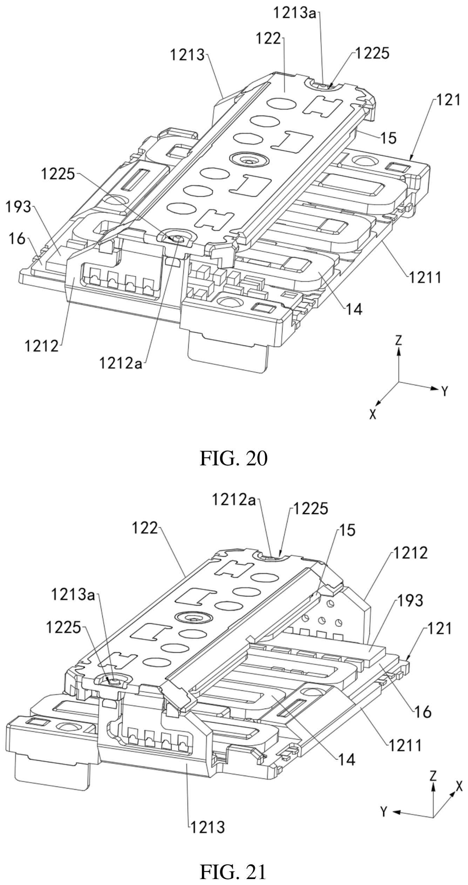

FIG. 20 is a seventh diagram of a partial structure of the image-stabilization motor 10 shown in FIG. 4 according to an implementation. FIG. 21 is a diagram of a structure of the partial image-stabilization motor 10 shown in FIG. 20 from another perspective.

As shown in FIG. 20 and FIG. 21, the second bracket 122 is fastened to the first bump 1212 and the second bump 1213, and is disposed opposite to the bottom plate 1211 at a spacing.

For example, the second bracket 122 may be fastened to the first bump 1212 and the second bump 1213 through bonding.

For example, the first bump 1212, the second bump 1213, and the second bracket 122 each include a metal part. Both a metal part of the first bump 1212 and a metal part of the second bump 1213 are welded to a metal part of the second bracket 122.

For example, a fastening post 1212a of the first bump 1212 is inserted into a fastening hole 1225 of the second bracket 122, and a fastening post 1213a of the second bump 1213 is inserted into another fastening hole 1225 of the second bracket 122. In this case, a connection between the second bracket 122 and the first bracket 121 is more stable.

As shown in FIG. 20 and FIG. 21, the first drive coil 14 and the second drive coil 15 are disposed facing each other. In addition, the second drive coil 15 forms a current loop with the image-stabilization drive chip 193 through the second circuit board 17 (refer to FIG. 19), an electric-conductor in the first bracket 121, and the first circuit board 16.

It can be understood that, that the first drive coil 14 and the second drive coil 15 are disposed facing each other may mean that a winding plane of the first drive coil 14 faces a winding plane of the second drive coil 15. For example, both the winding plane of the first drive coil 14 and the winding plane of the second drive coil 15 may be arranged parallel to the X-Y plane.

For example, a length extension direction of the first drive coil 14 is perpendicular to a length extension direction of the second drive coil 15.

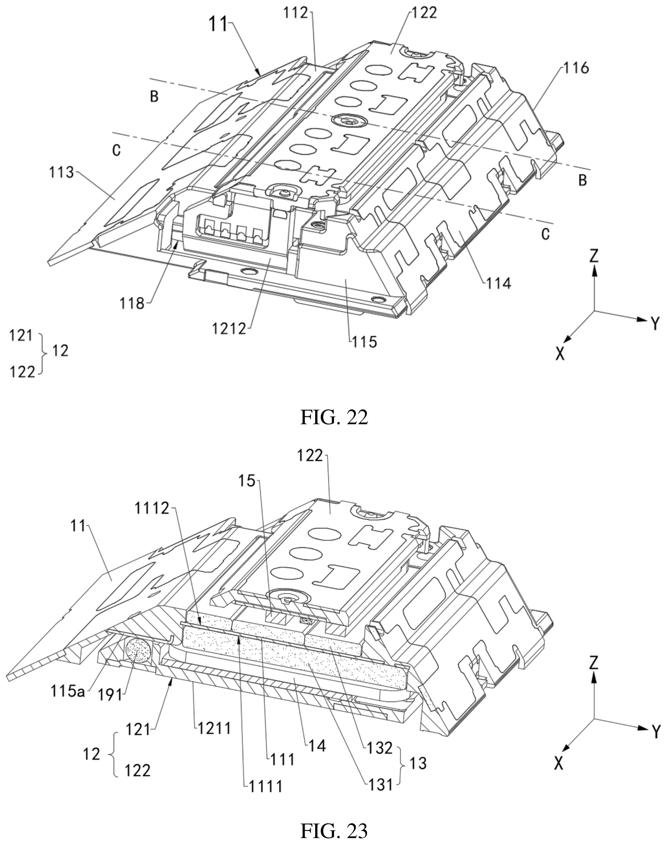

FIG. 22 is an eighth diagram of a partial structure of the image-stabilization motor 10 shown in FIG. 4 according to an implementation. FIG. 23 is a partial sectional view of the image-stabilization motor 10 shown in FIG. 22 along a line B-B according to an implementation.

As shown in FIG. 22 and FIG. 23, the movable carrier 12 is movably connected to the stationary carrier 11. For example, the movable carrier 12 may be movably connected to the stationary carrier 11 through the rolling piece 191.

For example, the rolling piece 191 is disposed in contact with the extension portion 115a (the extension portion 115a is shown in FIG. 8 from different perspectives) of the stationary carrier 11. It can be understood that, because the extension portion 115a of the stationary carrier 11 is made of a metal material, a friction force between the rolling piece 191 and the stationary carrier 11 is small. This facilitates stable movement of the movable carrier 12 relative to the stationary carrier 11.

For example, there are three rolling pieces 191, and the three rolling pieces 191 are distributed at different positions to support the stationary carrier 11 at three points, so that the image-stabilization motor 10 can be stably disposed.

For example, lubricating grease is applied between the rolling piece 191 and the rolling piece slot 1217. This can further reduce a friction force between the rolling piece 191 and the stationary carrier 11, to better implement a rolling piece-based superlubricity system. In addition, the rolling piece 191 is not likely to be detached from the rolling piece slot 1217. In another implementation, the rolling piece 191 and the movable carrier 12 may alternatively be of an integral structure.

For example, the magnetic isolation sheet 111 on the top plate 112 of the stationary carrier 11 is located between the bottom plate 1211 of the first bracket 121 and the second bracket 122. In other words, a part of the stationary carrier 11 is located between the bottom plate 1211 of the first bracket 121 and the second bracket 122. The magnetic isolation sheet 111 on the top plate 112 of the stationary carrier 11 is disposed opposite to both the bottom plate 1211 of the first bracket 121 and the second bracket 122 at a spacing.

For example, the bottom plate 1211 of the first bracket 121 is located in the inner space of the stationary carrier 11. The first bump 1212 of the first bracket 121 may pass through the first through hole 118 of the stationary carrier 11 from the inner space of the stationary carrier 11, and extend to the outer space of the stationary carrier 11. In addition, for a positional relationship between the second bump 1213 (refer to FIG. 21) of the first bracket 121 and the second through hole 119 (refer to FIG. 6) of the stationary carrier 11, refer to the positional relationship between the first bump 1212 of the first bracket 121 and the first through hole 118 of the stationary carrier 11. Details are not described herein again.

For example, the drive magnetic piece 13 is located between the first drive coil 14 and the second drive coil 15. Both the first drive coil 14 and the second drive coil 15 face the drive magnetic piece 13, to drive the movable carrier 12 to move relative to the stationary carrier 11. The first surface 1111 of the magnetic isolation sheet 111 faces the first drive coil 14, and the second surface 1112 of the magnetic isolation sheet 111 faces the second drive coil 15.

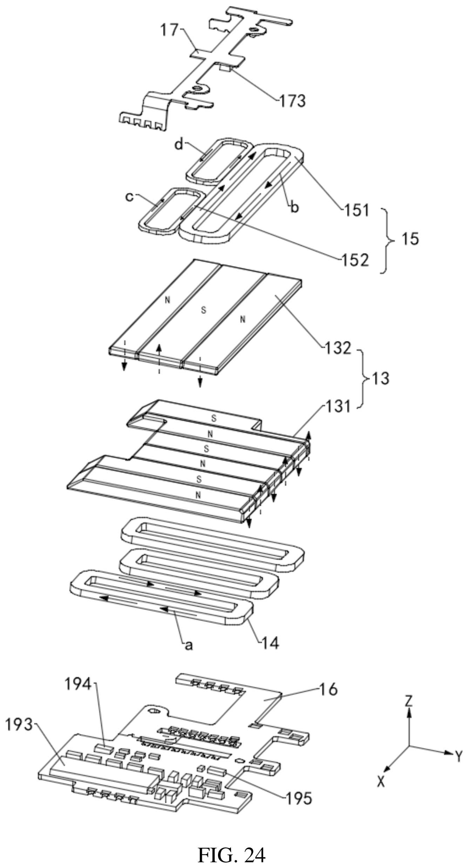

FIG. 24 is a partial exploded view of the image-stabilization motor 10 shown in FIG. 5 according to an implementation.

Refer to FIG. 24, together with FIG. 23. The first drive coil 14 faces the first drive magnetic piece 131, to drive the movable carrier 12 to move relative to the stationary carrier 11 in the first direction X. The first drive coil 14 and the first drive magnetic piece 131 may constitute a first drive mechanism of the image-stabilization motor 10.

It can be understood that, that the first drive coil 14 is disposed facing the first drive magnetic piece 131 means that a winding plane of the first drive coil 14 faces the first drive magnetic piece 131. For example, the winding plane of the first drive coil 14 may be arranged parallel to the X-Y plane. For example, the first drive magnetic piece 131 may have two opposite polarity directions (indicated by dashed lines with arrows in FIG. 24, where FIG. 24 shows an example in which the first drive magnetic piece 131 includes three groups of two opposite polarity directions). The polarity directions of the first drive magnetic piece 131 may be perpendicular to the winding plane of the first drive coil 14. Coils in two regions of one first drive coil 14 may be disposed in correspondence with the two polarity directions of the first drive magnetic piece 131 respectively, and current (indicated by solid lines a with arrows in FIG. 24) flow directions in the coils in the two regions are opposite to each other. A side, facing the first drive coil 14, of the first drive magnetic piece 131 includes a south pole (S) and a north pole (N). A side, facing away from the first drive coil 14, of the first drive magnetic piece 131 correspondingly includes a north pole (N) and a south pole (S). It can be understood that, because a polarity on the side, facing the first drive coil 14, of the first drive magnetic piece 131 is blocked, FIG. 24 shows only a polarity on the side, facing away from the first drive coil 14, of the first drive magnetic piece 131 as an example. In addition, there are three first drive coils 14. The three first drive coils 14 are disposed opposite to the three groups of two opposite polarity directions in a one-to-one correspondence.

Refer FIG. 24, together with FIG. 23. The first position sensor 194 may be configured to: when the movable carrier 12 moves relative to the stationary carrier 11 in the first direction X, detect a first magnetic field variation of the first drive magnetic piece 131. In this case, the first position sensor 194 or the image-stabilization drive chip 193 may determine, based on the first magnetic field variation, a displacement of the movable carrier 12 moving relative to the stationary carrier 11 in the first direction X.

Refer FIG. 24, together with FIG. 23. The second position sensor 195 may be configured to: when the movable carrier 12 moves relative to the stationary carrier 11 in the first direction X, detect a second magnetic field variation of the first drive magnetic piece 131. In this case, the second position sensor 195 or the image-stabilization drive chip 193 may determine, based on the second magnetic field variation, a displacement of the movable carrier 12 moving relative to the stationary carrier 11 in the first direction X.

It can be understood that, in a process of determining the displacement of the movable carrier 12 moving relative to the stationary carrier 11 in the first direction X, the first position sensor 194 or the second position sensor 195 alone may be used, or both the first position sensor 194 and the second position sensor 195 may be used.

Refer to FIG. 24, together with FIG. 23. The first drive sub-coil 151 of the second drive coil 15 faces the second drive magnetic piece 132, to drive the movable carrier 12 to move relative to the stationary carrier 11 in the second direction Y. The first drive sub-coil 151 of the second drive coil 15 and the second drive magnetic piece 132 may constitute a second drive mechanism of the image-stabilization motor 10.

It can be understood that, that the first drive sub-coil 151 is disposed facing the second drive magnetic piece 132 means that a winding plane of the first drive sub-coil 151 faces the second drive magnetic piece 132. For example, the winding plane of the first drive sub-coil 151 may be arranged parallel to the X-Y plane. For example, the second drive magnetic piece 132 may have two opposite polarity directions (indicated by dashed lines with arrows in FIG. 24), and the polarity directions of the second drive magnetic piece 132 are perpendicular to the winding plane of the first drive sub-coil 151. Coils in two regions of one first drive sub-coil 151 may be disposed in correspondence with the two polarity directions of the second drive magnetic piece 132 respectively, and current (indicated by solid lines b with arrows in FIG. 24) flow directions in the coils in the two regions are opposite to each other. A side, facing the first drive sub-coil 151, of the second drive magnetic piece 132 includes a north pole (N) and a south pole (S). A side, facing away from the first drive sub-coil 151, of the second drive magnetic piece 132 correspondingly includes a south pole (S) and a north pole (N). It can be understood that, because a polarity on the side, facing away from the first drive sub-coil 151, of the second drive magnetic piece 132 is blocked, FIG. 24 shows only a polarity on the side, facing the first drive sub-coil 151, of the second drive magnetic piece 132 as an example. In addition, FIG. 24 shows an example in which the second drive magnetic piece 132 includes three polarity directions, and two adjacent polarity directions are opposite. There is one first drive sub-coil 151.

Refer FIG. 24, together with FIG. 23. The third position sensor 173 may be configured to: when the movable carrier 12 moves relative to the stationary carrier 11 in the second direction Y, detect a third magnetic field variation of the second drive magnetic piece 132. In this case, the third position sensor 173 or the image-stabilization drive chip 193 may determine, based on the third magnetic field variation, a displacement of the movable carrier 12 moving relative to the stationary carrier 11 in the second direction Y.

For example, a driving force produced by the first drive sub-coil 151 in cooperation with the second drive magnetic piece 132 is less than a driving force produced by the first drive coil 14 in cooperation with the first drive magnetic piece 131. In an implementation, in the case of a same quantity of turns, a quantity of first drive sub-coils 151 is less than a quantity of first drive coils 14; and/or in the case of a same quantity, a quantity of turns of the first drive sub-coil 151 is less than a quantity of turns of the first drive coil 14; and/or a size of the second drive magnetic piece 132 is less than a size of the first drive magnetic piece 131; and/or in the case of a same size, a quantity of second drive magnetic pieces 132 is less than a quantity of first drive magnetic pieces 131.

Refer to FIG. 24, together with FIG. 23. The second drive sub-coil 152 of the second drive coil 15 faces the second drive magnetic piece 132, to drive the movable carrier 12 to rotate relative to the stationary carrier 11. The second drive sub-coil 152 of the second drive coil 15 and the second drive magnetic piece 132 may constitute a third drive mechanism of the image-stabilization motor 10.

It can be understood that, that the second drive sub-coil 152 is disposed facing the second drive magnetic piece 132 means that a winding plane of the second drive sub-coil 152 faces the second drive magnetic piece 132. For example, the winding plane of the second drive sub-coil 152 may be arranged parallel to the X-Y plane. For example, there are two second drive sub-coils 152. The two second drive sub-coils 152 may be arranged in the first direction X. Coils in two regions of each of the two second drive sub-coils 152 may be disposed in correspondence with the two polarity directions of the second drive magnetic piece 132 respectively, and current (in FIG. 24, solid lines c with arrows indicate a current of a 1^{st} second drive sub-coil 152, and solid lines d with arrows indicate a current of a 2^{nd} second drive sub-coil 152) flow directions in the coils in the two regions are opposite to each other. A side, facing the second drive sub-coil 152, of the second drive magnetic piece 132 includes a north pole (N) and a south pole (S). A side, facing away from the second drive sub-coil 152, of the second drive magnetic piece 132 correspondingly includes a south pole (S) and a north pole (N). The two second drive sub-coils 152 share the two polarity directions of the second drive magnetic piece 132. In addition, the two second drive sub-coils 152 and one first drive sub-coil 151 share the second drive magnetic piece 132.

It can be understood that the two second drive sub-coils 152 are disposed in series, and current directions of the two second drive sub-coils 152 are opposite, so that the two second drive sub-coils 152 are subject to opposite acting forces after the two second drive sub-coils 152 are energized. For example, when the 1^{st} second drive sub-coil 152 is subject to an acting force in a positive direction of the Y axis, the 2^{nd} second drive sub-coil 152 is subject to an acting force in a negative direction of the Y axis. In this case, torques applied by the two second drive sub-coils 152 to the movable carrier 12 enable the movable carrier 12 to rotate relative to the stationary carrier 11.

It can be understood that the second drive sub-coil 152 of the second drive coil 15 and the second drive magnetic piece 132 are disposed, to implement rotation compensation around a Z-axis direction. For example, when the movable carrier 12 rotates clockwise relative to the stationary carrier 11, a direction and a magnitude of a current on the second drive sub-coil 152 of the second drive coil 15 may be controlled, to obtain a compensation driving force for the movable carrier 12 to rotate counterclockwise relative to the stationary carrier 11, to implement rotation compensation for the movable carrier 12 around the Z-axis direction.

Refer FIG. 24, together with FIG. 23. The first position sensor 194 may be configured to: when the movable carrier 12 moves relative to the stationary carrier 11 in the first direction X, detect a first magnetic field variation of the first drive magnetic piece 131. The second position sensor 195 may be configured to: when the movable carrier 12 moves relative to the stationary carrier 11 in the first direction X, detect a second magnetic field variation of the first drive magnetic piece 131. The first position sensor 194 and the second position sensor 195 cooperate with each other to detect a rotation angle of the movable carrier 12 relative to the stationary carrier 11.

In an implementation, the first position sensor 194, the second position sensor 195, or the image-stabilization drive chip 193 may determine, based on the first magnetic field variation and the second magnetic field variation, the rotation angle of the movable carrier 12 relative to the stationary carrier 11.

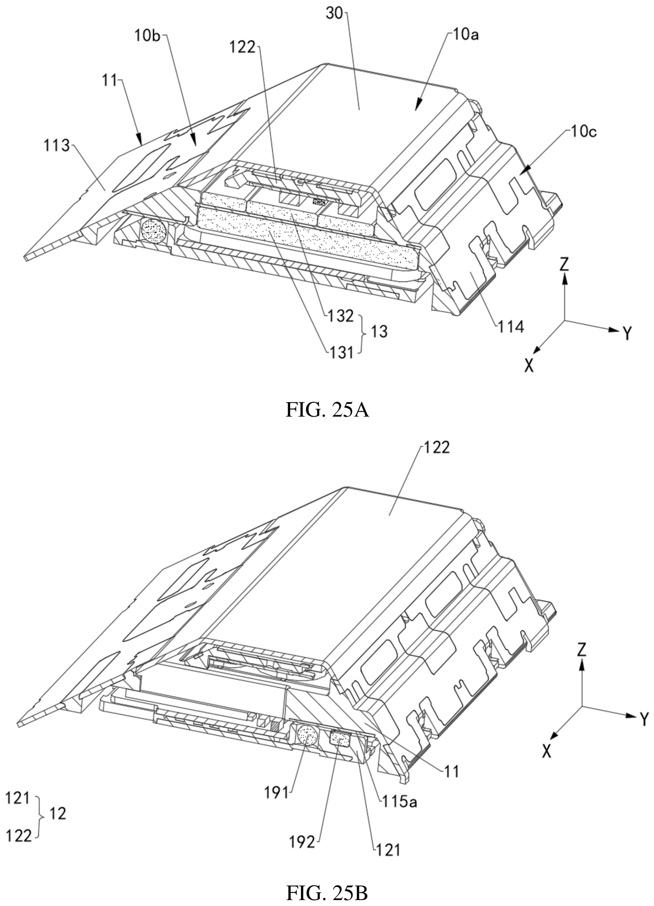

FIG. 25A is a partial sectional view of the image-stabilization motor 10 shown in FIG. 22 according to another implementation.

As shown in FIG. 25A, for example, the upper housing 30 is fastened to the stationary carrier 11. The upper housing 30 may cover at least a part of the second bracket 122 and a gap between the second bracket 122 and the stationary carrier 11. The upper housing 30 can improve appearance and integration of the image-stabilization motor 10. In addition, if the second drive magnetic piece 132 of the drive magnetic piece 13 is exposed from the gap between the second bracket 122 and the stationary carrier 11, the upper housing 30 may also be configured to cover the second drive magnetic piece 132 and protect the second drive magnetic piece 132.

As shown in FIG. 25A, the upper housing 30 may further cover the first through hole 118 (FIG. 3 and FIG. 6 show the first through hole 118 from different perspectives) and the second through hole 119 (FIG. 6 shows the second through hole 119 from different perspectives) of the stationary carrier 11.

Refer to FIG. 25A, together with FIG. 3. A surface, facing away from the second bracket 122, of the upper housing 30 may form the top surface 10a of the image sensor assembly 101. A part of the upper housing 30 and the first side plate 113 of the stationary carrier 11 may jointly form the first side surface 10b of the image sensor assembly 101. A part of the upper housing 30 and the second side plate 114 of the stationary carrier 11 may form the second side surface 10c of the image sensor assembly 101.

FIG. 25B is a partial sectional view of the image-stabilization motor 10 shown in FIG. 22 along a line C-C according to an implementation.

Refer to FIG. 25B, together with FIG. 8. The plurality of extension portions 115a of the first metal piece 111a of the stationary carrier 11 form a magnetic-attractive piece. In other words, the plurality of extension portions 115a of the first metal piece 111a of the stationary carrier 11 are made of a magnetic-attractive material, to be specific, a material that can produce a magnetic attraction force with a magnet or another magnetic component, for example, a ferromagnetic material. In this case, the magnetic-attractive piece may be a part of a metal part of the stationary carrier 11.

As shown in FIG. 25B, the magnetic-attractive magnetic piece 192 is disposed opposite to the extension portion 115a. A magnetic attraction force may be produced between the magnetic-attractive magnetic piece 192 and the extension portion 115a. The magnetic attraction force can enable the movable carrier 12 to tend to approach the stationary carrier 11. In this way, the movable carrier 12 can be stably attached to the stationary carrier 11 in the Z-axis direction, and when the movable carrier 12 moves relative to the stationary carrier 11, the movable carrier 12 achieves higher stability.

For example, when there are a plurality of magnetic-attractive magnetic pieces 192 and a plurality of extension portions 115a, the plurality of magnetic-attractive magnetic pieces 192 are disposed opposite to the plurality of extension portions 115a in a one-to-one correspondence.

For example, the extension portion 115a is disposed facing the magnetic-attractive magnetic piece 192. In this way, an area in which the magnetic-attractive magnetic piece 192 faces the extension portion 115a is large. This helps increase the magnetic attraction force between the magnetic-attractive magnetic piece 192 and the extension portion 115a.

It can be understood that a position of the magnetic-attractive magnetic piece 192 may be properly arranged, to better avoid and balance overall magnetic interference of the image-stabilization motor 10, in other words, to avoid magnetic interference between the magnetic-attractive magnetic piece 192 and the drive magnetic piece 13 as much as possible.

It can be understood that the extension portion 115a of the stationary carrier 11 not only can provide a smooth contact surface for the rolling piece 191, but also can serve as a magnetic-attractive piece of the magnetic-attractive magnetic piece 192. The extension portion 115a of the stationary carrier 11 can be used for "a plurality of purposes".

It can be understood that both the rolling piece 191 and the magnetic-attractive magnetic piece 192 are disposed on the movable carrier 12, so that when the movable carrier 12 moves relative to the stationary carrier 11, relative positions of the rolling piece 191 and the magnetic-attractive magnetic piece 192 are not likely to change greatly. Particularly, when there are a plurality of rolling pieces 191 and a plurality of magnetic-attractive magnetic pieces 192, relative positions of a center of contact between the plurality of rolling pieces 191 and the stationary carrier 11 and a center of magnetic attraction forces of the plurality of magnetic-attractive magnetic pieces 192 are not likely to change. In this case, when the movable carrier 12 moves relative to the stationary carrier 11, the movable carrier 12 achieves high stability. To be specific, stable press-fitting and smooth movement are implemented between the movable carrier 12 and the stationary carrier 11.

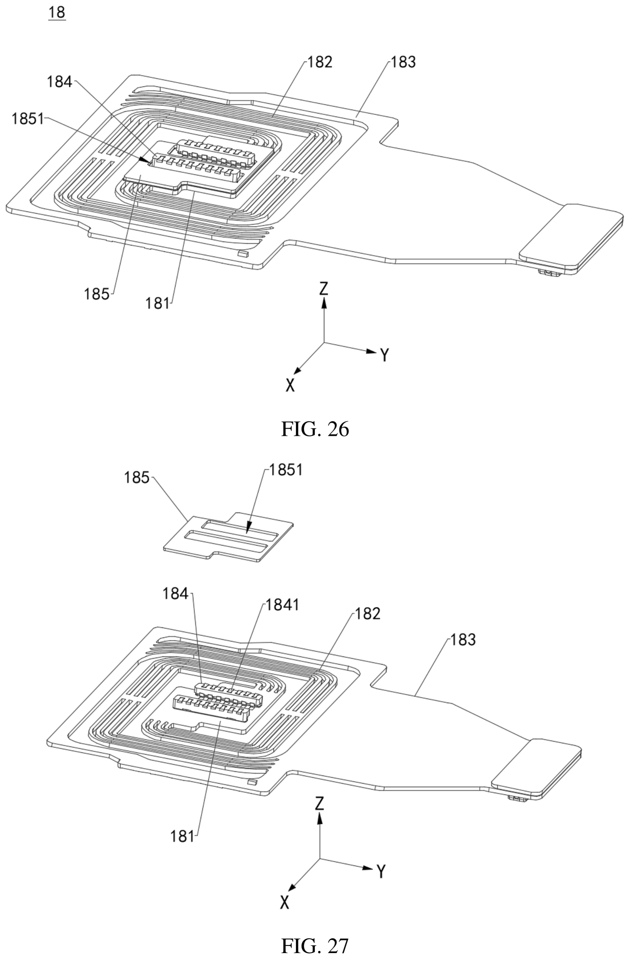

FIG. 26 is a diagram of a structure of the movable circuit board 18 shown in FIG. 5 from another perspective. FIG. 27 is a partial schematic exploded view of the movable circuit board 18 shown in FIG. 5 according to an implementation.

As shown in FIG. 26 and FIG. 27, the movable circuit board 18 includes a first stationary portion 181, an elastic portion 182, a second stationary portion 183, and an electrical connection portion 184. The elastic portion 182 is connected between the first stationary portion 181 and the second stationary portion 183. The electrical connection portion 184 is fastened to the first stationary portion 181, is electrically connected to the first stationary portion 181, and is electrically connected to the outside of the movable circuit board 18 through the elastic portion 182 and the second stationary portion 183.

For example, there are two electrical connection portions 184. The electrical connection portion 184 has a plurality of pin ends 1841.

For example, the elastic portion 182 is in a spiral shape, a broken-line shape, or a curved shape. This can increase a length of the elastic portion 182, to greatly reduce an elasticity coefficient of the elastic portion 182.

For example, a length of the elastic portion 182 is greater than half of a perimeter of an edge of the first stationary portion 181.

For example, the elastic portion 182 surrounds at least half of the edge of the first stationary portion 181, or the elastic portion 182 surrounds the edge of the first stationary portion 181 by a plurality of circles.

For example, an elasticity coefficient of the movable circuit board 18 in a length direction is K_{Y}, and a value of K_{Y} ranges from 25 to 35, for example, the elasticity coefficient Ky of the movable circuit board 18 in the length direction may be 30; and/or
an elasticity coefficient of the movable circuit board 18 in a width direction is K_{X}, and a value of K_{X} ranges from 85 to 100, for example, the elasticity coefficient K_{X} of the movable circuit board 18 in the length direction may be 93.

For example, the movable circuit board 18 further includes a reinforcing portion 185. The reinforcing portion 185 is fastened to the first stationary portion 181. The reinforcing portion 185 may be a steel plate or another metal plate. The reinforcing portion 185 is provided with an avoidance region 1851. The electrical connection portion 184 passes through the avoidance region 1851. To be specific, the reinforcing portion 185 is disposed around the electrical connection portion 184.

For example, the reinforcing portion 185 may be fastened to the first stationary portion 181 by using adhesive.

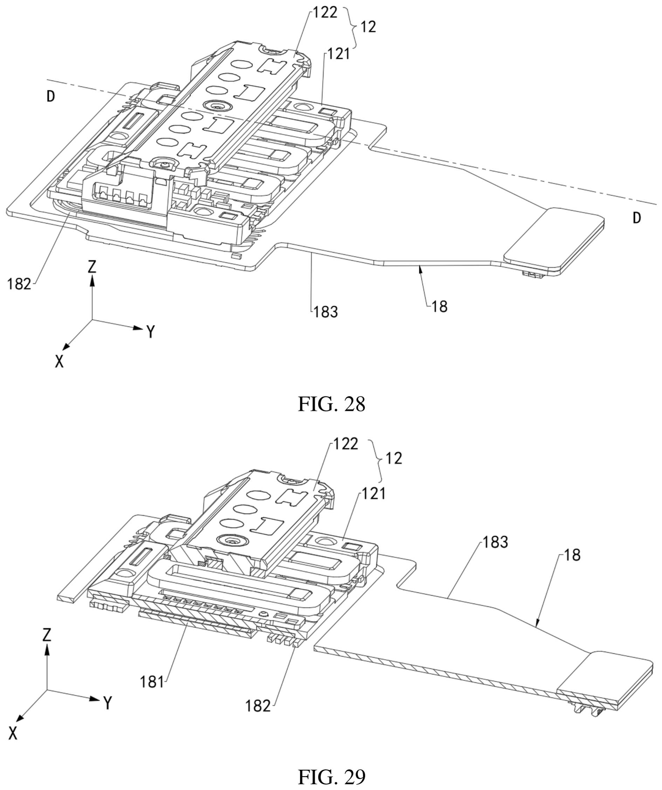

FIG. 28 is a ninth diagram of a partial structure of the image-stabilization motor 10 shown in FIG. 4 according to an implementation. FIG. 29 is a partial sectional view of the image-stabilization motor 10 shown in FIG. 28 along a line D-D according to an implementation.

Refer to FIG. 28 and FIG. 29, together with FIG. 26 and FIG. 27. The movable carrier 12 is fastened to the first stationary portion 181 of the movable circuit board 18. It can be understood that the movable carrier 12 may have no connection relationship with the elastic portion 182 or the second stationary portion 183 of the movable circuit board 18.

For example, the first bracket 121 of the movable carrier 12 is fastened to the first stationary portion 181 through the reinforcing portion 185.

In an implementation, both the movable carrier 12 and the first stationary portion 181 include a metal part, and a metal part of the movable carrier 12 may be welded to a metal part of the first stationary portion 181.

It can be understood that, when the movable carrier 12 moves relative to the stationary carrier 11 in the first direction X, the elastic portion 182 of the movable circuit board 18 is deformed in the first direction X. The first stationary portion 181 of the movable circuit board 18 may move along with the movable carrier 12 relative to the stationary carrier 11 in the first direction X. When the movable carrier 12 moves relative to the stationary carrier 11 in the second direction Y, the elastic portion 182 of the movable circuit board 18 is deformed in the second direction Y. The first stationary portion 181 of the movable circuit board 18 may move along with the movable carrier 12 relative to the stationary carrier 11 in the second direction Y.

In an implementation, an elasticity coefficient of the movable circuit board 18 in a width direction is K_{X}, and a value of K_{X} ranges from 85 to 100, and an elasticity coefficient of the movable circuit board 18 in a length direction is K_{Y}, and a value of K_{Y} ranges from 25 to 35. In this case, K_{Y} of the movable circuit board 18 is less than K_{X}.

It can be understood that, because K_{Y} of the movable circuit board 18 is less than K_{X}, a limitation on a stroke of the movable carrier 12 moving relative to the stationary carrier 11 in the second direction Y is smaller than a limitation on a stroke of the movable carrier 12 moving relative to the stationary carrier 11 in the first direction X. In this case, in this embodiment, a driving force produced by the first drive sub-coil 151 and the second drive magnetic piece 132 may be designed to be less than a driving force produced by the first drive coil 14 and the first drive magnetic piece 131, to better match the fact that Ky of the movable circuit board 18 is less than K_{X}. For example, a small quantity of first drive sub-coils 151 and a small quantity of second drive magnetic pieces 132 may be disposed, to facilitate miniaturization of the image-stabilization motor 10.

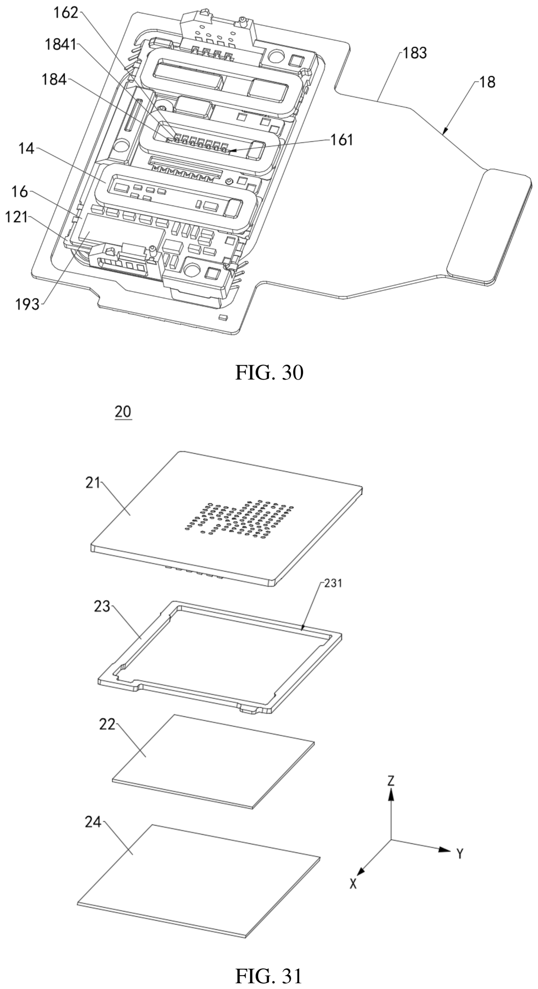

FIG. 30 is a tenth diagram of a partial structure of the image-stabilization motor 10 shown in FIG. 4 according to an implementation.

Refer to FIG. 30, together with FIG. 27. A part of the electrical connection portion 184 of the movable circuit board 18 passes through the first avoidance hole 1214 (refer to FIG. 11) of the first bracket 121 of the movable carrier 12, and is located in the second avoidance hole 161 (refer to FIG. 12) of the first circuit board 16. The pin end 1841 of the electrical connection portion 184 is electrically connected to the second pin end 162 of the first circuit board 16.

It can be understood that the image-stabilization drive chip 193 may be electrically connected to the electrical connection portion 184 of the movable circuit board 18 through the first circuit board 16, and electrically connected to the outside of the image-stabilization motor 10 through the first stationary portion 181, the elastic portion 182, and the second stationary portion 183 of the movable circuit board 18.

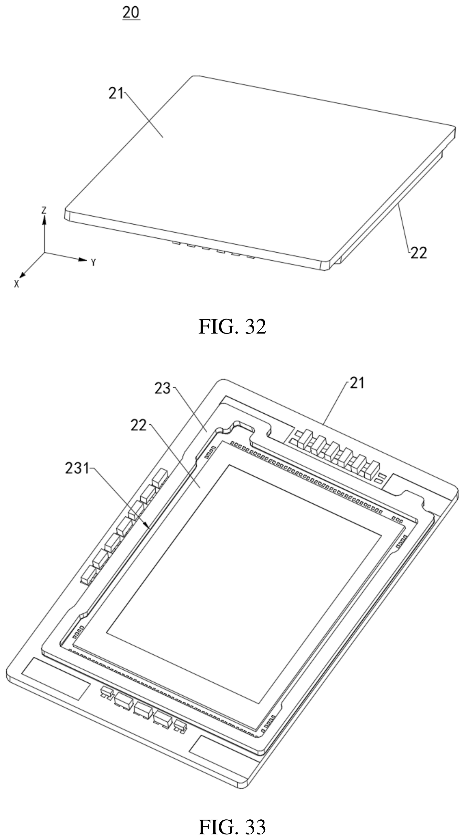

FIG. 31 is a schematic exploded view of the image sensor module 20 shown in FIG. 4 according to an implementation. FIG. 32 is a diagram of a partial structure of the image sensor module 20 shown in FIG. 4 according to an implementation. FIG. 33 is a diagram of a structure of the partial image sensor module 20 shown in FIG. 32 from another perspective.

As shown in FIG. 31 to FIG. 33, the image sensor module 20 includes a module circuit board 21, an image sensor 22 (also referred to as a sensor), a filter bracket 23, and a filter 24. It can be understood that the image sensor 22 is also referred to as a photosensitive chip or a photosensitive element. The image sensor 22 may be configured to capture ambient light passing through the first optical path conversion element 102, and convert image information carried in the ambient light into an electrical signal. It can be understood that the image sensor module 20 may include fewer or more structures. For example, the image sensor module 20 may include fewer structures. The image sensor module 20 may alternatively not include the filter bracket 23 and/or the filter 24. For another example, the image sensor module 20 includes more structures. The image sensor module 20 may further include an electronic component. The electronic component may be a capacitor, an inductor, a resistor, or the like. The electronic component may be electrically connected to the image sensor 22.

In some embodiments, the image sensor 22 may be fastened to the module circuit board 21 and electrically connected to the module circuit board 21. In this case, the image sensor 22 and the module circuit board 21 may transmit signals to each other. The filter bracket 23 is fastened to the module circuit board 21. The filter bracket 23 and the image sensor 22 may be located on a same side of the module circuit board 21. The filter bracket 23 is provided with a via 231. The filter 24 is fastened to the filter bracket 23. The filter 24 may be located in the via 231. The filter 24 is further disposed opposite to the image sensor 22. The filter 24 may be configured to filter out infrared light, blue light, or the like from light before the light enters the image sensor 22, to ensure good imaging quality of the image sensor 22.

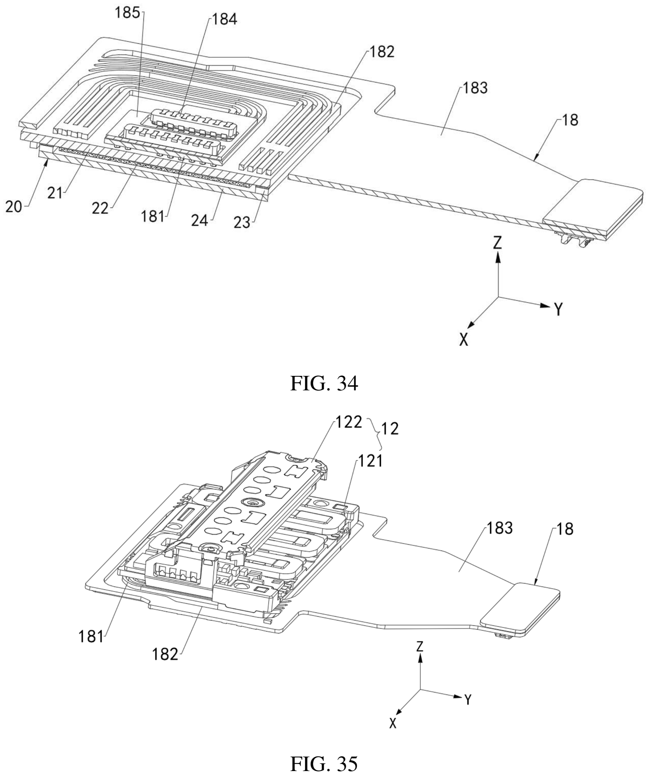

FIG. 34 is a first partial schematic sectional view of the image sensor assembly 101 shown in FIG. 3 along a line E-E according to an implementation.

As shown in FIG. 34, the image sensor module 20 is fastened to the first stationary portion 181 of the movable circuit board 18. The image sensor module 20 is located on a side, away from the reinforcing portion 185, of the first stationary portion 181 of the movable circuit board 18. It can be understood that the image sensor module 20 may have no connection relationship with the elastic portion 182 or the second stationary portion 183 of the movable circuit board 18.

For example, the module circuit board 21 of the image sensor module 20 is fastened to the first stationary portion 181 of the movable circuit board 18.

As shown in FIG. 34, the image sensor module 20 is electrically connected to the first stationary portion 181 of the movable circuit board 18. For example, the image sensor 22 may be electrically connected to the first stationary portion 181 of the movable circuit board 18 through the module circuit board 21, and electrically connected to the outside of the image sensor assembly 101 through the elastic portion 182 and the second stationary portion 183 of the movable circuit board 18.

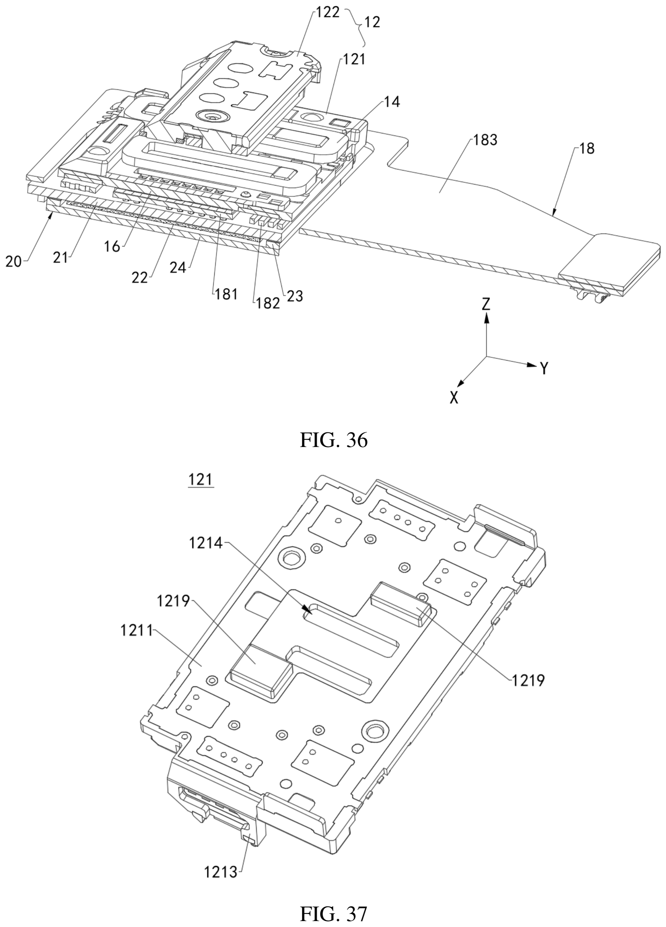

FIG. 35 is a diagram of a partial structure of the image sensor assembly 101 shown in FIG. 3 according to an implementation. FIG. 36 is a second partial schematic sectional view of the image sensor assembly 101 shown in FIG. 3 along a line E-E according to an implementation.

As shown in FIG. 35 and FIG. 36, the image sensor module 20 is located on a side, away from the movable carrier 12, of the first stationary portion 181 of the movable circuit board 18. In this case, the image sensor module 20 is fastened to the movable carrier 12 through the movable circuit board 18. The image sensor module 20 is located on a side, away from the first drive coil 14, of the movable carrier 12.

It can be understood that, when the movable carrier 12 moves in the first direction X, the elastic portion 182 of the movable circuit board 18 is deformed in the first direction X. The image sensor module 20 and the first stationary portion 181 of the movable circuit board 18 may move along with the movable carrier 12 in the first direction X. When the movable carrier 12 moves relative to the stationary carrier 11 in the second direction Y, the elastic portion 182 of the movable circuit board 18 is deformed in the second direction Y. The image sensor module 20 and the first stationary portion 181 of the movable circuit board 18 may move along with the movable carrier 12 in the second direction Y. Therefore, the movable carrier 12 may control, through the movable circuit board 18, the image sensor module 20 to move along the plane perpendicular to the third direction Z (that is, the X-Y plane). When the camera module 100 captures ambient light, if the electronic device 1000 shakes on the X-Y plane due to an external force, movement of the image sensor module 20 on the X-Y plane may be controlled, to counteract a shake stroke produced by the camera module 100 on the X-Y plane, to avoid or reduce a position offset of the camera module 100 that is caused by the shake. In this way, optical image stabilization is implemented for the camera module 100, to improve imaging quality of the camera module 100.

In addition, when the movable carrier 12 is driven to rotate clockwise relative to the stationary carrier 11, the movable carrier 12 drives, through the elastic portion 1821 of the movable circuit board 18, the image sensor module 20 to rotate clockwise. In this implementation, a direction and a magnitude of a current on the second drive sub-coil 152 of the second drive coil 15 are controlled, to obtain a compensation driving force for the movable carrier 12 to rotate counterclockwise relative to the stationary carrier 11, to implement rotation compensation for the movable carrier 12 around the Z-axis direction. In this case, the image sensor module 20 also performs rotation compensation around the Z-axis direction, to counteract a shake stroke produced by rotating around the Z-axis direction by the camera module 100, to avoid or reduce a position offset of the camera module 100 that is caused by the shake. In this way, optical image stabilization is implemented for the camera module 100, to improve imaging quality of the camera module 100.

FIG. 37 is a diagram of a structure of the first bracket 121 shown in FIG. 5 from another perspective.

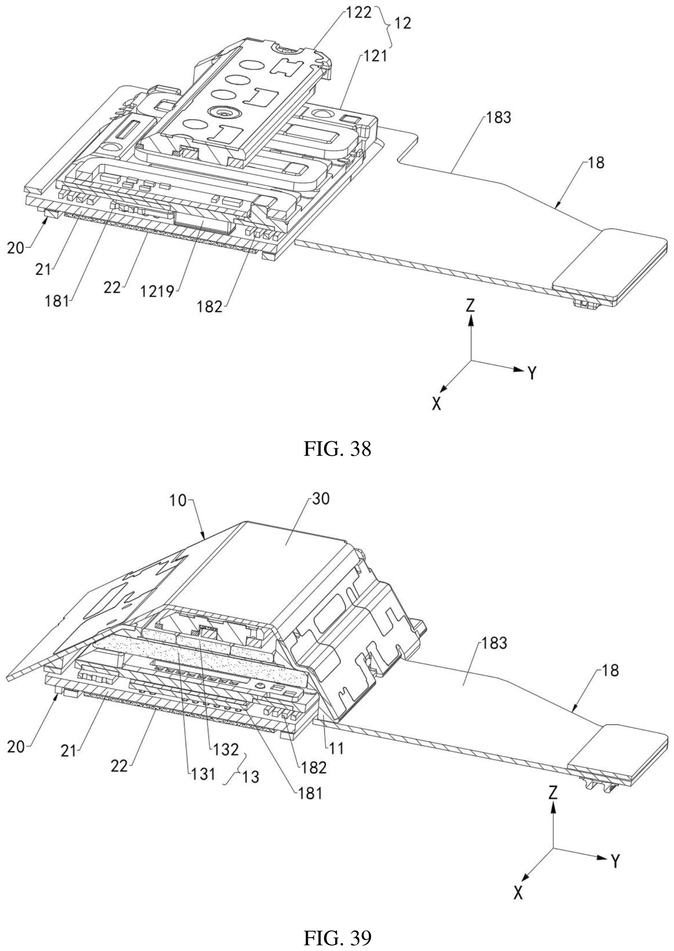

As shown in FIG. 38, the first bracket 121 further includes a stationary bump 1219. The stationary bump 1219 is convexly disposed on the bottom plate 1211, and is located on a side, away from the first bump 1212 (refer to FIG. 11), of the bottom plate 1211 and/or a side, away from the second bump 1213, of the bottom plate 1211. For example, the stationary bump 1219 is a square bump. There are two stationary bumps 1219. In another implementation, a size, a quantity, and a shape of the stationary bump 1219 are not specifically limited.

For example, the two stationary bumps 1219 may be located on two sides of the first avoidance hole 1214.

FIG. 38 is a partial schematic sectional view of the image sensor assembly 101 shown in FIG. 3 along a line F-F according to an implementation.

As shown in FIG. 37 and FIG. 38, the stationary bump 1219 passes through a gap of the elastic portion 182 of the movable circuit board 18, and is fastened to the image sensor module 20. For example, the module circuit board 21 of the image sensor module 20 is fastened to the stationary bump 1219.

It can be understood that the stationary bump 1219 is convexly disposed on the bottom plate 1211 of the first bracket 121, and the stationary bump 1219 passes through the movable circuit board 18 and is directly fastened to the image sensor module 20. In this way, compared with a solution in which the image sensor module 20 is fastened to the first bracket 121 through the movable circuit board 18, in this implementation, an assembly tolerance chain between the image sensor module 20 and the first bracket 121 is short, an assembly tolerance between the image sensor module 20 and the first bracket 121 is small, and the image sensor module 20 and the bottom plate 1211 of the first bracket 121 may be located on a same plane to a large extent. In addition, when the movable carrier 12 moves on the X-Y plane, the movable carrier 12 may directly drive the image sensor module 20 to move, and a movement status of the image sensor module 20 is slightly affected by the movable circuit board 18.

FIG. 39 is a third partial schematic sectional view of the image sensor assembly 101 shown in FIG. 3 along a line E-E according to an implementation.

As shown in FIG. 39, the stationary carrier 11 is fastened to the second stationary portion 183 of the movable circuit board 18. The stationary carrier 11 may have no connection relationship with the first stationary portion 181 or the elastic portion 182 of the movable circuit board 18. In this way, a connection between the image-stabilization motor 10 and the image sensor module 20 is more stable. The image-stabilization motor 10 and the image sensor module 20 are better integrated.

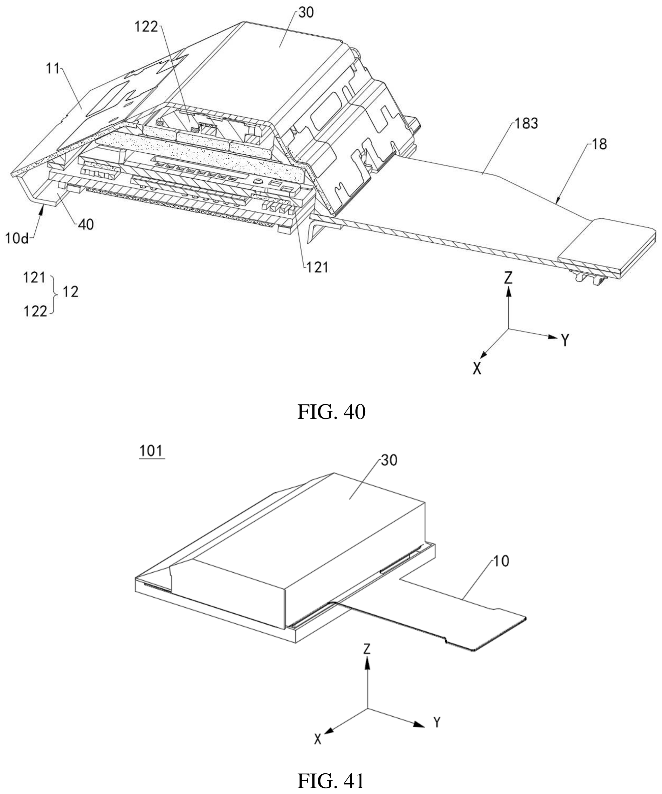

FIG. 40 is a fourth partial schematic sectional view of the image sensor assembly 101 shown in FIG. 3 along a line E-E according to an implementation.

As shown in FIG. 40, the lower housing 40 is fastened to the stationary carrier 11. The lower housing 40 may be located on a side, away from the upper housing 30, of the stationary carrier 11. In this case, the lower housing 40 and the upper housing 30 may be located on two sides of the stationary carrier 11. The lower housing 40 may cover at least a part of the first bracket 121 and a related device on the first bracket 121. It can be understood that the lower housing 40 can improve appearance and integration of the image-stabilization motor 10.

For example, the lower housing 40 is further fastened to the second stationary portion 183 of the movable circuit board 18. Apart of the movable circuit board 18 may be located between the lower housing 40 and the stationary carrier 11. In this way, the lower housing 40 may be further configured to cover a part of the movable circuit board 18. In this case, appearance and integration of the image-stabilization motor 10 are improved.

Refer to FIG. 40, together with FIG. 3. A surface, facing away from the stationary carrier 11, of the lower housing 40 may form the bottom surface 10b of the image sensor assembly 101.

The foregoing specifically describes an architecture of the image sensor assembly 101 with reference to related accompanying drawings.

As shown in FIG. 23 and FIG. 24, this application provides a drive architecture similar to a "sandwich"-type magnet coil. Specifically, the drive magnetic piece 13 is fastened to the stationary carrier 11, both the first drive coil 14 and the second drive coil 15 are fastened to the movable carrier 12, and the drive magnetic piece 13 is located between the first drive coil 14 and the second drive coil 15. It can be understood that magnetic induction lines on both sides of the drive magnetic piece 13 can be fully used by the first drive coil 14 and the second drive coil 15. Utilization of a magnetic field of the drive magnetic piece 13 is high. This helps increase a drive stroke of the image-stabilization motor 10. In addition, compared with a solution in which the first drive coil 14 and the second drive coil 15 are tiled on the X-Y plane, in this application, the first drive coil 14, the drive magnetic piece 13, and the second drive coil 15 are sequentially disposed in the Z-axis direction, to effectively use space in the Z-axis direction and reduce dimensions in an X-axis direction and a Y-axis direction. This can greatly improve space utilization in the Z-axis direction, and improve utilization of magnetic induction lines to increase a thrust, making it possible to apply image stabilization to a long-focus module that has more compact space and needs a larger rated stroke.

As shown in FIG. 23 and FIG. 24, the drive magnetic piece 13 includes the first drive magnetic piece 131 and the second drive magnetic piece 132. The first drive coil 14 faces the first drive magnetic piece 131, to drive the movable carrier 12 to move relative to the stationary carrier 11 in the first direction X. The first drive sub-coil 151 of the second drive magnetic piece 132 faces the second drive magnetic piece 132, to drive the movable carrier 12 to move relative to the stationary carrier 11 in the second direction Y. In this way, the movable carrier 12 can move relative to the stationary carrier 11 along the plane perpendicular to the third direction Z (that is, the X-Y plane). When the camera module 100 captures ambient light, if the electronic device 1000 shakes on the X-Y plane due to an external force, movement of the image sensor module 20 on the X-Y plane may be controlled, to counteract a shake stroke produced by the camera module 100 on the X-Y plane, to avoid or reduce a position offset of the camera module 100 that is caused by the shake. In this way, optical image stabilization is implemented for the camera module 100, to improve imaging quality of the camera module 100.

In addition, because the first drive magnetic piece 131 and the second drive magnetic piece 132 may be disposed in the Z-axis direction, quantities of magnets, arranged on the X-Y plane, of the first drive magnetic piece 131 and the second drive magnetic piece 132 do not affect each other, so that large quantities of first drive magnetic pieces 131 and second drive magnetic pieces 132 can be disposed.

It can be understood that, in the "pyramid" stacked architecture of the image-stabilization motor in this application, at a pyramid tip layer, the first drive sub-coil 151 is disposed, and a group of symmetrical coils that are connected in series and that have opposite directions (second drive sub-coils 152) are added to implement rotation compensation to resolve an image rotation problem; at middle layers, the second drive magnetic piece 132, the magnetic isolation sheet 111, and the first drive magnetic piece 131 are disposed from top to bottom; and at a pyramid bottom layer, the first drive coil 14 and the image sensor module 20 are disposed, to jointly implement a three-axis-decoupled image stabilization function for the image sensor 22.

As shown in FIG. 23 and FIG. 24, the stationary carrier 11 includes the magnetic isolation sheet 111. The first drive magnetic piece 131 is fastened to the first surface 1111 of the magnetic isolation sheet 111, and the second drive magnetic piece 132 is fastened to the second surface 1112 of the magnetic isolation sheet 111. In this way, the magnetic isolation sheet 111 can effectively prevent crosstalk between magnetic induction lines of the first drive magnetic piece 131 and the second drive magnetic piece 132, to ensure utilization of the magnetic induction lines of the first drive magnetic piece 131 and the second drive magnetic piece 132.

As shown in FIG. 2 and FIG. 3, the image sensor assembly 101 is disposed on a side on which an oblique edge of the first optical path conversion element 102 is located. In this way, the image sensor assembly 101 can effectively use space on the side on which the oblique edge of the first optical path conversion element 102 is located, to improve space utilization. In addition, the image sensor assembly 101 and the first optical path conversion element 102 have an overlapping region in the thickness direction of the electronic device 1000, and the thickness of the electronic device 1000 is not likely to increase at the position of the image sensor assembly 101.

As shown in FIG. 2 and FIG. 3, a shape of the image sensor assembly 101 is similar to a "pyramid" shape, so that a size of the image sensor assembly 101 is greatly reduced, to implement miniaturization. In addition, when the image sensor assembly 101 is disposed on the side on which the oblique edge of the first optical path conversion element 102 is located, a bottom of the image sensor assembly 101 that has a large size may be close to the oblique edge of the first optical path conversion element 102, a bottom of the image sensor assembly 101 that has a small size may be away from the oblique edge of the first optical path conversion element 102, to maximally use free space on the side on which the oblique edge of the first optical path conversion element 102 is located. It can be understood that, according to the image sensor assembly 101 in this application, it can be ensured that free space on the side on which the oblique edge of the first optical path conversion element 102 is located can be maximally utilized without greatly increasing a size of the camera module 100, to improve overall space utilization of a long-focus module. Compared with a conventional bottom plate-based SOIS, the image sensor assembly 101 occupies a smaller height and a smaller length of the module, and supports space optimization of the module.

As shown in FIG. 26 and FIG. 27, in this implementation, the first drive coil 14 and the first drive magnetic piece 131 are disposed to produce a large driving force in cooperation, to resolve a problem that a movement stroke of the movable circuit board 18 is limited due to a large elasticity coefficient of the movable circuit board 18 in the first direction X. For example, a first drive magnetic piece 131 with more magnets and a larger quantity of first drive coils 14 are disposed, to obtain a large driving force in the first direction X.

In addition, in this implementation, the first drive magnetic piece 131 with more magnets and the larger quantity of first drive coils 14 are disposed close to the bottom of the image sensor assembly 101, to maximally use free space on the side on which the oblique edge of the first optical path conversion element 102 is located.

As shown in FIG. 26 and FIG. 27, in this implementation, the first drive sub-coil 151 and the second drive magnetic piece 132 are disposed to produce a small driving force in cooperation, to match a requirement for a small elasticity coefficient of the movable circuit board 18 in the second direction Y and a small limitation on a movement stroke of the movable circuit board 18. For example, a first drive magnetic piece 131 with fewer magnets and a smaller quantity of first drive coils 14 are disposed, to obtain a small driving force in the second direction Y.

In addition, in this implementation, the second drive magnetic piece 132 with fewer magnets and the smaller quantity of second drive coils 15 are disposed close to the top of the image sensor assembly 101, to maximally use free space on the side on which the oblique edge of the first optical path conversion element 102 is located.

As shown in FIG. 23 and FIG. 24, the first drive sub-coil 151 of the second drive coil 15 faces the second drive magnetic piece 132, to drive the movable carrier 12 to move relative to the stationary carrier 11 in the second direction Y. The second drive sub-coil 152 of the second drive coil 15 faces the second drive magnetic piece 132, to drive the movable carrier 12 to rotate relative to the stationary carrier 11. It can be understood that the second drive sub-coil 152 and the first drive sub-coil 151 share the second drive magnetic piece 132, to maximize space utilization.

As shown in FIG. 26 and FIG. 27, a TSA-rotation (Rotation) compensation design with a small K value is used in this application.

First, the elastic portion 182 of the movable circuit board 18 is disposed in a spiral shape, a broken-line shape, or a curved shape, to increase a length of the elastic portion 182, and greatly reduce an elasticity coefficient of the elastic portion 182. In this way, a movement stroke of the movable circuit board 18 is subject to a small limitation, so that the movable carrier 12 can have a large image-stabilization stroke. In addition, in an elastic portion 182 in a spiral form and with a small K value, dimensions in the X-axis direction and the Y-axis direction can be effectively reduced while a small dimension is kept in the Z-axis direction, to reduce crosstalk (crosstalk) during movement on the X-Y plane, optimize electromagnetic drive performance, and reduce power consumption.

In addition, in this implementation, the second drive sub-coil 152 is disposed facing the second drive magnetic piece 132, to drive the movable carrier 12 to rotate relative to the stationary carrier 11, to perform rotation compensation, and suppress rotation (rotation) and crosstalk (crosstalk) of the movable circuit board 18.

As shown in FIG. 26 and FIG. 27, compared with a conventional image stabilization solution for a primary camera, in this solution, the module circuit board 21 of the image sensor module 20, the movable circuit board 18, the first circuit board 16, and the image-stabilization drive chip 193 are separately disposed in the Z-axis direction, and the electrical connection portion 184 is disposed on the movable circuit board 18, to implement an electrical connection between the image sensor 22 and the image-stabilization drive chip 193, effectively utilize space along the Z axis (the optical-axis direction), and further improve space utilization on the X-Y plane.

The foregoing specifically describes a structure of the image sensor assembly 101 with reference to related accompanying drawings. The following specifically describes another structure of the image sensor assembly 101 with reference to related accompanying drawings. It can be understood that technical content that is the same as the foregoing descriptions is not described in detail below.

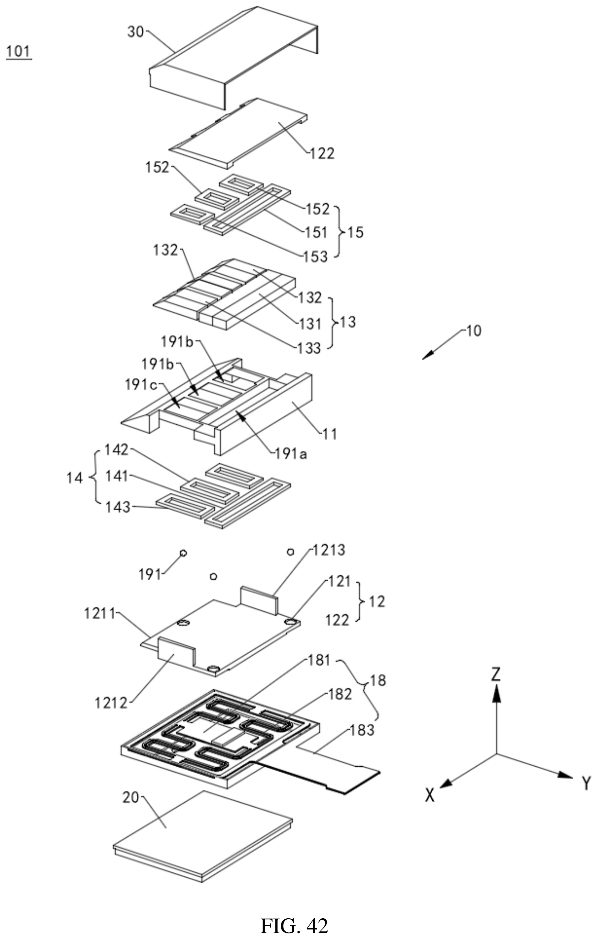

FIG. 41 is a diagram of a structure of the image sensor assembly 101 shown in FIG. 2 according to another implementation. FIG. 42 is a partial schematic exploded view of the image sensor assembly 101 shown in FIG. 41 according to an implementation.

As shown in FIG. 41 and FIG. 42, the image sensor assembly 101 includes an image-stabilization motor 10, an image sensor module 20, and an upper housing 30.

As shown in FIG. 42, the image-stabilization motor 10 includes a stationary carrier 11, a movable carrier 12, a drive magnetic piece 13, a first drive coil 14, and a second drive coil 15.

For example, the movable carrier 12 includes a first bracket 121 and a second bracket 122.

For example, the drive magnetic piece 13 includes a first drive magnetic piece 131, a second drive magnetic piece 132, and a third drive magnetic piece 133. In another implementation, the drive magnetic piece 13 may alternatively not include the second drive magnetic piece 132 and/or the third drive magnetic piece 133.

For example, the first drive coil 14 includes a first drive sub-coil 141, a second drive sub-coil 142, and a third drive sub-coil 143. In another implementation, the first drive coil 14 may alternatively not include the second drive sub-coil 142 and/or the third drive sub-coil 143.

In an implementation, the first drive coil 14 includes one first drive sub-coil 141 and one third drive sub-coil 143, and the first drive coil 14 includes two second drive sub-coils 142. In another implementation, quantities of first drive sub-coils 141, second drive sub-coils 142, and third drive sub-coils 143 are not specifically limited.

For example, the second drive coil 15 includes a first drive sub-coil 151, a second drive sub-coil 152, and a third drive sub-coil 153. In another implementation, the second drive coil 15 may alternatively not include the second drive sub-coil 152 and/or the third drive sub-coil 153.

In an implementation, the second drive coil 15 includes one first drive sub-coil 151 and one third drive sub-coil 153, and the second drive coil 15 includes two second drive sub-coils 152. In another implementation, quantities of first drive sub-coils 151, second drive sub-coils 152, and third drive sub-coils 153 of the second drive coil 15 are not specifically limited.

It can be understood that the image-stabilization motor 10 may alternatively include more structures or fewer structures. For example, when the image-stabilization motor 10 includes more structures, the image-stabilization motor 10 may further include a movable circuit board 18 and a rolling piece 191. In another implementation, the rolling piece 191 may alternatively be replaced with a sliding shaft.

As shown in FIG. 42, for example, the movable circuit board 18 includes a first stationary portion 181, an elastic portion 182, a second stationary portion 183, and an electrical connection portion 184. The elastic portion 182 is connected between the first stationary portion 181 and the second stationary portion 183. The electrical connection portion 184 is fastened to the first stationary portion 181, is electrically connected to the first stationary portion 181, and is electrically connected to the outside of the movable circuit board 18 through the elastic portion 182 and the second stationary portion 183.

As shown in FIG. 42, for example, the first bracket 121 includes a bottom plate 1211, a first bump 1212, and a second bump 1213. The first bump 1212 and the second bump 1213 are convexly disposed on a same side of the bottom plate 1211.

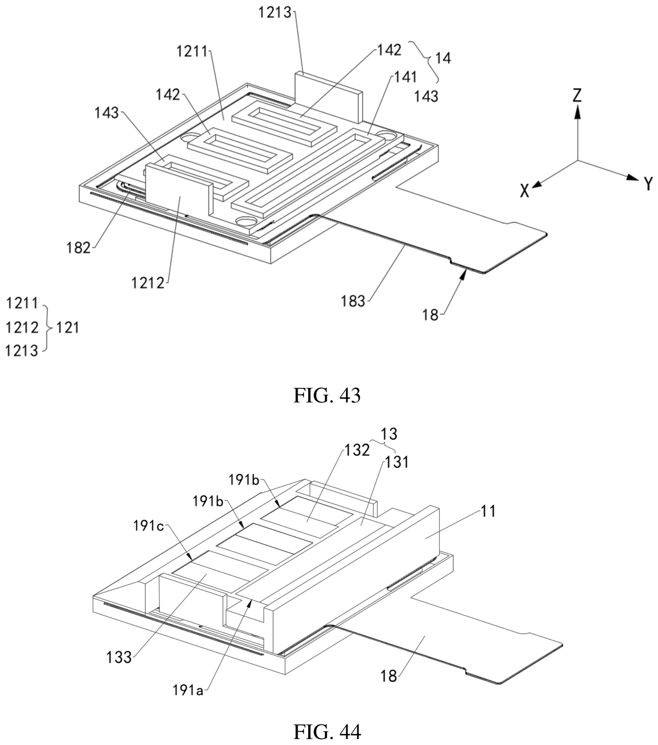

FIG. 43 is a first diagram of a partial structure of the image-stabilization motor 10 shown in FIG. 41 according to an implementation.

As shown in FIG. 42 and FIG. 43, the movable carrier 12 is fastened to the first stationary portion 181 of the movable circuit board 18. It can be understood that the movable carrier 12 may have no connection relationship with the elastic portion 182 or the second stationary portion 183 of the movable circuit board 18.

For example, the bottom plate 1211 of the first bracket 121 of the movable carrier 12 is fastened to the first stationary portion 181.

As shown in FIG. 43, all of the first drive sub-coil 141, the second drive sub-coil 142, and the third drive sub-coil 143 of the first drive coil 14 are fastened to the movable carrier 12. For example, all of the first drive sub-coil 141, the second drive sub-coil 142, and the third drive sub-coil 143 of the first drive coil 14 are fastened to the bottom plate 1211 of the first bracket 121. The first drive sub-coil 141, the second drive sub-coil 142, and the third drive sub-coil 143 of the first drive coil 14 are arranged in a first direction X. The first drive sub-coil 141, the second drive sub-coil 142, and the third drive sub-coil 143 of the first drive coil 14 may be electrically connected to the first stationary portion 181 of the movable circuit board 18 through a circuit board, and then electrically connected to a device outside the image-stabilization motor 10 through the elastic portion 182 and the second stationary portion 183 of the movable circuit board 18.

FIG. 44 is a second diagram of a partial structure of the image-stabilization motor 10 shown in FIG. 41 according to an implementation.

As shown in FIG. 44, the stationary carrier 11 is fastened to the second stationary portion 183 of the movable circuit board 18. The stationary carrier 11 may have no connection relationship with the first stationary portion 181 or the elastic portion 182 of the movable circuit board 18.

As shown in FIG. 42 and FIG. 44, the drive magnetic piece 13 is fastened to the stationary carrier 11.

For example, the stationary carrier 11 is provided with a first through hole 119a, a second through hole 119b, and a third through hole 119c. The first drive magnetic piece 131 is located in the first through hole 119a. The second drive magnetic piece 132 is located in the second through hole 119b. The third drive magnetic piece 133 is located in the third through hole 119c. In an implementation, there are two second drive magnetic pieces 132 and two second through holes 119b. The two second drive magnetic pieces 132 are disposed in the two second through holes 119b in a one-to-one correspondence.

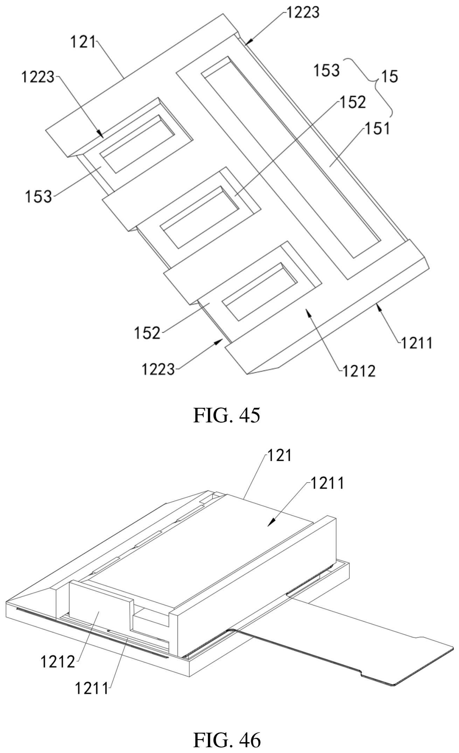

FIG. 45 is a third diagram of a partial structure of the image-stabilization motor 10 shown in FIG. 41 according to an implementation.

As shown in FIG. 45, the second bracket 122 includes a top surface 1221 and a bottom surface 1222 that are arranged facing away from each other.

As shown in FIG. 45, all of the first drive sub-coil 151, the second drive sub-coil 152, and the third drive sub-coil 153 of the second drive coil 15 are fastened to the movable carrier 12.

For example, all of the first drive sub-coil 151, the second drive sub-coil 152, and the third drive sub-coil 153 of the second drive coil 15 are fastened to the bottom surface 1222 of the second bracket 122.

For example, the second bracket 122 is provided with an accommodation slot 1223. An opening of the accommodation slot 1223 is located on the bottom surface 1222 of the second bracket 122. All of the first drive sub-coil 151, the second drive sub-coil 152, and the third drive sub-coil 153 of the second drive coil 15 are located in accommodation slots 1223.

FIG. 46 is a fourth diagram of a partial structure of the image-stabilization motor 10 shown in FIG. 41 according to an implementation.

Refer to FIG. 46, together with FIG. 43 and FIG. 45. The second bracket 122 is fastened to the first bump 1212 and the second bump 1213, and is disposed opposite to the bottom plate 1211 at a spacing. It can be understood that, for a manner of connecting the second bracket 122 to the first bump 1212 and the second bump 1213, reference may be made to the foregoing manner of connecting the second bracket 122 to the first bump 1212 and the second bump 1213 in FIG. 20 and FIG. 21. Details are not described herein again.

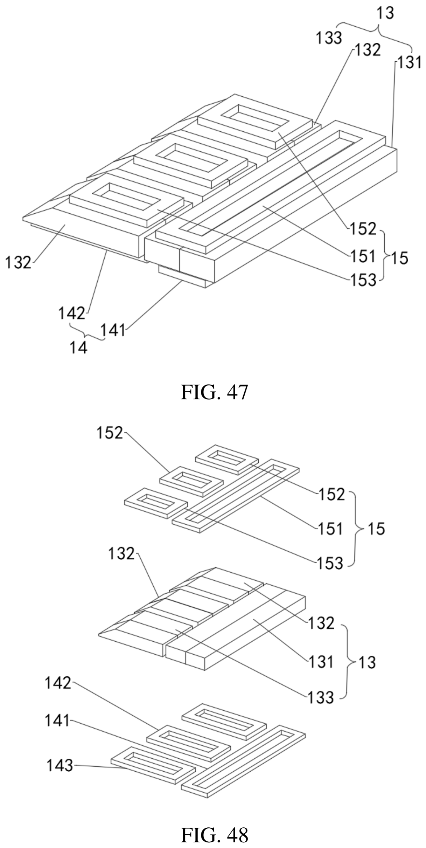

FIG. 47 is a fifth diagram of a partial structure of the image-stabilization motor 10 shown in FIG. 41 according to an implementation. FIG. 48 is a partial schematic exploded view of the drive magnetic piece 13, the first drive coil 14, and the second drive coil 15 shown in FIG. 47 according to an implementation.

As shown in FIG. 47 and FIG. 48, the drive magnetic piece 13 is located between the first drive coil 14 and the second drive coil 15.

For example, the first drive magnetic piece 131 is located between the first drive sub-coil 141 of the first drive coil 14 and the first drive sub-coil 151 of the second drive coil 15. Both the first drive sub-coil 141 of the first drive coil 14 and the first drive sub-coil 151 of the second drive coil 15 face the first drive magnetic piece 131, to drive the movable carrier 12 to move relative to the stationary carrier 11 in the first direction X. It can be understood that, for a manner of performing driving by the first drive sub-coil 141 of the first drive coil 14 and the first drive magnetic piece 131, and a manner of performing driving by the first drive sub-coil 151 of the second drive coil 15 and the first drive magnetic piece 131, reference may be made to the manner of performing driving by the first drive coil 14 and the first drive magnetic piece 131 in FIG. 24. Details are not described herein again.

For example, the second drive magnetic piece 132 is located between the second drive sub-coil 142 of the first drive coil 14 and the second drive sub-coil 152 of the second drive coil 15. Both the second drive sub-coil 142 of the first drive coil 14 and the second drive sub-coil 152 of the second drive coil 15 face the second drive magnetic piece 132, to drive the movable carrier to move relative to the stationary carrier 11 in a second direction Y. It can be understood that, for a manner of performing driving by the second drive sub-coil 142 of the first drive coil 14 and the second drive magnetic piece 132, and a manner of performing driving by the second drive sub-coil 152 of the second drive coil 15 and the second drive magnetic piece 132, reference may be made to the manner of performing driving by the first drive sub-coil 151 and the second drive magnetic piece 132 in FIG. 24. Details are not described herein again.

For example, the third drive magnetic piece 133 is located between the third drive sub-coil 143 of the first drive coil 14 and the third drive sub-coil 153 of the second drive coil 15. The third drive sub-coil 143 of the first drive coil 14 and the third drive sub-coil 153 of the second drive coil 15 face the third drive magnetic piece 133, to drive the movable carrier 12 to rotate relative to the stationary carrier 11. It can be understood that, for a manner of performing driving by the third drive sub-coil 143 of the first drive coil 14 and the third drive magnetic piece 133, and a manner of performing driving by the third drive sub-coil 153 of the second drive coil 15 and the third drive magnetic piece 133, reference may be made to the manner of performing driving by the second drive sub-coil 152 and the second drive magnetic piece 132 in FIG. 24. Details are not described herein again.

The foregoing specifically describes an architecture of the image sensor assembly 101 with reference to related accompanying drawings.

As shown in FIG. 47 and FIG. 48, this application provides a drive architecture similar to a "sandwich"-type magnet coil. Specifically, the drive magnetic piece 13 is fastened to the stationary carrier 11, both the first drive coil 14 and the second drive coil 15 are fastened to the movable carrier 12, and the drive magnetic piece 13 is located between the first drive coil 14 and the second drive coil 15. It can be understood that magnetic induction lines on both sides of the drive magnetic piece 13 can be fully used by the first drive coil 14 and the second drive coil 15. Utilization of a magnetic field of the drive magnetic piece 13 is high. This helps increase a drive stroke of the image-stabilization motor 10. In addition, compared with a solution in which the first drive coil 14 and the second drive coil 15 are tiled on an X-Y plane, in this application, the first drive coil 14, the drive magnetic piece 13, and the second drive coil 15 are sequentially disposed in a Z-axis direction, to effectively use space in the Z-axis direction and reduce dimensions in an X-axis direction and a Y-axis direction. This can greatly improve space utilization in the Z-axis direction, and improve utilization of magnetic induction lines to increase a thrust, making it possible to apply image stabilization to a long-focus module that has more compact space and needs a larger rated stroke.

In addition, because the first drive magnetic piece 131 and the second drive magnetic piece 132 may be disposed in the Z-axis direction, quantities of magnets, arranged on the X-Y plane, of the first drive magnetic piece 131 and the second drive magnetic piece 132 do not affect each other, so that large quantities of first drive magnetic pieces 131 and second drive magnetic pieces 132 can be disposed.

The foregoing specifically describes a structure of the image sensor assembly 101 with reference to related accompanying drawings. The following specifically describes another structure of the image sensor assembly 101 with reference to related accompanying drawings. It can be understood that technical content that is the same as the foregoing descriptions is not described in detail below.

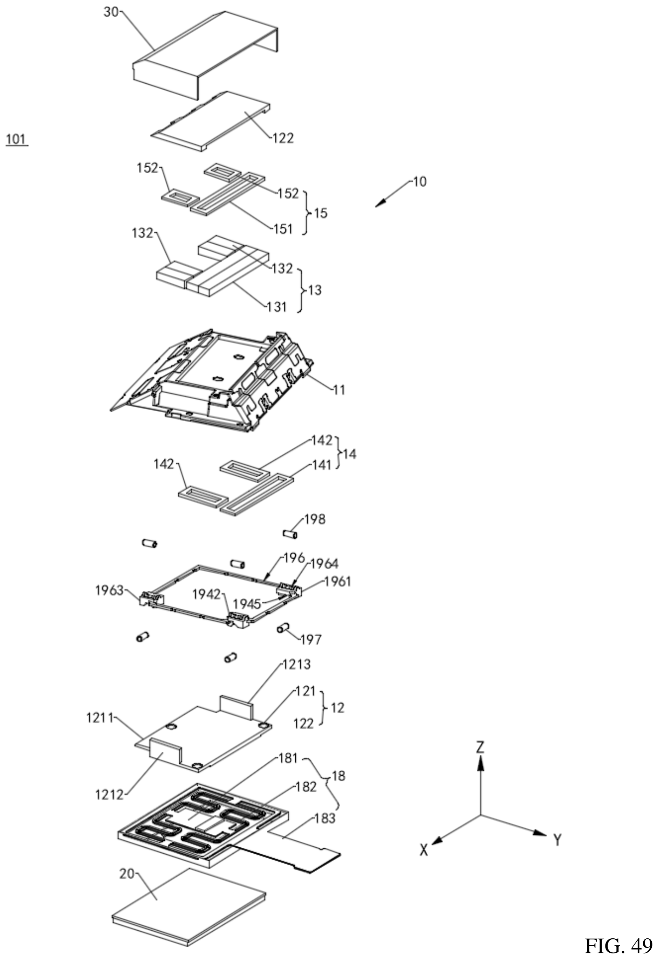

FIG. 49 is a partial schematic exploded view of the image sensor assembly 101 shown in FIG. 2 according to still another implementation.

As shown in FIG. 49, the image sensor assembly 101 includes an image-stabilization motor 10, an image sensor module 20, and an upper housing 30. For a manner of disposing the image sensor module 20 and the upper housing 30, refer to the foregoing manner of disposing the image sensor module 20 and the upper housing 30. Details are not described herein again.

As shown in FIG. 49, the image-stabilization motor 10 includes a stationary carrier 11, a movable carrier 12, a drive magnetic piece 13, a first drive coil 14, a second drive coil 15, and a movable circuit board 18. For the stationary carrier 11, the movable carrier 12, the drive magnetic piece 13, the first drive coil 14, the second drive coil 15, and the movable circuit board 18, refer to the stationary carrier 11, the movable carrier 12, the drive magnetic piece 13, the first drive coil 14, the second drive coil 15, and the movable circuit board 18 in the foregoing implementations. A difference lies in: The drive magnetic piece 13 includes a first drive magnetic piece 131 and a second drive magnetic piece 132, to be specific, the drive magnetic piece 13 does not include a third drive magnetic piece 133. The first drive coil 14 includes a first drive sub-coil 141 and a second drive sub-coil 142, to be specific, the first drive coil 14 does not include a third drive sub-coil 143. The second drive coil 15 includes a first drive sub-coil 151 and a second drive sub-coil 152, to be specific, the second drive coil 15 does not include a third drive sub-coil 153.

In this implementation, the movable carrier 12 is movably connected to the stationary carrier 11 through a guide bracket 196, so that the movable carrier 12 can move relative to the stationary carrier 11 on an X-Y plane. Details are as follows:

As shown in FIG. 49, the image-stabilization motor 10 further includes the guide bracket 196. The guide bracket 196 includes a first support portion 1961, a second support portion 1962, and a third support portion 1963. The first support portion 1961, the second support portion 1962, and the third support portion 1963 are connected to the first bracket 121 of the movable carrier 12 through a plurality of first support pieces 197, and are connected to the stationary carrier 11 through a plurality of second support pieces 198, to make a direction of relative movement between the movable carrier 12 and the guide bracket 196 different from a direction of relative movement between the guide bracket 196 and the stationary carrier 11. It can be understood that a shape of the guide bracket 196 is not limited to a rectangular shape shown in FIG. 49. For example, the shape of the guide bracket 196 may alternatively be an "L" shape.

For example, the guide bracket 196 may be provided with a plurality of first sliding shaft slots 1964. The plurality of first sliding shaft slots 1964 are arranged facing a same side of the guide bracket 196. There may be three first sliding shaft slots 1964. The three first sliding shaft slots 1964 are located in the first support portion 1961, the second support portion 1962, and the third support portion 1963 respectively. An extension direction of the first sliding shaft slot 1964 may be parallel to the first direction X. The first sliding shift slot 1964 may be recessed from a side surface of a corresponding support portion to the inside of the support portion.

For example, the guide bracket 196 may be further provided with a plurality of second sliding shaft slots 1965, and the plurality of second sliding shaft slots 1965 are arranged facing away from the plurality of first sliding shaft slots 1964. There may be three second sliding shaft slots 1965. The three second sliding shaft slots 1965 are located in the first support portion 1961, the second support portion 1962, and the third support portion 1963 respectively. An extension direction of the second sliding shaft slot 1965 may be parallel to the second direction Y. The second sliding shaft slot 1965 may be recessed from another side surface of a corresponding support portion to the inside of the support portion.

As shown in FIG. 49, the plurality of first support pieces 197 are disposed in the plurality of first sliding shaft slots 1964 in a one-to-one correspondence. The plurality of second support pieces 198 are disposed in the plurality of second sliding shaft slots 1965 in a one-to-one correspondence.

For example, both the first support piece 197 and the second support piece 198 may be of a sliding shaft structure.

It can be understood that the movable carrier 12 is movably connected to the stationary carrier 11 through the guide bracket 196, and the movable carrier 12 is not likely to rotate relative to the stationary carrier 11. A movement mode of the movable carrier 12 is more stable.

It can be understood that the foregoing describes several structures of the image sensor assembly 101 with reference to related accompanying drawings. The following further describes several structures of the image sensor assembly 101.

For example, in the foregoing implementations, the drive magnetic piece 13 is located between the first drive coil 14 and the second drive coil 15. In another implementation, positions of the drive magnetic piece 13, the first drive coil 14, and the second drive coil 15 may be exchanged.

For another example, in the foregoing implementations, the movable carrier 12 and the stationary carrier 11 are press-fit through magnetic attraction. In another implementation, the movable carrier 12 and the stationary carrier 11 may alternatively be press-fit through an elastic element or the like.

For another example, in the foregoing implementations, the movable carrier 12 and the stationary carrier 11 are in contact through a superlubricity solution with a single rolling piece. In another implementation, the movable carrier 12 and the stationary carrier 11 may alternatively be in contact in plurality of manners, for example, superlubricity with a plurality of rolling pieces, a DLC bump, or a sliding shaft.

For another example, in the foregoing implementations, positions of the magnetic-attractive magnetic piece 192 and the magnetic-attractive piece may be exchanged.

The foregoing specifically describes a structure of the image sensor assembly 101 with reference to related accompanying drawings. The following specifically describes another structure of the image sensor assembly 101 with reference to related accompanying drawings. It can be understood that related designs of the image-stabilization motor 10 shown in FIG. 5 to FIG. 49 may also be directly applied to a structural design of an image-stabilization motor 50 in the following descriptions if no conflict occurs.

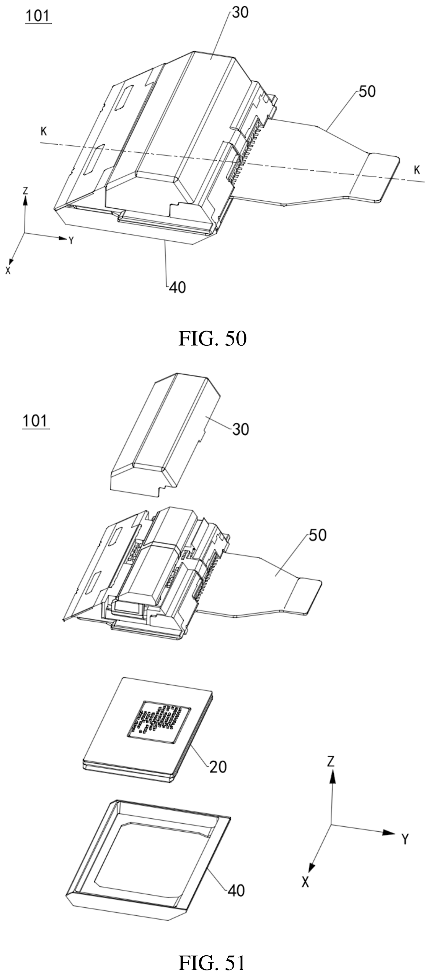

FIG. 50 is a diagram of a structure of the image sensor assembly 101 shown in FIG. 2 according to still another implementation. FIG. 51 is a partial schematic exploded view of the image sensor assembly 101 shown in FIG. 50 according to an implementation.

As shown in FIG. 50 and FIG. 51, the image sensor assembly 101 includes an image-stabilization motor 50, an image sensor module 20, an upper housing 30, and a lower housing 40. For ease of description, a width direction of the image sensor assembly 101 is defined as an X axis, a length direction of the image sensor assembly 101 is a Y axis, and a thickness direction of the image sensor assembly 101 is a Z axis. It can be understood that a coordinate system of the image sensor assembly 101 may be flexibly set according to a specific actual requirement.

It can be understood that the image-stabilization motor 50 may control the image sensor module 20 to move along a plane perpendicular to a third direction Z (that is, an X-Y plane). When the camera module 100 captures ambient light, if the electronic device 1000 shakes on the X-Y plane due to an external force, the image-stabilization motor 50 may control movement of the image sensor module 20 on the X-Y plane, to counteract a shake stroke produced by the camera module 100 on the X-Y plane, to avoid or reduce a position offset of the camera module 100 that is caused by the shake. According to the camera module 100 in this application, movement of the image sensor module 20 on the X-Y plane may be controlled by the image-stabilization motor 50, to implement optical image stabilization (optical image stabilization, OIS) for the camera module 100, and improve imaging quality of the camera module 100.

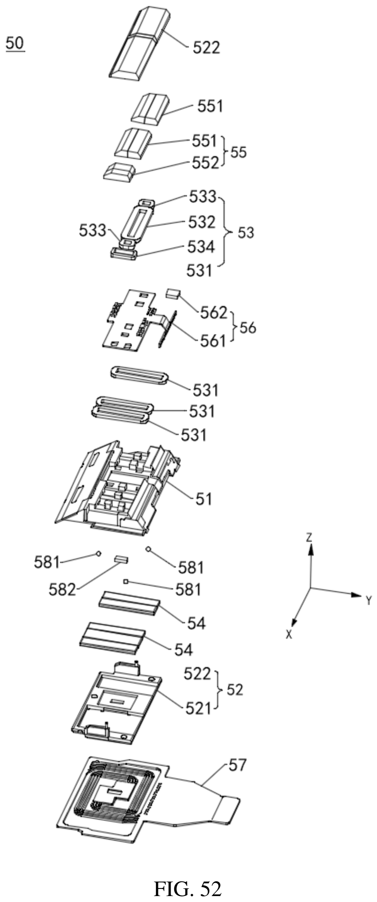

FIG. 52 is a partial schematic exploded view of the image-stabilization motor 50 shown in FIG. 51 according to an implementation.

As shown in FIG. 52, the image-stabilization motor 50 includes a stationary carrier 51, a movable carrier 52 (also referred to as a moving carrier), a drive coil 53, a first drive magnetic piece 54, and a second drive magnetic piece 55. It can be understood that FIG. 52 merely shows some components included in the image-stabilization motor 50 as an example, and actual shapes, actual sizes, and actual structures of the components are not limited by FIG. 52.

For example, the movable carrier 52 includes a first bracket 521 and a second bracket 522.

For example, the drive coil 53 includes a first drive coil 531, a second drive coil 532, a third drive coil 533, and a fourth drive coil 534. For example, there are three first drive coils 531. There is one second drive coil 532. There are two third drive coils 533. There is one fourth drive coil 534. In another implementation, quantities of first drive coils 531, second drive coils 532, third drive coils 533, and fourth drive coils 534 are not specifically limited. In another implementation, the drive coil 53 may alternatively not include the third drive coil 533 and/or the fourth drive coil 534.

For example, there are two first drive magnetic pieces 54. In another implementation, a quantity of first drive magnetic pieces 54 is not specifically limited.

For example, the second drive magnetic piece 55 includes a first drive magnetic sub-piece 551 and a second drive magnetic sub-piece 552. In an implementation, there are two first drive magnetic sub-pieces 551. There is one second drive magnetic sub-piece 552. In another implementation, quantities of first drive magnetic sub-pieces 551 and second drive magnetic sub-pieces 552 are not specifically limited. In another implementation, the second drive magnetic piece 55 may alternatively not include the second drive magnetic sub-piece 552.

It can be understood that the image-stabilization motor 50 may alternatively include more structures. For example, when the image-stabilization motor 50 includes more structures, the image-stabilization motor 50 may further include a circuit board assembly 56, and/or a movable circuit board 57 (also referred to as a TSA or a flexible circuit board), and/or a connecting piece 581, and/or a magnetic-attractive magnetic piece 582. For example, the connecting piece 581 may be a single ball, or may be a ball group including a plurality of balls, or may be a sliding shaft, or may be a protrusion structure. An example in which the connecting piece 581 is a ball is used below for description. For example, there are three connecting pieces 581. There is one magnetic-attractive magnetic piece 582. In another implementation, quantities of connecting pieces 581 and magnetic-attractive magnetic pieces 582 are not specifically limited.

For example, the circuit board assembly 56 may include a drive circuit board 561 and a drive chip 562. The circuit board assembly 56 may alternatively include more structures. For example, the circuit board assembly 56 may further include a position sensor (not shown in the figure).

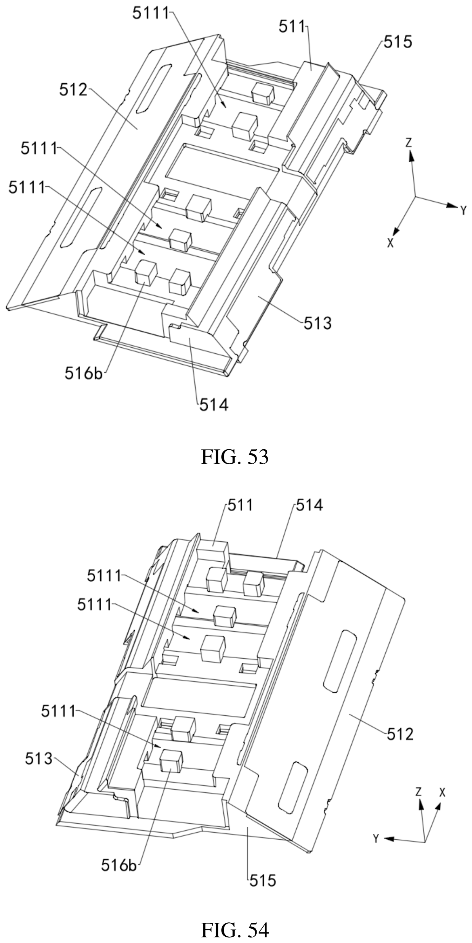

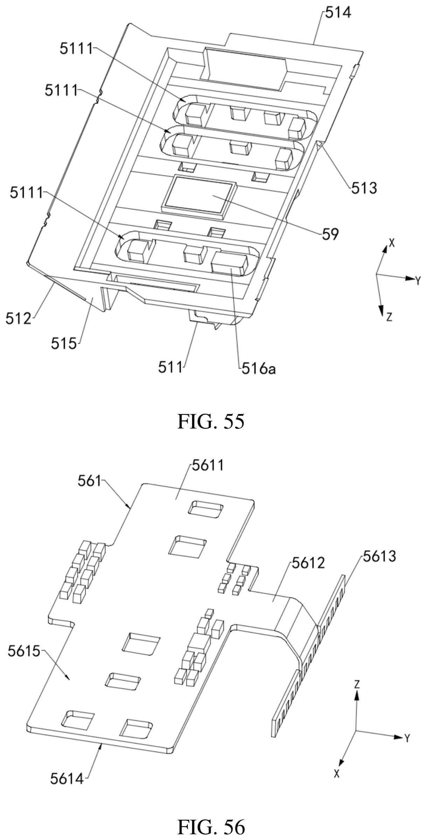

FIG. 53 is a diagram of a structure of the stationary carrier 51 shown in FIG. 52 from another perspective. FIG. 54 is a diagram of a structure of the stationary carrier 51 shown in FIG. 52 from still another perspective. FIG. 55 is a diagram of a structure of the stationary carrier 51 shown in FIG. 52 from yet another perspective.

As shown in FIG. 53 to FIG. 55, the stationary carrier 51 includes a top plate 511, a first side plate 512 and a second side plate 513 that are disposed opposite to each other, and a third side plate 514 and a fourth side plate 515 that are disposed opposite to each other. The top plate 511 is connected between the first side plate 512 and the second side plate 513, and is further connected between the third side plate 514 and the fourth side plate 515. The third side plate 514 and the fourth side plate 515 are connected between the first side plate 512 and the second side plate 513. The top plate 511, the first side plate 512, the second side plate 513, the third side plate 514, and the fourth side plate 515 enclose inner space of the stationary carrier 51.

For example, the top plate 511 and the first side plate 512 are disposed at an obtuse angle; and/or the top plate 511 and the second side plate 513 are disposed at an obtuse angle.

For example, the top plate 511 of the stationary carrier 51 is provided with a mounting hole 5111. The mounting hole 5111 enables communication between the inner space of the stationary carrier 51 and outer space. For example, there may be three mounting holes 5111. The three mounting holes 5111 are arranged in an X-axis direction at spacings. In another implementation, a position, a size, and a shape of the mounting hole 5111 are not specifically limited.

It can be understood that the stationary carrier 51 may be an integrated mechanical part formed by performing in-mold insert-molding (insert-molding) or the like on a metal piece and an insulation piece. In this way, overall strength of the stationary carrier 51 is high.

As shown in FIG. 55, for example, the image-stabilization motor 50 further includes a magnetic-attractive piece 59. For example, the magnetic-attractive piece 59 may be a part of the metal piece of the stationary carrier 51. In another implementation, the magnetic-attractive piece 59 may alternatively be fastened to the stationary carrier 51 through bonding, welding, or the like. For example, the magnetic-attractive piece 59 may be fastened to a surface, facing the inner space of the stationary carrier 51, of the top plate 511 of the stationary carrier 51, or may be embedded in the stationary carrier 51. The magnetic-attractive piece 59 may be made of a magnetic-attractive material, to be specific, a material that can produce a magnetic attraction force with a magnet or another magnetic component, for example, a ferromagnetic material.

FIG. 56 is a diagram of a partial structure of the circuit board assembly 56 shown in FIG. 52 according to an implementation.

As shown in FIG. 56, the motor circuit board 561 includes a mounting portion 5611, a connecting portion 5612, and a pin end portion 5613. The connecting portion 5612 is connected between the mounting portion 5611 and the pin end portion 5613.

For example, the mounting portion 5611 may be approximately in a plate shape. The connecting portion 5612 may be approximately in a bent shape. The pin end portion 5613 may also be approximately in a plate shape. For example, a plate surface of the pin end portion 5613 may be perpendicular to or approximately perpendicular to a plate surface of the mounting portion 5611.

In another implementation, shapes of the mounting portion 5611, the connecting portion 5612, and the pin end portion 5613 of the motor circuit board 561 are not specifically limited.

For example, the mounting portion 5611 includes a first surface 5614 and a second surface 5615 that are arranged in the third direction Z.

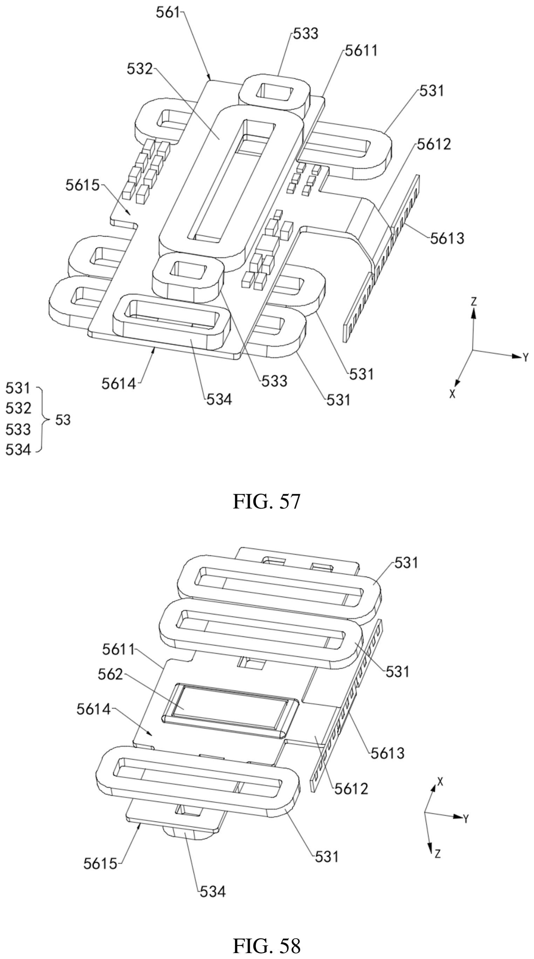

FIG. 57 is a first diagram of a partial structure of the image-stabilization motor 50 shown in FIG. 51 according to an implementation. FIG. 58 is a diagram of a structure of the partial image-stabilization motor 50 shown in FIG. 57 from another perspective.

Refer to FIG. 57 and FIG. 58, together with FIG. 52 and FIG. 56. The drive coil 53 is fastened to the motor circuit board 561, and is electrically connected to the motor circuit board 561. For example, the drive coil 53 may be fastened to the mounting portion 5611 of the motor circuit board 561.

In an implementation, the first drive coil 531 is fastened to the first surface 5614 of the mounting portion 5611, and is electrically connected to the motor circuit board 561. The second drive coil 532, the third drive coil 533, and the fourth drive coil 534 are fastened to the second surface 5615 of the mounting portion 5611, and are electrically connected to the motor circuit board 561. It can be understood that the first drive coil 531 and the second drive coil 532 may be arranged in the third direction Z. The first drive coil 531 and the third drive coil 533 may be arranged in the third direction Z. The first drive coil 531 and the fourth drive coil 534 may be arranged in the third direction Z. In addition, the fourth drive coil 534 and the second drive coil 532 may be disposed at a same layer. In another implementation, a manner of arranging the first drive coil 531, the second drive coil 532, the third drive coil 533, and the fourth drive coil 534 is not specifically limited. For example, if surface space of the first surface 5614 of the mounting portion 5611 permits, the third drive coil 533 and the fourth drive coil 534 may alternatively be fastened to the first surface 5614 of the mounting portion 5611.

For example, there are three first drive coils 531. The three first drive coils 531 may be arranged in a first direction X.

For example, there are a plurality of third drive coils 533. The plurality of third drive coils 533 are located on different sides of the second drive coil 532. For example, there is one second drive coil 532. There are two third drive coils 533. The two third drive coils 533 may be located on two sides of the second drive coil 532 in a length direction. In other words, the second drive coil 532 is located between the two third drive coils 533. It can be understood that the manner of arranging the third drive coil 533 and the second drive coil 532 in this implementation may also be applied to the foregoing manner of arranging the first drive sub-coil 151 and the second drive sub-coil 152 of the image-stabilization motor 10. Details are not described herein again.

For example, the fourth drive coil 534 may be located around the second drive coil 532. In an implementation, the fourth drive coil 534, the third drive coil 533, and the second drive coil 532 may be arranged in the first direction X. For example, there is one fourth drive coil 534. There is one fourth drive coil 534. The fourth drive coil 534 may be located on a side, away from the second drive coil 532, of one third drive coil 533. In another implementation, quantities, sizes, and positions of the first drive coil 531, the second drive coil 532, the third drive coil 533, and the fourth drive coil 534 are not specifically limited in this application.

As shown in FIG. 57 and FIG. 58, the drive chip 562 is fastened to the motor circuit board 561, and is electrically connected to the motor circuit board 561. For example, the drive chip 562 may be fastened to the first surface 5614 of the mounting portion 5611 of the motor circuit board 561. In another implementation, a position of the drive chip 562 is not specifically limited. For example, if surface space of the second surface 5615 of the mounting portion 5611 permits, the drive chip 562 may alternatively be fastened to the second surface 5615 of the mounting portion 5611.

It can be understood that the drive coil 53 is electrically connected to the drive chip 562 through the motor circuit board 561. The drive chip 562 may control a current status (for example, whether a current is supplied, or a current value in a case in which a current is supplied) of the drive coil 53.

For example, all of the first drive coil 531, the second drive coil 532, the third drive coil 533, and the fourth drive coil 534 may be electrically connected to the drive chip 562 through the motor circuit board 561. The drive chip 562 may control current statuses (for example, whether a current is supplied, or a current value in a case in which a current is supplied) of the first drive coil 531, the second drive coil 532, the third drive coil 533, and the fourth drive coil 534.

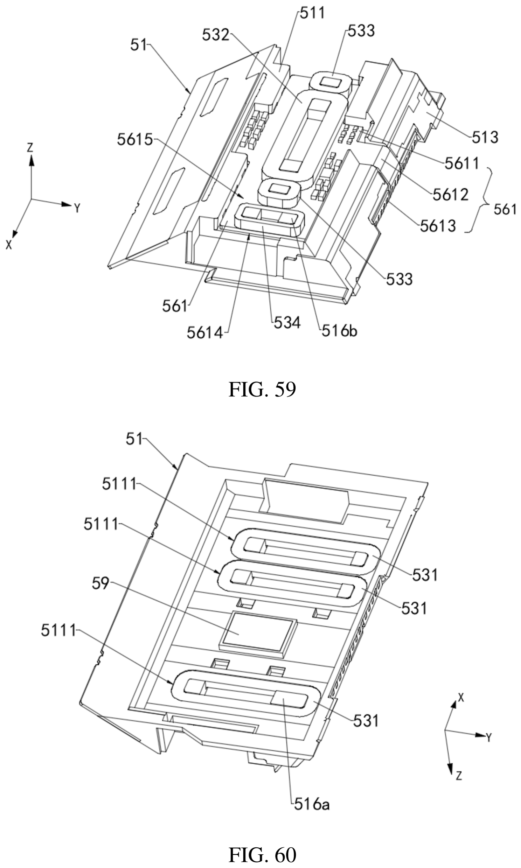

FIG. 59 is a second diagram of a partial structure of the image-stabilization motor 50 shown in FIG. 51 according to an implementation. FIG. 60 is a diagram of a structure of the partial image-stabilization motor 50 shown in FIG. 59 from another perspective.

Refer to FIG. 59 and FIG. 60, together with FIG. 57 and FIG. 58. The motor circuit board 561 is fastened to the stationary carrier 51. In this case, the drive coil 53 is fastened to the stationary carrier 51 through the motor circuit board 561.

For example, the first surface 5614 of the mounting portion 5611 of the motor circuit board 561 is fastened to a side, away from the inner space of the stationary carrier 51, of the top plate 511 of the stationary carrier 51. The pin end portion 5613 of the motor circuit board 561 is fastened to a side, away from the inner space of the stationary carrier 51, of the second side plate 513 of the stationary carrier 51. In this way, the motor circuit board 561 extends from the top plate 511 of the stationary carrier 51 to the second side plate 513 of the stationary carrier 51. It can be understood that the second drive coil 532, the third drive coil 533, and the fourth drive coil 534 are located on the side, away from the inner space of the stationary carrier 51, of the top plate 511 of the stationary carrier 51. All of the second drive coil 532, the third drive coil 533, and the fourth drive coil 534 may be located on an outer side of the stationary carrier 51. In addition, the drive chip 562 (refer to FIG. 58) may be located between the motor circuit board 561 and the top plate 511 of the stationary carrier 51. The motor circuit board 561 and the top plate 511 of the stationary carrier 51 may be further configured to protect the drive chip 562 (refer to FIG. 58).

Refer to FIG. 60, together with FIG. 55 and FIG. 58. At least a part of the first drive coil 531 is located in the mounting hole 5111 of the stationary carrier 51, and is exposed relative to the inner space of the stationary carrier 51. It can be understood that, when there are a plurality of first drive coils 531 and a plurality of mounting holes 5111, the plurality of first drive coils 531 are disposed in the plurality of mounting holes 5111 in a one-to-one correspondence. For example, when there are three first drive coils 531 and three mounting holes 5111, the three first drive coils 531 are disposed in the three mounting holes 5111 in a one-to-one correspondence. In this way, in a Z-axis direction, the first drive coil 531 and the stationary carrier 51 have an overlapping region, so that a dimension in the Z-axis direction can be reduced.

For example, when there are three first drive coils 531, two first drive coils 531 are located on one side of the magnetic-attractive piece 59, and the other first drive coil 531 is located on another side of the magnetic-attractive piece 59. This can prevent mounting positions of the three first drive coils 531 from greatly affecting a mounting position of the magnetic-attractive piece 59, so that the magnetic-attractive piece 59 can be disposed close to a center position of the stationary carrier 51 as much as possible.

Refer to FIG. 60, together with FIG. 55 and FIG. 58. For example, the stationary carrier 51 has a plurality of first position-limiting blocks 516a, and the plurality of first position-limiting blocks 516a are configured to perform position limiting for the first drive coil 531, to improve stability of a connection between the first drive coil 531 and the stationary carrier 51. It can be understood that FIG. 55 and FIG. 60 merely show one first position-limiting block 516a as an example.

Refer to FIG. 59, together with FIG. 53, FIG. 54, and FIG. 57. For example, the stationary carrier 51 has a plurality of second position-limiting blocks 516b. The plurality of second position-limiting blocks 516b may pass through the motor circuit board 561, and are configured to perform position limiting for the second drive coil 532, the third drive coil 533, and the fourth drive coil 534, to improve stability of connections between the stationary carrier 51 and the second drive coil 532, the third drive coil 533, and the fourth drive coil 534. It can be understood that FIG. 53, FIG. 54, and FIG. 59 merely show one second position-limiting block 516b as an example.

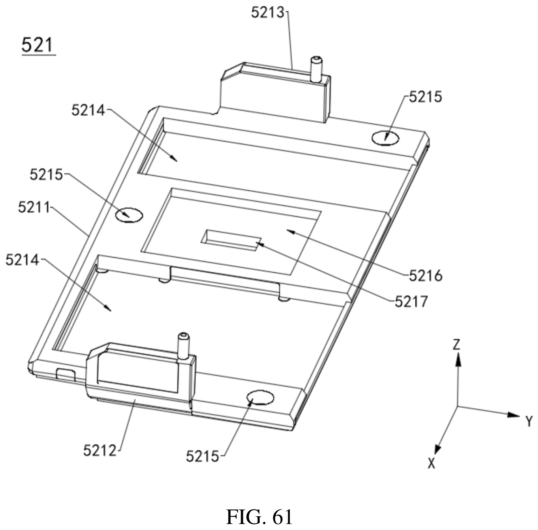

FIG. 61 is a schematic enlarged view of the first bracket 521 shown in FIG. 52 according to an implementation.

As shown in FIG. 61, the first bracket 521 includes a bottom plate 5211, a first bump 5212, and a second bump 5213. The first bump 5212 and the second bump 5213 are convexly disposed on a same side of the bottom plate 5211. The bottom plate 5211, the first bump 5212, and the second bump 5213 enclose inner space of the first bracket 521.

For example, the bottom plate 5211 is provided with a first mounting slot 5214. An opening of the first mounting slot 5214 is located in the inner space of the first bracket 521. In an implementation, there are two first mounting slots 5214. In another implementation, a quantity, a shape, and a size of the first mounting slot 5214 are not specifically limited.

For example, the bottom plate 5211 is further provided with a first groove 5215. An opening of the first groove 5215 is located in the inner space of the first bracket 521. The first groove 5215 may be spaced away from the first mounting slot 5214. In an implementation, there are a plurality of first grooves 5215. The plurality of first grooves 5215 are arranged at spacings. For example, there are three first grooves 5215. In another implementation, a quantity of first grooves 5215 is not specifically limited.

For example, the bottom plate 5211 is further provided with a second mounting slot 5216. An opening of the second mounting slot 5216 is located in the inner space of the first bracket 521. The second mounting slot 5216 may be spaced away from the first mounting slot 5214 and the first groove 5215. The second mounting slot 5216 may be located between two first mounting slots 5214.

For example, the bottom plate 5211 further has a third mounting slot 5217. An opening of the third mounting slot 5217 is located in the second mounting slot 5216.

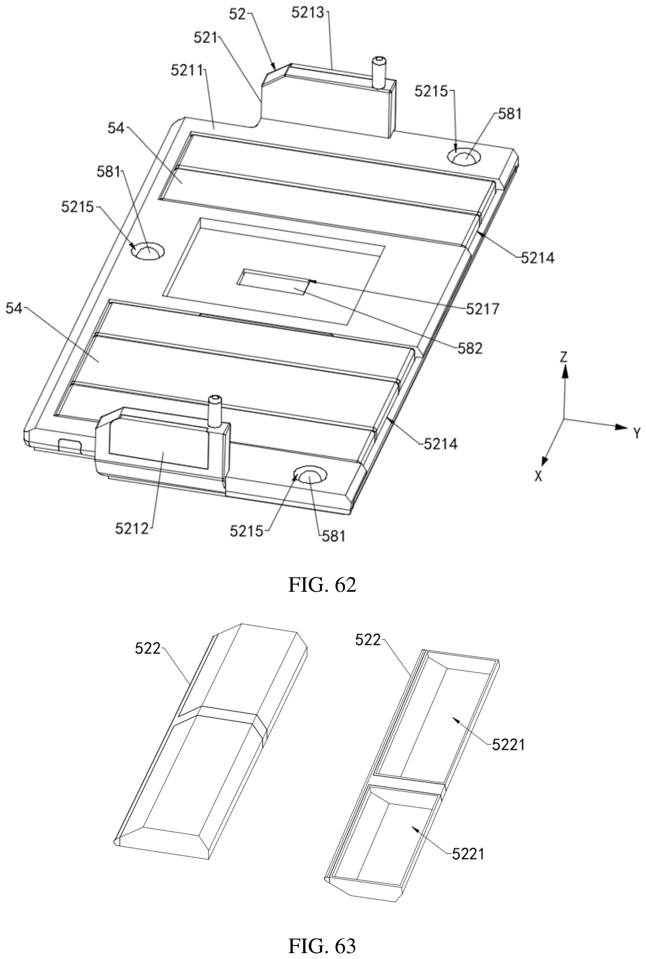

FIG. 62 is a third diagram of a partial structure of the image-stabilization motor 50 shown in FIG. 51 according to an implementation.

As shown in FIG. 62, the first drive magnetic piece 54 is fastened to the movable carrier 52. In an implementation, the first drive magnetic piece 54 is fastened to the bottom plate 5211 of the first bracket 521. The first drive magnetic piece 54 may be located in the inner space of the first bracket 521, in other words, between the first bump 5212 and the second bump 5213.

For example, the first drive magnetic piece 54 may be fastened in the first mounting slot 5214. When there are a plurality of first drive magnetic pieces 54 and a plurality of first mounting slots 5214, the plurality of first drive magnetic pieces 54 are disposed in the plurality of first mounting slots 5214 in a one-to-one correspondence. For example, there are two first drive magnetic pieces 54 and two first mounting slots 5214. The two first drive magnetic pieces 54 are disposed in the two first mounting slots 5214 in a one-to-one correspondence.

It can be understood that the first drive magnetic piece 54 may include a plurality of magnets, and the plurality of magnets are arranged in the first direction X. The first drive magnetic piece 54 may be implemented in a plurality of structures. For example, the first drive magnetic piece 54 may include at least three magnets. Among three adjacent magnets, polarity directions of two adjacent magnets are opposite. For another example, the first drive magnetic piece 54 may be of a dual-magnet structure. For example, the first drive magnetic piece 54 includes two magnets, and polarity directions of the two magnets are opposite. For another example, the first drive magnetic piece 54 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. For another example, the first drive magnetic piece 54 may be a Halbach magnet array. For another example, the first drive magnetic piece 54 may be arranged in a form of a plurality of Halbach magnet combination arrays, to further compress distribution of magnetic induction lines, effectively increase a magnetic thrust, and improve utilization of the magnetic induction lines. A structure of the first drive magnetic piece 54 may be implemented in a plurality of manners. This is not specifically limited in this application. A polarity direction may be a direction from a north pole (N) to a south pole (S), or a direction from a south pole (S) to a north pole (N).

It can be understood that, when there is one first drive magnetic piece 54, the first drive magnetic piece 54 may be of any one of the foregoing structures. When there are a plurality of first drive magnetic pieces 54, the first drive magnetic pieces 54 may be of a same structure. To be specific, the first drive magnetic pieces 54 may be of any one of the foregoing structures. When there are a plurality of first drive magnetic pieces 54, the first drive magnetic pieces 54 may be of different structures. To be specific, structures of different first drive magnetic pieces 54 may be any combination of the foregoing structures.

In this implementation, there are two first drive magnetic pieces 54. A structure of one first drive magnetic piece 54 includes three magnets. Among three adjacent magnets, polarity directions of two adjacent magnets are opposite. A structure of the other first drive magnetic piece 54 includes two magnets, and polarity directions of the two magnets are opposite.

As shown in FIG. 62, the connecting piece 581 is disposed on the movable carrier 52. In an implementation, the connecting piece 581 is disposed in the first groove 5215 of the first bracket 521. When there are a plurality of connecting pieces 581 and a plurality of first grooves 5215, the plurality of connecting pieces 581 are disposed in the plurality of first grooves 5215 in a one-to-one correspondence.

It can be understood that, when the connecting piece 581 is a ball, the connecting piece 581 may be connected to the movable carrier 52. To be specific, the connecting piece 581 may move in the first groove 5215. For example, lubricating grease may be applied between the connecting piece 581 and the first groove 5215, to reduce a friction force between the connecting piece 581 and the movable carrier 52. When the connecting piece 581 is of a sliding shaft structure or a protrusion structure, the connecting piece 581 may be fastened to the movable carrier 52.

As shown in FIG. 62, the magnetic-attractive magnetic piece 582 is fastened to the movable carrier 52. In an implementation, the magnetic-attractive magnetic piece 582 is fastened in the third mounting slot 5217 of the first bracket 521. When there are a plurality of magnetic-attractive magnetic pieces 582 and a plurality of third mounting slots 5217, the plurality of magnetic-attractive magnetic pieces 582 are disposed in the plurality of third mounting slots 5217 in a one-to-one correspondence. It can be understood that both connecting piece 581 and the magnetic-attractive magnetic piece 582 are disposed on the first bracket 521, in other words, both connecting piece 581 and the magnetic-attractive magnetic piece 582 are disposed on a same mechanical part. In this way, when the first bracket 521 performs relative movement, relative positions of the connecting piece 581 and the magnetic-attractive magnetic piece 582 are not likely to change greatly.

For example, the magnetic-attractive magnetic piece 582 may be disposed close to a center position of the bottom plate 5211 of the first bracket 521 as much as possible.

FIG. 63 is a diagram of a structure of the second bracket 522 shown in FIG. 52 from different perspectives according to an implementation.

As shown in FIG. 63, the second bracket 522 is provided with a fastening slot 5221. For example, there are two fastening slots 5221. The two fastening slots 5221 are spaced apart. In another implementation, a quantity, a size, and a shape of the fastening slot 5221 are not specifically limited.

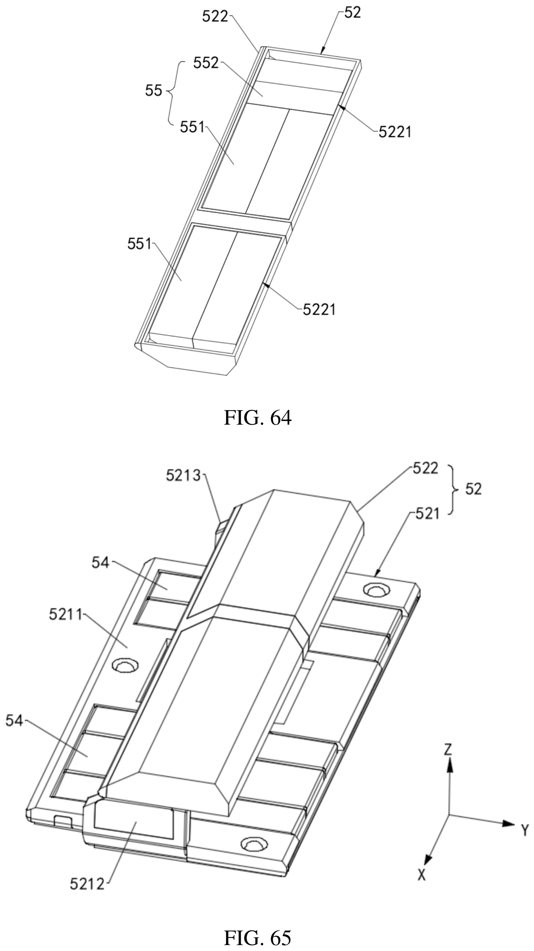

FIG. 64 is a fourth diagram of a partial structure of the image-stabilization motor 50 shown in FIG. 51 according to an implementation.

Refer to FIG. 64, together with FIG. 63. The second drive magnetic piece 55 is fastened to the movable carrier 52. In an implementation, the second drive magnetic piece 55 is fastened in the fastening slot 5221 of the second bracket 522.

For example, when the second drive magnetic piece 55 includes two first drive magnetic sub-pieces 551 and there are two fastening slots 5221, the two first drive magnetic sub-pieces 551 are fastened in the two fastening slots 5221 in a one-to-one correspondence. When the second drive magnetic piece 55 includes one second drive magnetic sub-piece 552, the second drive magnetic sub-piece 552 is fastened in one fastening slot 5221. The second drive magnetic sub-piece 552 may be located at an end of one first drive magnetic sub-pieces 551. It can be understood that the second drive magnetic sub-piece 552 and the first drive magnetic sub-piece 551 may be disposed at a same layer. In another implementation, positions between the second drive magnetic sub-piece 552 and the first drive magnetic sub-piece 551 are not specifically limited.

It can be understood that the first drive magnetic sub-piece 551 may include a plurality of magnets, and the plurality of magnets are arranged in a second direction Y. The first drive magnetic sub-piece 551 may be implemented in a plurality of structures. For example, the first drive magnetic sub-piece 551 may be of a dual-magnet structure. For example, the first drive magnetic sub-piece 551 includes two magnets, and polarity directions of the two magnets are opposite. For another example, the first drive magnetic sub-piece 551 may include at least three magnets. Among three adjacent magnets, polarity directions of two adjacent magnets are opposite. For another example, the first drive magnetic sub-piece 551 may include at least three magnets. Among three adjacent magnets, polarization directions of two magnets located on sides are opposite to each other and are perpendicular to an arrangement direction of the three magnets, and a polarization direction of a magnet located in the middle is from one magnet to the other magnet. For another example, the first drive magnetic sub-piece 551 may be a Halbach magnet array. For another example, the first drive magnetic sub-piece 551 may be arranged in a form of a plurality of Halbach magnet combination arrays, to further compress distribution of magnetic induction lines, effectively increase a magnetic thrust, and improve utilization of the magnetic induction lines.

It can be understood that, when there is one first drive magnetic sub-piece 551, the first drive magnetic sub-piece 551 may be of any one of the foregoing structures of the first drive magnetic sub-piece 551. When there are a plurality of first drive magnetic sub-pieces 551, the first drive magnetic sub-pieces 551 may be of a same structure. To be specific, the first drive magnetic sub-pieces 551 may be of any one of the foregoing structures of the first drive magnetic sub-piece 551. When there are a plurality of first drive magnetic sub-pieces 551, the first drive magnetic sub-pieces 551 may be of different structures. To be specific, structures of different first drive magnetic sub-pieces 551 may be any combination of the foregoing structures of the first drive magnetic sub-piece 551.

In this implementation, there are two first drive magnetic sub-pieces 551. Both of the two first drive magnetic sub-pieces 551 may be of a dual-magnet structure. For example, the first drive magnetic sub-piece 551 includes two magnets, and polarity directions of the two magnets are opposite.

It can be understood that the second drive magnetic sub-piece 552 may include a plurality of magnets, and the plurality of magnets are arranged in the first direction X. For a specific structure of the second drive magnetic sub-piece 552, refer to the specific structure of the first drive magnetic piece 54. Details are not described herein again.

FIG. 65 is a fifth diagram of a partial structure of the image-stabilization motor 50 shown in FIG. 51 according to an implementation.

Refer to FIG. 65, together with FIG. 62 and FIG. 64. The second bracket 522 is fastened to the first bump 5212 and the second bump 5213 of the first bracket 521, and is disposed opposite to the bottom plate 5211 of the first bracket 521 at a spacing. The first bracket 521 and the second bracket 522 form the movable carrier 52. It can be understood that, because the movable carrier 52 may be formed by assembling the first bracket 521 and the second bracket 522, when the movable carrier 52 is assembled with another mechanical part, the first bracket 521 and the second bracket 522 may be first assembled with the another mechanical part, and then the second bracket 522 is fastened to the first bracket 521. In this assembly manner, assembly of the another mechanical part and the movable carrier 52 can be simplified.

For example, the second bracket 522 may be fastened to the first bump 5212 and the second bump 5213 through bonding.

For example, the first bump 5212, the second bump 5213, and the second bracket 522 each include a metal part. Both a metal part of the first bump 5212 and a metal part of the second bump 5213 are welded to a metal part of the second bracket 522.

For example, the second bracket 522 may alternatively be matched with the first bump 5212 and the second bump 5213 through positioning posts, to improve stability of a connection between the second bracket 522 and the first bracket 521.

Refer to FIG. 65, together with FIG. 62 and FIG. 64. The first drive magnetic piece 54 and the second drive magnetic piece 55 may be disposed opposite to each other at a spacing.

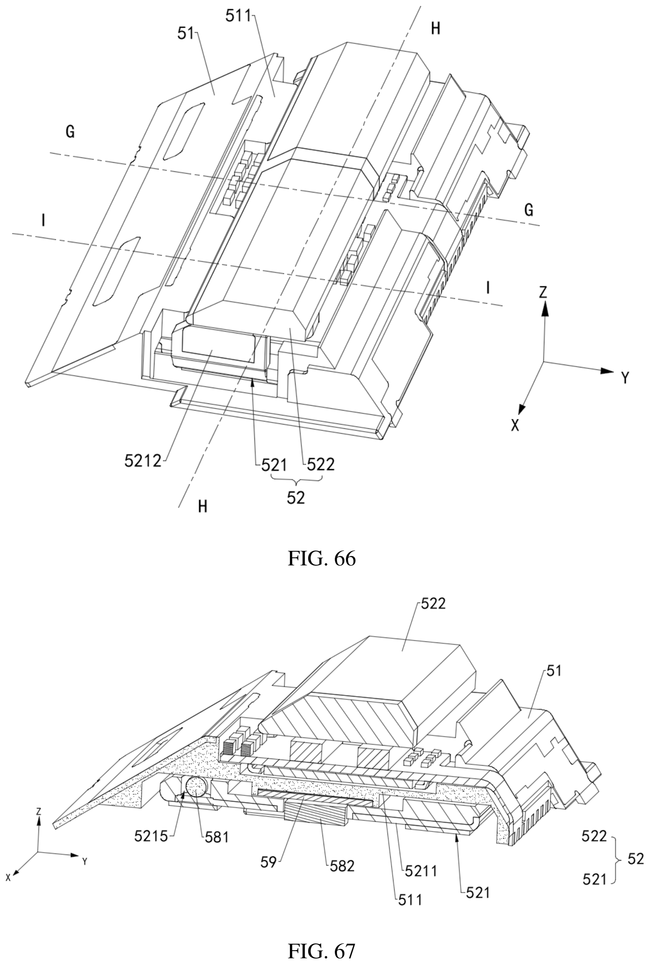

FIG. 66 is a sixth diagram of a partial structure of the image-stabilization motor 50 shown in FIG. 51 according to an implementation. FIG. 67 is a partial sectional view of the image-stabilization motor 50 shown in FIG. 66 along a line G-G according to an implementation.

Refer to FIG. 66 and FIG. 67, together with FIG. 65. The movable carrier 52 is movably connected to the stationary carrier 51. For example, the movable carrier 52 may be movably connected to the stationary carrier 51 through the connecting piece 581.

For example, when the connecting piece 581 is a ball, the connecting piece 581 may be in contact with a metal part of the stationary carrier 51. In this way, a friction force between the connecting piece 581 and the stationary carrier 51 is small. This facilitates stable movement of the movable carrier 52 relative to the stationary carrier 51.

For example, lubricating grease is applied between the connecting piece 581 and the first groove 5215. This can further reduce a friction force between the connecting piece 581 and the stationary carrier 51, to better implement a ball-based superlubricity system. In addition, the connecting piece 581 is not likely to be detached from the first groove 5215.

For example, a part of the top plate 511 of the stationary carrier 51 is located between the bottom plate 5211 of the first bracket 521 and the second bracket 522. A part of the top plate 511 of the stationary carrier 51 may be disposed opposite to the bottom plate 5211 of the first bracket 521 at a spacing. A part of the top plate 511 of the stationary carrier 51 may be disposed opposite to the second bracket 522 at a spacing.

For example, the bottom plate 5211 of the first bracket 521 is located in the inner space of the stationary carrier 51. The first bump 5212 of the first bracket 521 may pass through the stationary carrier 51 from the inner space of the stationary carrier 51, and extend to the outer space of the stationary carrier 51. In addition, for a positional relationship between the second bump 5213 (refer to FIG. 62) of the first bracket 521 and the stationary carrier 51, refer to the positional relationship between the first bump 5212 of the first bracket 521 and the stationary carrier 51. Details are not described herein again.

As shown in FIG. 66 and FIG. 67, the magnetic-attractive magnetic piece 582 is disposed opposite to the magnetic-attractive piece 59. A magnetic attraction force may be produced between the magnetic-attractive magnetic piece 582 and the magnetic-attractive piece 59. The magnetic attraction force can enable the movable carrier 52 to tend to approach the stationary carrier 51, so that the stationary carrier 51, the connecting piece 581, and the movable carrier 52 remain in contact. In this way, the movable carrier 52 can be stably attached to the stationary carrier 51 in the Z-axis direction, and when the movable carrier 52 moves relative to the stationary carrier 51, the movable carrier 52 achieves higher stability.

It can be understood that a position of the magnetic-attractive magnetic piece 582 may be properly arranged, to better avoid and balance overall magnetic interference of the image-stabilization motor 50, in other words, to avoid magnetic interference between the magnetic-attractive magnetic piece 582 and the first drive magnetic piece 54 (refer to FIG. 65) and the second drive magnetic piece 55 (refer to FIG. 64) as much as possible.

It can be understood that both the connecting piece 581 and the magnetic-attractive magnetic piece 582 are disposed on the movable carrier 52, so that when the movable carrier 52 moves relative to the stationary carrier 51, relative positions of the connecting piece 581 and the magnetic-attractive magnetic piece 582 are not likely to change greatly. Particularly, when there are a plurality of connecting pieces 581 and a plurality of magnetic-attractive magnetic pieces 582, relative positions of a center of contact between the plurality of connecting pieces 581 and the stationary carrier 51 and a center of magnetic attraction forces of the plurality of magnetic-attractive magnetic pieces 582 are not likely to change. In this case, when the movable carrier 52 moves relative to the stationary carrier 51, the movable carrier 52 achieves high stability. To be specific, stable press-fitting and smooth movement are implemented between the movable carrier 52 and the stationary carrier 51.

For example, the plurality of connecting pieces 581 are disposed around the magnetic-attractive magnetic piece 192.

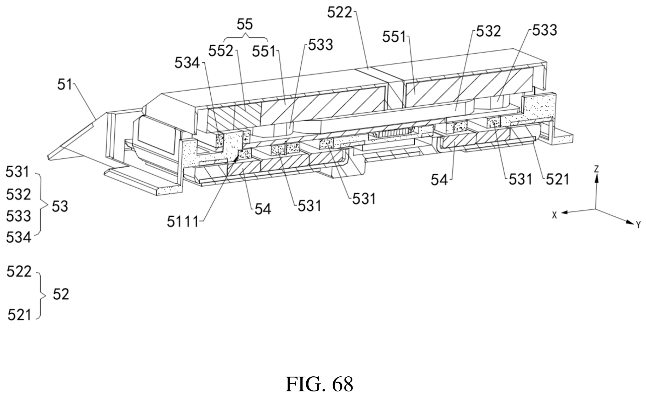

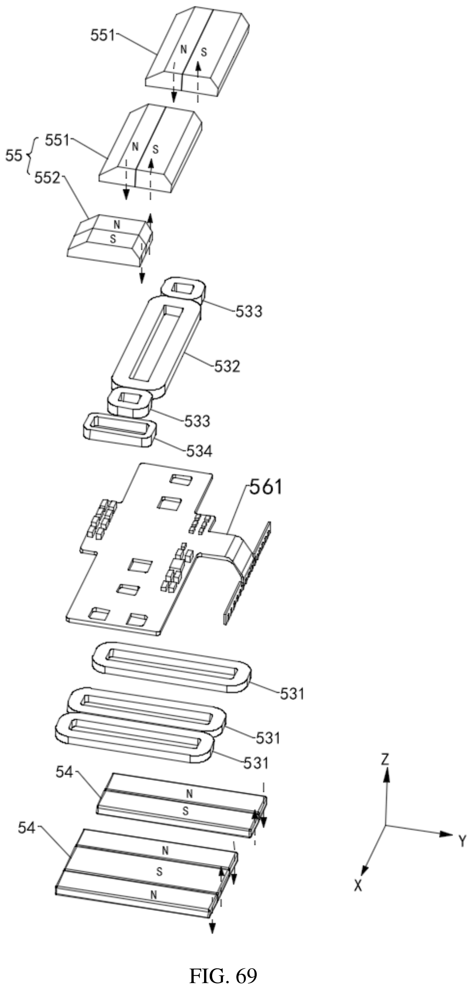

FIG. 68 is a partial sectional view of the image-stabilization motor 50 shown in FIG. 66 along a line H-H according to an implementation. FIG. 69 is a partial exploded view of the image-stabilization motor 50 shown in FIG. 51 according to an implementation.

As shown in FIG. 68 and FIG. 69, the drive coil 53 is located between the first drive magnetic piece 54 and the second drive magnetic piece 55. The drive coil 53 faces the first drive magnetic piece 54 and the second drive magnetic piece 55, to drive the movable carrier 52 to move relative to the stationary carrier 51, to implement optical image stabilization.

As shown in FIG. 68 and FIG. 69, the first drive coil 531 faces the first drive magnetic piece 54, to drive the movable carrier 52 to move relative to the stationary carrier 51 in the first direction X. For example, there are two first drive magnetic pieces 54. There are three first drive coils 531. The two first drive coils 531 face a same first drive magnetic piece 54.

It can be understood that, that the first drive coil 531 is disposed facing the first drive magnetic piece 54 means that a winding plane of the first drive coil 531 faces the first drive magnetic piece 54. For example, the winding plane of the first drive coil 531 may be arranged parallel to the X-Y plane. For example, the first drive magnetic piece 54 may have at least two opposite polarity directions (indicated by dashed lines with arrows in FIG. 69, where FIG. 69 shows an example in which one first drive magnetic piece 54 includes three polarity directions, where two adjacent polarity directions are opposite, and the other first drive magnetic piece 54 includes two opposite polarity directions). The polarity directions of the first drive magnetic piece 54 may be perpendicular to the winding plane of the first drive coil 531. Coils in two regions of each first drive coil 531 may be disposed in correspondence with the two polarity directions of the first drive magnetic piece 54 respectively, and current flow directions in the coils in the two regions are opposite to each other. A side, facing the first drive coil 531, of the first drive magnetic piece 54 includes a south pole (S) and a north pole (N). A side, facing away from the first drive coil 531, of the first drive magnetic piece 54 correspondingly includes a north pole (N) and a south pole (S). It can be understood that, because a polarity on the side, facing away from the first drive coil 531, of the first drive magnetic piece 54 is blocked, FIG. 69 shows only a polarity on the side, facing the first drive coil 531, of the first drive magnetic piece 54 as an example.

It can be understood that, because at least a part of the first drive coil 531 is located in the mounting hole 5111 of the stationary carrier 51, the stationary carrier 51 no longer isolates the first drive coil 531 from the first drive magnetic piece 54, so that the first drive coil 531 is disposed close to the first drive magnetic piece 54 as much as possible.

For example, the image-stabilization motor 50 may also include a first position sensor (not shown in the figure). The first position sensor (not shown in the figure) may be fastened to the motor circuit board 561 and electrically connected to the motor circuit board 561. The first position sensor (not shown in the figure) is configured to detect a change in a displacement of the movable carrier 52 moving relative to the stationary carrier 51 in the first direction X.

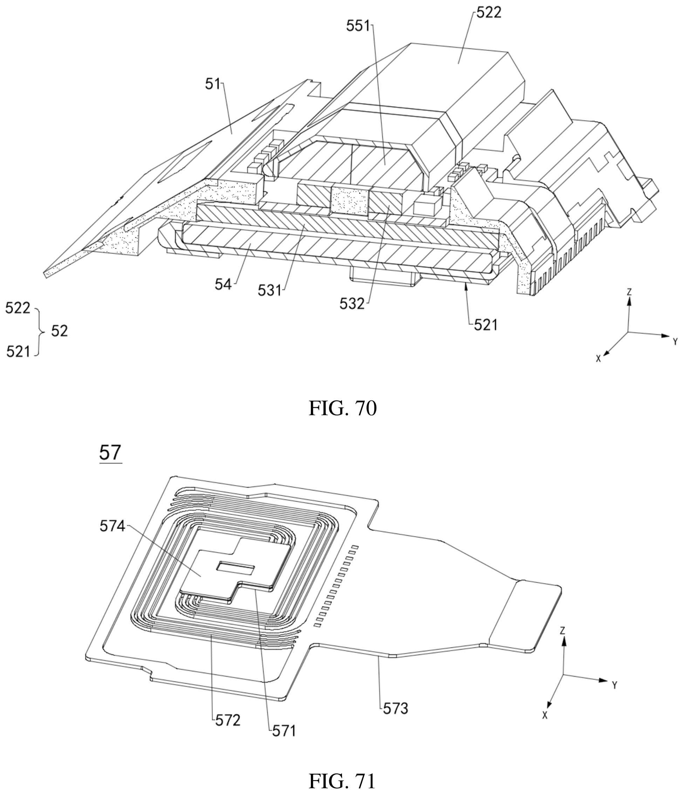

FIG. 70 is a partial sectional view of the image-stabilization motor 50 shown in FIG. 66 along a line I-I according to an implementation.

Refer to FIG. 70, together with FIG. 68 and FIG. 69. The second drive coil 532 faces the first drive magnetic sub-piece 551, to drive the movable carrier 52 to move relative to the stationary carrier 51 in the second direction Y. For example, there is one second drive coil 532. There are two first drive magnetic sub-pieces 551. One second drive coil 532 faces two first drive magnetic sub-pieces 551.

It can be understood that, that the second drive coil 532 is disposed facing the first drive magnetic sub-piece 551 means that a winding plane of the second drive coil 532 faces the first drive magnetic sub-piece 551. For example, the winding plane of the second drive coil 532 may be arranged parallel to the X-Y plane. For example, each first drive magnetic sub-piece 551 may include at least two opposite polarity directions (indicated by dashed lines with arrows in FIG. 69), and the polarity directions of the first drive magnetic sub-piece 551 may be perpendicular to the winding plane of the second drive coil 532. Coils in two regions of the second drive coil 532 may be disposed in correspondence with the two polarity directions of the first drive magnetic sub-piece 551 respectively, and current flow directions in the coils in the two regions are opposite to each other. For example, a magnet in the middle of one first drive magnetic sub-piece 551 corresponds to coils in specific regions of two second drive coils 532. In addition, a side, facing the second drive coil 532, of the first drive magnetic sub-piece 551 includes a north pole (N) and a south pole (S). A side, facing away from the second drive coil 532, of the first drive magnetic sub-piece 551 correspondingly includes a south pole (S) and a north pole (N). It can be understood that, because a polarity on the side, facing the second drive coil 532, of the first drive magnetic sub-piece 551 is blocked, FIG. 69 shows only a polarity on the side, facing the second drive coil 532, of the first drive magnetic sub-piece 551 as an example.

For example, the image-stabilization motor 50 may also include a second position sensor (not shown in the figure). The second position sensor (not shown in the figure) may be fastened to the motor circuit board 561 and electrically connected to the motor circuit board 561. The second position sensor (not shown in the figure) is configured to detect a change in a displacement of the movable carrier 52 moving relative to the stationary carrier 51 in the second direction Y.

As shown in FIG. 68 and FIG. 69, the third drive coil 533 faces the first drive magnetic sub-piece 551 of the second drive magnetic piece 55, to drive the movable carrier 52 to rotate relative to the stationary carrier 51. For example, there are two third drive coils 533. The two third drive coils 533 are disposed facing the two first drive magnetic sub-pieces 551 in a one-to-one correspondence. For a manner of disposing the third drive coil 533 and the first drive magnetic sub-piece 551, refer to the manner of disposing the second drive coil 532 and the first drive magnetic sub-piece 551. Details are not described herein again.

It can be understood that the two third drive coils 533 are disposed in series, and current directions of the two third drive coils 533 are opposite, so that the two third drive sub-coils 533 are subject to opposite acting forces after the two third drive sub-coils 533 are energized. For example, when a 1^{st} third drive coil 533 is subject to an acting force in a positive direction of the Y axis, a 2^{nd} third drive coil 533 is subject to an acting force in a negative direction of the Y axis. In this case, torques applied by the two third drive coils 533 to the movable carrier 52 enable the movable carrier 52 to rotate relative to the stationary carrier 51.

It can be understood that the third drive coil 533 and the first drive magnetic sub-piece 551 are disposed, to implement rotation compensation around the Z-axis direction. For example, when the movable carrier 52 rotates clockwise relative to the stationary carrier 51, a direction and a magnitude of a current on the second drive sub-coil of the second drive coil 532 may be controlled, to obtain a compensation driving force for the movable carrier 52 to rotate counterclockwise relative to the stationary carrier 51, to implement rotation compensation for the movable carrier 52 around the Z-axis direction. In addition, because the third drive coil 533 and the second drive coil 532 may share a same first drive magnetic sub-piece 551, a structure of the image-stabilization motor 50 is simplified. This facilitates miniaturization of the image-stabilization motor 50.

It can be understood that the third drive coil 533 and the second drive coil 532 may share the first drive magnetic sub-piece 551. Therefore, a structure of the image-stabilization motor 50 in this implementation is simple.

It can be understood that a change in a rotation angle of the movable carrier 52 relative to the stationary carrier 51 may also be detected by a position sensor. For example, a third position sensor and a fourth position sensor are disposed, and both the third position sensor and the fourth position sensor may be fastened to the motor circuit board 561 and electrically connected to the motor circuit board 561. The third position sensor may be configured to detect a first displacement variation of the movable carrier 52 moving relative to the stationary carrier 51 in the first direction X. The fourth position sensor may be configured to detect a second displacement variation of the movable carrier 52 moving relative to the stationary carrier 51 in the first direction X. The third position sensor and the fourth position sensor cooperate with each other to detect a change in a rotation angle of the movable carrier 12 relative to the stationary carrier 11. For another example, a third position sensor is disposed, and the third position sensor cooperates with the first position sensor to detect a change in a rotation angle of the movable carrier 12 relative to the stationary carrier 11. For another example, a third position sensor is disposed, and the third position sensor cooperate with the second position sensor to detect a change in a rotation angle of the movable carrier 12 relative to the stationary carrier 11.

As shown in FIG. 68 and FIG. 69, the fourth drive coil 534 faces the second drive magnetic sub-piece 552, to drive the movable carrier 52 to move relative to the stationary carrier 51 in the first direction X. For example, there is one fourth drive coil 534. There is one second drive magnetic sub-piece 552. For a manner of disposing the fourth drive coil 534 and the second drive magnetic sub-piece 552, refer to the manner of disposing the first drive coil 531 and the first drive magnetic piece 54. Details are not described herein again.

It can be understood that, when a requirement for a driving force to drive the movable carrier 52 to move in the second direction Y is met, if space between the second bracket 522 and the stationary carrier 51 permits, the fourth drive coil 534 may be additionally disposed at a layer at which the second drive coil 532 is located, the second drive magnetic sub-piece 552 is additionally disposed at a layer at which the first drive magnetic sub-piece 551 is located, and the fourth drive coil 534 and the second drive magnetic sub-piece 552 are used to drive the movable carrier 52 to move relative to the stationary carrier 51 in the first direction X. In this case, the fourth drive coil 534 and the second drive magnetic sub-piece 552 may cooperate with the first drive coil 531 and the first drive magnetic piece 54, to greatly increase a driving force for the movable carrier 52 to move relative to the stationary carrier 51 in the first direction X. This helps increase a stroke of the movable carrier 52 to move relative to the stationary carrier 51 in the first direction X.

FIG. 71 is a schematic enlarged view of the movable circuit board 57 shown in FIG. 52 according to an implementation.

As shown in FIG. 71, the movable circuit board 57 includes a first stationary portion 571, an elastic portion 572, and a second stationary portion 573. The elastic portion 572 is connected between the first stationary portion 571 and the second stationary portion 573.

For example, the elastic portion 572 is in a spiral shape, a broken-line shape, or a curved shape. This can increase a length of the elastic portion 572, to greatly reduce an elasticity coefficient of the elastic portion 572.

For example, a length of the elastic portion 572 is greater than half of a perimeter of an edge of the first stationary portion 571.

For example, the elastic portion 572 surrounds at least half of the edge of the first stationary portion 571, or the elastic portion 572 surrounds the edge of the first stationary portion 571 by a plurality of circles.

For example, an elasticity coefficient of the movable circuit board 57 in a length direction is Ky, and a value of Ky ranges from 20 to 40, for example, the elasticity coefficient Ky of the movable circuit board 57 in the length direction may be 30; and/or
an elasticity coefficient of the movable circuit board 57 in a width direction is K_{X}, and a value of K_{X} ranges from 70 to 110, for example, the elasticity coefficient K_{X} of the movable circuit board 57 in the length direction may be 93.

For example, the movable circuit board 57 further includes a reinforcing portion 574. The reinforcing portion 574 is fastened to the first stationary portion 571. The reinforcing portion 574 may be a steel plate or another metal plate. In an implementation, the reinforcing portion 574 may be fastened to the first stationary portion 571 by using adhesive. In another implementation, the movable circuit board 57 may alternatively not include the reinforcing portion 574.

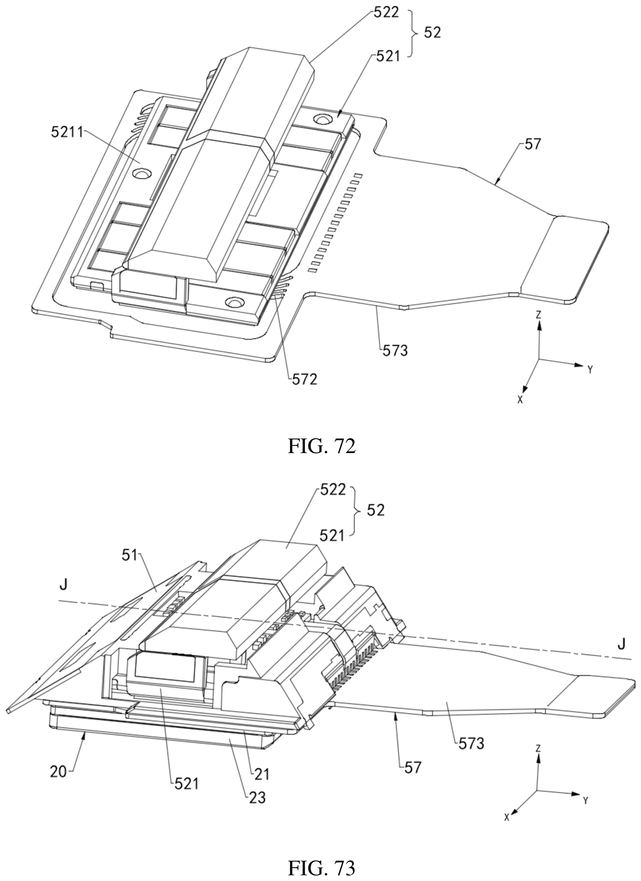

FIG. 72 is a seventh diagram of a partial structure of the image-stabilization motor 50 shown in FIG. 51 according to an implementation.

Refer to FIG. 72, together with FIG. 71. The movable carrier 52 is fastened to the first stationary portion 571 of the movable circuit board 57. In an implementation, the movable carrier 52 may have no connection relationship with the elastic portion 572 or the second stationary portion 573 of the movable circuit board 57.

For example, the bottom plate 5211 of the first bracket 521 of the movable carrier 52 is fastened to the reinforcing portion 574. In other words, the movable carrier 52 is fastened to the first stationary portion 571 through the reinforcing portion 574.

In an implementation, both the movable carrier 52 and the first stationary portion 571 include a metal part, and a metal part of the movable carrier 52 may be welded to a metal part of the first stationary portion 571.

It can be understood that, when the movable carrier 52 moves in the first direction X, the elastic portion 572 of the movable circuit board 57 is deformed in the first direction X. The first stationary portion 571 of the movable circuit board 57 may move along with the movable carrier 52 in the first direction X. When the movable carrier 52 moves in the second direction Y, the elastic portion 572 of the movable circuit board 57 is deformed in the second direction Y. The first stationary portion 571 of the movable circuit board 57 may move along with the movable carrier 52 in the second direction Y.

Refer to FIG. 72, together with FIG. 69 and FIG. 71. In an implementation, the elasticity coefficient K_{X} of the movable circuit board 5718 in the width direction is less than the elasticity coefficient Ky of the movable circuit board 5718 in the length direction, that is, Ky of the movable circuit board 5718 is less than K_{X}. It can be understood that, because K_{Y} of the movable circuit board 57 is less than K_{X}, a limitation on a stroke of the movable carrier 52 moving relative to the stationary carrier 51 in the second direction Y is smaller than a limitation on a stroke of the movable carrier 52 moving relative to the stationary carrier 51 in the first direction X. In this case, in this embodiment, a driving force produced by the second drive coil 532 and the first drive magnetic sub-piece 551 may be designed to be less than a driving force produced by the first drive coil 531 and the first drive magnetic piece 54, to better match the fact that K_{Y} of the movable circuit board 57 is less than K_{X}. For example, a small quantity of second drive coils 532 and a small quantity of first drive magnetic sub-pieces 551 may be disposed, to facilitate miniaturization of the image-stabilization motor 50.

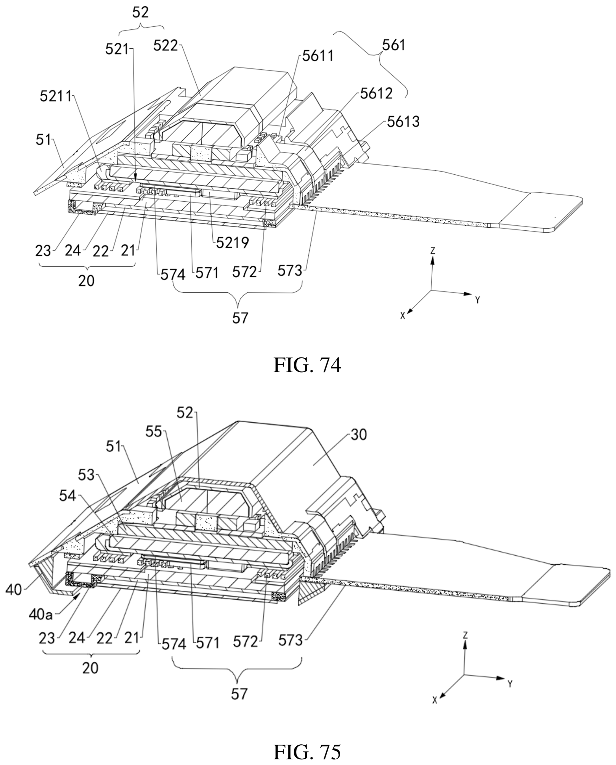

FIG. 73 is a diagram of a partial structure of the image sensor assembly 101 shown in FIG. 50 according to an implementation. FIG. 74 is a partial sectional view of the image sensor assembly 101 shown in FIG. 73 along a line J-J according to an implementation.

As shown in FIG. 73 to FIG. 74, the image sensor module 20 includes a module circuit board 21, an image sensor 22 (also referred to as a sensor), a filter bracket 23, and a filter 24. For a structure of each part of the image sensor module 20, refer to the structure of each part of the image sensor module 20 in the foregoing embodiments (for example, FIG. 31 to FIG. 33). Details are not described herein again.

As shown in FIG. 73 and FIG. 74, the image sensor module 20 is fastened to the first stationary portion 571 of the movable circuit board 57. The image sensor module 20 is located on a side, away from the reinforcing portion 574, of the first stationary portion 571 of the movable circuit board 57. It can be understood that the image sensor module 20 may have no connection relationship with the elastic portion 572 or the second stationary portion 573 of the movable circuit board 57.

For example, the module circuit board 21 of the image sensor module 20 is fastened to the first stationary portion 571 of the movable circuit board 57. The module circuit board 21 is electrically connected to the movable circuit board 57. In this way, a device outside the camera module 100 may be electrically connected to the image sensor 22 through the movable circuit board 57 and the module circuit board 21.

For example, the module circuit board 21 is electrically connected to the first stationary portion 571 of the movable circuit board 57 through a welding process, and is then electrically connected to the second stationary portion 573 through the elastic portion 572 of the movable circuit board 57.

As shown in FIG. 73 to FIG. 74, for example, the image sensor module 20 is located on a side, away from the movable carrier 52, of the first stationary portion 571 of the movable circuit board 57. In other words, the image sensor module 20 is located on a side, away from the first drive magnetic piece 54, of the first stationary portion 571 of the movable circuit board 57. In this case, the image sensor module 20 is fastened to the movable carrier 52 through the movable circuit board 57. For example, the image sensor module 20 is fastened to the bottom plate 5211 of the first bracket 521 of the movable carrier 52 through the first stationary portion 571 of the movable circuit board 57.

It can be understood that, when the movable carrier 52 moves relative to the stationary carrier 51 in the first direction X, the elastic portion 572 of the movable circuit board 57 is deformed in the first direction X. The image sensor module 20 and the first stationary portion 571 of the movable circuit board 57 may move along with the movable carrier 52 in the first direction X. When the movable carrier 52 moves relative to the stationary carrier 51 in the second direction Y, the elastic portion 572 of the movable circuit board 57 is deformed in the second direction Y. The image sensor module 20 and the first stationary portion 571 of the movable circuit board 57 may move along with the movable carrier 52 in the second direction Y. Therefore, the movable carrier 52 may control, through the movable circuit board 57, the image sensor module 20 to move along the plane perpendicular to the third direction Z (that is, the X-Y plane). When the camera module 100 captures ambient light, if the electronic device 1000 shakes on the X-Y plane due to an external force, movement of the image sensor module 20 on the X-Y plane may be controlled, to counteract a shake stroke produced by the camera module 100 on the X-Y plane, to avoid or reduce a position offset of the camera module 100 that is caused by the shake. In this way, optical image stabilization is implemented for the camera module 100, to improve imaging quality of the camera module 100.

In addition, when the movable carrier 52 is driven to rotate clockwise relative to the stationary carrier 51, the movable carrier 52 drives, through the elastic portion 572 of the movable circuit board 57, the image sensor module 20 to rotate clockwise. In this implementation, a direction and a magnitude of a current on the third drive coil 533 of the drive coil 53 are controlled, to obtain a compensation driving force for the movable carrier 52 to rotate counterclockwise relative to the stationary carrier 51, to implement rotation compensation for the movable carrier 52 around the Z-axis direction. In this case, the image sensor module 20 also performs rotation compensation around the Z-axis direction, to counteract a shake stroke produced by rotating around the Z-axis direction by the camera module 100, to avoid or reduce a position offset of the camera module 100 that is caused by the shake. In this way, optical image stabilization is implemented for the camera module 100, to improve imaging quality of the camera module 100.

As shown in FIG. 74, the first bracket 521 further includes a stationary bump 5219. The stationary bump 5219 is convexly disposed on the bottom plate 5211, and is located on a side, facing the image sensor module 20, of the bottom plate 5211. The stationary bump 5219 may pass through the movable circuit board 57, and is fastened to the image sensor module 20. For example, the stationary bump 5219 passes through a gap between the first stationary portion 571 and the elastic portion 572 of the movable circuit board 57, and is fastened to the image sensor module 20.

It can be understood that the stationary bump 5219 is convexly disposed on the bottom plate 5211 of the first bracket 521, and the stationary bump 5219 passes through the movable circuit board 57 and is directly fastened to the image sensor module 20. In this way, compared with a solution in which the image sensor module 20 is fastened to the first bracket 521 through the movable circuit board 57, in this implementation, an assembly tolerance chain between the image sensor module 20 and the first bracket 521 is short, an assembly tolerance between the image sensor module 20 and the first bracket 521 is small, and the image sensor module 20 and the bottom plate 5211 of the first bracket 521 may be located on a same plane to a large extent. In addition, when the movable carrier 52 moves on the X-Y plane, the movable carrier 52 may directly drive the image sensor module 20 to move, and a movement status of the image sensor module 20 is slightly affected by the movable circuit board 57.

As shown in FIG. 74, the stationary carrier 51 is fastened to the second stationary portion 573 of the movable circuit board 57. The stationary carrier 51 may have no connection relationship with the first stationary portion 571 or the elastic portion 572 of the movable circuit board 57. In this way, the image-stabilization motor 10 and the movable circuit board 57 are better integrated.

As shown in FIG. 74, the motor circuit board 561 is electrically connected to the movable circuit board 57. In this way, the drive chip 562 (refer to FIG. 58) may be electrically connected to the movable circuit board 57 through the motor circuit board 561, and electrically connected to the outside of the image sensor assembly 101 through the movable circuit board 57.

For example, the pin end portion 5613 of the motor circuit board 561 is electrically connected to the second stationary portion 573 of the movable circuit board 57. In this way, the drive chip 562 (refer to FIG. 58) may be electrically connected to the second stationary portion 573 of the movable circuit board 57 through the mounting portion 5611, the connecting portion 5612, and the pin end portion 5613 of the motor circuit board 561, and electrically connected to the outside of the image sensor assembly 101 through the second stationary portion 573 of the movable circuit board 57. In other words, the drive coil 53 may be electrically connected to the second stationary portion 573 of the movable circuit board 57 through the drive chip 562 and the motor circuit board 561. It can be understood that, in this implementation, in a solution in which the drive chip 562 (refer to FIG. 58) is electrically connected to the outside of the image sensor assembly 101, the motor circuit board 561 may not be electrically connected to the first stationary portion 571 or the elastic portion 572 of the movable circuit board 57. In this implementation, the drive chip 562 may be directly electrically connected to the second stationary portion 573 of the movable circuit board 57. A solution in which the drive chip 562 is electrically connected to the outside of the image sensor assembly 101 is simple, and is more suitable for mass production. In another implementation, a manner and a position of an electrical connection between the motor circuit board 561 and the movable circuit board 57 are not specifically limited.

In another implementation, the drive chip 562 may be directly disposed on the second stationary portion 573 of the movable circuit board 57. The drive coil 53 may be directly electrically connected to the second stationary portion 573 of the movable circuit board 57 through the motor circuit board 561, and electrically connected to the drive chip 562 through the second stationary portion 573 of the movable circuit board 57. In another implementation, if the image-stabilization motor 50 does not include the drive chip 562, the drive coil 53 may be directly electrically connected to the second stationary portion 573 of the movable circuit board 57 through the motor circuit board 561, and electrically connected to the outside of the image-stabilization motor 50 through the second stationary portion 573 of the movable circuit board 57.

FIG. 75 is a partial sectional view of the image sensor assembly 101 shown in FIG. 50 along a line K-K according to an implementation.

As shown in FIG. 75, the upper housing 30 and the lower housing 40 are separately fastened to two sides of the stationary carrier 51. The upper housing 30, the lower housing 40, and the stationary carrier 51 are assembled and matched, to jointly cover the movable carrier 52 and internal structures (for example, the drive coil 53, the first drive magnetic piece 54, and the second drive magnetic piece 55) of the image-stabilization motor 50. The upper housing 30, the lower housing 40, and the stationary carrier 51 are matched to jointly package and protect the internal structures of the image-stabilization motor 50. It can be understood that the upper housing 30, the lower housing 40, and the stationary carrier 51 are matched, to improve appearance and integration of the image-stabilization motor 50.

For example, the lower housing 40 is further provided with a light transmission hole 40a. The lower housing 40 may alternatively be fastened to the second stationary portion 573 of the movable circuit board 57. This can improve stability of the lower housing 40, to improve integration of the image sensor assembly 101. In addition, the lower housing 40 may be further configured to cover the first stationary portion 571, the elastic portion 572, and the image sensor module 20 of the movable circuit board 57. In addition, the image sensor 22 of the image sensor module 20 is disposed opposite to the light transmission hole 40a of the lower housing 40. In this way, light outside the image sensor assembly 101 may pass through the light transmission hole 40a of the lower housing 40, and is propagated to the image sensor 22 through the filter 24.

For example, the light transmission hole 40a of the lower housing 40 may directly face the third side surface 1023 (refer to FIG. 2) of the first optical path conversion element 102 (refer to FIG. 2).

The foregoing specifically describes another architecture of the image sensor assembly 101 with reference to related accompanying drawings.

As shown in FIG. 68 to FIG. 70, this implementation provides a drive architecture similar to a "sandwich"-type magnet coil. Specifically, the drive coil 53 is fastened to the stationary carrier 51, both the first drive magnetic piece 54 and the second drive magnetic piece 55 are fastened to the movable carrier 52, and the drive coil 53 is located between the first drive magnetic piece 54 and the second drive magnetic piece 55. It can be understood that, compared with a solution in which the first drive magnetic piece 54 and the second drive magnetic piece 55 are tiled on the X-Y plane, in this application, the first drive magnetic piece 54, the drive coil 53, and the second drive magnetic piece 55 are sequentially disposed in the Z-axis direction, to effectively use space in the Z-axis direction and reduce dimensions in an X-axis direction and a Y-axis direction. This can greatly improve space utilization in the Z-axis direction.

It can be understood that the first drive coil 531 faces the first drive magnetic piece 54, to drive the movable carrier 52 to move relative to the stationary carrier 51 in the first direction X. The second drive coil 532 faces the first drive magnetic sub-piece 551, to drive the movable carrier 52 to move relative to the stationary carrier 51 in the second direction Y. In this way, the movable carrier 52 can move relative to the stationary carrier 51 along the plane perpendicular to the third direction Z (that is, the X-Y plane). When the camera module 100 captures ambient light, if the electronic device 1000 shakes on the X-Y plane due to an external force, movement of the image sensor module on the X-Y plane may be controlled, to counteract a shake stroke produced by the camera module 100 on the X-Y plane, to avoid or reduce a position offset of the camera module 100 that is caused by the shake. In this way, optical image stabilization is implemented for the camera module 100, to improve imaging quality of the camera module 100.

In addition, because the first drive magnetic piece 54 and the second drive magnetic piece 55 may be disposed in the Z-axis direction, quantities of magnets, arranged on the X-Y plane, of the first drive magnetic piece 54 and the second drive magnetic piece 55 do not affect each other, so that large quantities of first drive magnetic pieces 54 and second drive magnetic pieces 55 can be disposed.

It can be understood that, because the drive coil 53 is fastened to the stationary carrier 51 and both the first drive magnetic piece 54 and the second drive magnetic piece 55 are fastened to the movable carrier 52, the image-stabilization motor 50 in this implementation is a moving-magnet motor. In this way, compared with that in a moving-coil motor, an electrical connection manner of the drive coil 53 in this implementation is simpler.

It can be understood that, in the "pyramid" stacked architecture of the image-stabilization motor in this application, at a middle layer of the pyramid, the second drive coil 532 is disposed, and a group of symmetrical coils that are connected in series and that have opposite directions (third drive coils 533) are added to implement rotation compensation to resolve an image rotation problem.

It can be understood that, because the drive coil 53 is located between the first drive magnetic piece 54 and the second drive magnetic piece 55 and the first drive magnetic piece 54 and the second drive magnetic piece 55 are away from each other, crosstalk between magnetic induction lines of the first drive magnetic piece 54 and the second drive magnetic piece 55 can be reduced, to ensure utilization of the magnetic induction lines of the first drive magnetic piece 54 and the second drive magnetic piece 55.

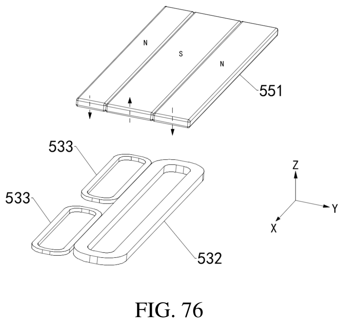

FIG. 76 is a diagram of an arrangement of the second drive coil 532 and the third drive coil 533 shown in FIG. 52 according to another implementation.

As shown in FIG. 76, there are a plurality of third drive coils 533. The plurality of third drive coils 533 are located on a same side of the second drive coil 532. In an implementation, the plurality of third drive coils 533 are located on a same side of the second drive coil 532 in the width direction.

For example, there is one second drive coil 532. There are two third drive coils 533. The two third drive coils 533 are located on a same side of the second drive coil 532 in the width direction (namely, the Y-axis direction).

For example, the two third drive coils 533 are sequentially arranged in the first direction X.

In another implementation, a manner of arranging the third drive coil 533 and the second drive coil 532 is not specifically limited in this application.

As shown in FIG. 76, the plurality of third drive coils 533 face the first drive magnetic sub-piece 551, to drive the movable carrier 52 to rotate relative to the stationary carrier 51.

For example, the first drive magnetic sub-piece 551 includes at least three polarity directions that are opposite to each other (indicated by dashed lines with arrows in FIG. 76), and two adjacent polarity directions are opposite. A polarity direction of the first drive magnetic sub-piece 551 may be perpendicular to the winding plane of the second drive coil 532. Coils in two regions of one third drive coil 533 may respectively correspond to a first polarity direction and a second polarity direction of the first drive magnetic sub-piece 551. Coils in two regions of the other third drive coil 533 may respectively correspond to the second polarity direction and a third polarity direction of the first drive magnetic sub-piece 551. It can be understood that a magnet in the middle of the first drive magnetic sub-piece 551 may be disposed opposite to the two third drive coils 533. Therefore, the two third drive coils 533 may share the magnet in the middle of the first drive magnetic sub-piece 551.

It can be understood that FIG. 76 merely shows an example of three polarity directions of the first drive magnetic sub-piece 551. In another implementation, a polarity direction in the middle of the first drive magnetic sub-piece 551 may be exchanged with polarity directions on two sides.

It can be understood that the image-stabilization motor 50 in this implementation may also be applied to the image sensor assembly 101 mentioned above. Details are not described herein again.

It can be understood that embodiments of this application or features in implementations may be combined with each other if there is no conflict, and any combination of features in different implementations also falls within the protection scope of this application. That is, the plurality of embodiments described above may alternatively be combined in any manner according to an actual requirement.

It can be understood that all of the foregoing accompanying drawings are example drawings of this application, and do not represent actual sizes of products. In addition, a size proportion relationship between components in the accompanying drawings is not intended to limit an actual product in this application. The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image-stabilization motor (10), comprising a stationary carrier (11), a movable carrier (12), a drive magnetic piece (13), a first drive coil (14), and a second drive coil (15), wherein the movable carrier (12) is configured to fasten an image sensor module (20);
the drive magnetic piece (13) is fastened to the stationary carrier (11), both the first drive coil (14) and the second drive coil (15) are fastened to the movable carrier (12), and the drive magnetic piece (13) is located between the first drive coil (14) and the second drive coil (15); and
both the first drive coil (14) and the second drive coil (15) face the drive magnetic piece (13), to drive the movable carrier (12) to move relative to the stationary carrier (11).

2. The image-stabilization motor (10) according to claim 1, wherein the stationary carrier (11) comprises a magnetic isolation sheet (111), the magnetic isolation sheet (111) comprises a first surface (1111) and a second surface (1112) that are arranged facing away from each other, the first surface (1111) faces the first drive coil (14), and the second surface (1112) faces the second drive coil (15);
the drive magnetic piece (13) comprises a first drive magnetic piece (131) and a second drive magnetic piece (132), the first drive magnetic piece (131) is fastened to the first surface (1111), and the second drive magnetic piece (132) is fastened to the second surface (1112);
the first drive coil (14) faces the first drive magnetic piece (131), to drive the movable carrier (12) to move relative to the stationary carrier (11) in a first direction; and
the second drive coil (15) comprises a first drive sub-coil (151), and the first drive sub-coil (151) faces the second drive magnetic piece (132), to drive the movable carrier (12) to move relative to the stationary carrier (11) in a second direction, wherein the second direction is different from the first direction.

3. The image-stabilization motor (10) according to claim 2, wherein the second drive coil (15) comprises a second drive sub-coil (152), and the second drive sub-coil (152) and the first drive sub-coil (151) are disposed at a spacing; and
the second drive sub-coil (152) faces the second drive magnetic piece (132), to drive the movable carrier (12) to rotate relative to the stationary carrier (11).

4. The image-stabilization motor (10) according to claim 3, wherein there are two second drive sub-coils (152), the two second drive sub-coils (152) are connected in series, and current directions of the two second drive sub-coils (152) are opposite.

5. The image-stabilization motor (10) according to any one of claims 1 to 4, wherein the image-stabilization motor (10) comprises a first position sensor (194), a second position sensor (195), and a third position sensor (173), and all of the first position sensor (194), the second position sensor (195), and the third position sensor (173) are fastened to the movable carrier (12) at spacings, wherein
the first position sensor (194) and the second position sensor (195) are configured to separately detect a displacement of the movable carrier (12) moving relative to the stationary carrier (11) in the first direction, and are further configured to cooperate with each other to detect a rotation angle of the movable carrier (12) relative to the stationary carrier (11); and/or
the image-stabilization motor (10) comprises the third position sensor (173), the third position sensor (173) is fastened to the movable carrier (12), and the third position sensor (173) is configured to detect a displacement of the movable carrier (12) moving relative to the stationary carrier (11) in the second direction.

6. The image-stabilization motor (10) according to any one of claims 1 to 5, wherein the movable carrier (12) is movably connected to the stationary carrier (11) through a rolling piece (191).

7. The image-stabilization motor (10) according to claim 6, wherein the stationary carrier (11) comprises a metal piece (11a) and an insulation piece (11b), the metal piece (11a) is embedded in the insulation piece (11b), the metal piece (11a) comprises an extension portion (115a), and the extension portion (115a) is exposed relative to the insulation piece (11b); and
the rolling piece (191) is disposed on the movable carrier (12), and the rolling piece (191) is in contact with the extension portion (115a).

8. The image-stabilization motor (10) according to claim 7, wherein the extension portion (115a) is made of a magnetic-attractive material, the movable carrier (12) is provided with a magnetic-attractive magnetic piece (192), and the magnetic-attractive magnetic piece (192) is disposed opposite to the extension portion (115a).

9. The image-stabilization motor (10) according to any one of claims 2 to 8, wherein the movable carrier (12) comprises a first bracket (121) and a second bracket (122), wherein
the first bracket (121) comprises a bottom plate (1211), a first bump (1212), and a second bump (1213), the first bump (1212) and the second bump (1213) are convexly disposed on a same side of the bottom plate (1211), and the second bracket (122) is fastened to the first bump (1212) and the second bump (1213), and is disposed opposite to the bottom plate (1211) at a spacing; and
the first drive coil (14) is fastened to the bottom plate (1211), and the second drive coil (15) is fastened to the second bracket (122).

10. The image-stabilization motor (10) according to any one of claims 1 to 9, wherein the image-stabilization motor (10) further comprises a movable circuit board (18), the movable circuit board (18) comprises a first stationary portion (181), an elastic portion (182), and a second stationary portion (183), and the elastic portion (182) is connected between the first stationary portion (181) and the second stationary portion (183);
the movable carrier (12) is fastened to the first stationary portion (181), and the stationary carrier (11) is fastened to the second stationary portion (183); and
the image sensor module (20) is fastened to a side, away from the movable carrier (12), of the first stationary portion (181).

11. The image-stabilization motor (10) according to claim 10, wherein the elastic portion (182) is in a spiral shape, a broken-line shape, or a curved shape.

12. The image-stabilization motor (10) according to claim 10, wherein a length of the elastic portion (182) is greater than half of a perimeter of an edge of the first stationary portion (181).

13. The image-stabilization motor (10) according to claim 10, wherein an elasticity coefficient of the movable circuit board (18) in a length direction is Ky, and a value of Ky ranges from 25 to 35; and/or
an elasticity coefficient of the movable circuit board (18) in a width direction is K_{X}, and a value of K_{X} ranges from 85 to 100.

14. The image-stabilization motor (10) according to any one of claims 10 to 13, wherein the movable circuit board (18) further comprises a reinforcing portion (185), the reinforcing portion (185) is located on the first stationary portion (181), and the movable carrier (12) is fastened to the reinforcing portion (185).

15. The image-stabilization motor (10) according to any one of claims 10 to 14, wherein the first bracket (121) of the movable carrier (12) further comprises a stationary bump (1219), and the stationary bump (1219) is convexly disposed on the bottom plate (1211) of the first bracket (121), and is located on a side, away from the first bump (1212) of the first bracket (121), of the bottom plate (1211) of the first bracket (121), and/or a side, away from the second bump (1213) of the first bracket (121), of the bottom plate (1211) of the first bracket (121); and
the stationary bump (1219) passes through a gap of the elastic portion (182), and is fastened to the image sensor module (20).

16. The image-stabilization motor (10) according to any one of claims 10 to 15, wherein the image-stabilization motor (10) comprises a first circuit board (16) and an image-stabilization drive chip (193), wherein
the first circuit board (16) is fastened to the movable carrier (12); and
both the first drive coil (14) and the image-stabilization drive chip (193) are fastened to the first circuit board (16), and an input end and an output end of the first drive coil (14) form a current loop through the first circuit board (16) and the image-stabilization drive chip (193).

17. The image-stabilization motor (10) according to claim 16, wherein the movable carrier (12) is provided with a first avoidance hole (1214), the first circuit board (16) is provided with a second avoidance hole (161), and the first avoidance hole (1214) and the second avoidance hole (161) are arranged opposite to each other;
the movable circuit board (18) comprises an electrical connection portion (184), the electrical connection portion (184) is fastened to the first stationary portion (181), a part of the electrical connection portion (184) passes through the first avoidance hole (1214) and is located in the second avoidance hole (161), and a pin end (1841) of the electrical connection portion (184) is electrically connected to a second pin end (162) of the first circuit board (16); and
the image-stabilization drive chip (193) is electrically connected to the electrical connection portion (184) through the first circuit board (16).

18. The image-stabilization motor (10) according to claim 16 or 17, wherein the image-stabilization motor (10) comprises a second circuit board (17), the second circuit board (17) is fastened to the movable carrier (12), and the second drive coil (15) is fastened to the second circuit board (17); and
the second drive coil (15) forms a current loop with the image-stabilization drive chip (193) through the second circuit board (17), an electric-conductor in the movable carrier (12), and the first circuit board (16).

19. The image-stabilization motor (10) according to any one of claims 2 to 18, wherein the stationary carrier (11) comprises a top plate (112), and a first side plate (113) and a second side plate (114) that are disposed opposite to each other, and the top plate (112) is connected between the first side plate (113) and the second side plate (114);
the top plate (112) and the first side plate (113) are disposed at an obtuse angle, and/or the top plate (112) and the second side plate (114) are disposed at an obtuse angle; and
at least a part of the top plate (112) forms the magnetic isolation sheet (111), the first surface (1111) of the magnetic isolation sheet (111) is a surface, facing an inner side of the stationary carrier (11), of the top plate (112), and the second surface (1112) of the magnetic isolation sheet (111) is a surface, facing away from an outer side of the stationary carrier (11), of the top plate (112).

20. The image-stabilization motor (10) according to claim 1 or 2, wherein the image-stabilization motor (10) further comprises a guide bracket (196), and the guide bracket (196) comprises a first support portion (1961), a second support portion (1962), and a third support portion (1963); and
the first support portion (1961), the second support portion (1962), and the third support portion (1963) are connected to the first bracket (121) of the movable carrier (12) through a plurality of first support pieces (197), and are connected to the stationary carrier (11) through a plurality of second support pieces (198), to make a direction of relative movement between the movable carrier (12) and the guide bracket (196) different from a direction of relative movement between the guide bracket (196) and the stationary carrier (11).

21. The image-stabilization motor (10) according to claim 1, wherein the drive magnetic piece (13) comprises a first drive magnetic piece (131) and a second drive magnetic piece (132), the first drive coil (14) comprises a first drive sub-coil (141) and a second drive sub-coil (142), and the second drive coil (15) comprises a first drive sub-coil (151) and a second drive sub-coil (152);
the first drive magnetic piece (131) is located between the first drive sub-coil (141) of the first drive coil (14) and the first drive sub-coil (151) of the second drive coil (15), and the second drive magnetic piece (132) is located between the second drive sub-coil (142) of the first drive coil (14) and the second drive sub-coil (152) of the second drive coil (15);
both the first drive sub-coil (141) of the first drive coil (14) and the first drive sub-coil (151) of the second drive coil (15) face the first drive magnetic piece (131), to drive the movable carrier (12) to move relative to the stationary carrier (11) in a first direction; and
both the second drive sub-coil (142) of the first drive coil (14) and the second drive sub-coil (152) of the second drive coil (15) face the second drive magnetic piece (132), to drive the movable carrier (12) to move relative to the stationary carrier (11) in a second direction, wherein the second direction is different from the first direction.

22. The image-stabilization motor (10) according to claim 21, wherein the drive magnetic piece (13) comprises a third drive magnetic piece (133), the first drive coil (14) comprises a third drive sub-coil (143), the second drive coil (15) comprises a third drive sub-coil (153), and the third drive magnetic piece (133) is located between the third drive sub-coil (143) of the first drive coil (14) and the third drive sub-coil (153) of the second drive coil (15); and
the third drive sub-coil of the first drive coil (14) and the third drive sub-coil of the second drive coil (15) face the third drive magnetic piece (13), to drive the movable carrier (12) to rotate relative to the stationary carrier (11).

23. The image-stabilization motor (10) according to claim 21 or 22, wherein the stationary carrier (11) is provided with a first through hole (191a) and a second through hole (191b), the first drive magnetic piece (131) is located in the first through hole (191a), and the second drive magnetic piece (132) is located in the second through hole (191b).

24. An image-stabilization motor (50), comprising a stationary carrier (51), a movable carrier (52), a drive coil (53), a first drive magnetic piece (54), and a second drive magnetic piece (55), wherein the movable carrier (12) is configured to fasten an image sensor module (20);
the drive coil (53) is fastened to the stationary carrier (51), both the first drive magnetic piece (54) and the second drive magnetic piece (55) are fastened to the movable carrier (52), and the drive coil (53) is located between the first drive magnetic piece (54) and the second drive magnetic piece (55); and
the drive coil (53) faces the first drive magnetic piece (54) and the second drive magnetic piece (55), to drive the movable carrier (12) to move relative to the stationary carrier (11).

25. The image-stabilization motor (50) according to claim 24, wherein the drive coil (53) comprises a first drive coil (531) and a second drive coil (532), and the second drive magnetic piece (55) comprises a first drive magnetic sub-piece (551);
the first drive coil (531) faces the first drive magnetic piece (54), to drive the movable carrier (52) to move relative to the stationary carrier (51) in a first direction; and
the second drive coil (532) faces the first drive magnetic sub-piece (551), to drive the movable carrier (52) to move relative to the stationary carrier (51) in a second direction, wherein the second direction is different from the first direction.

26. The image-stabilization motor (50) according to claim 25, wherein the first drive coil (531) and the second drive coil (532) are arranged in a third direction, and the third direction is different from both the first direction and the second direction.

27. The image-stabilization motor (50) according to claim 26, wherein the image-stabilization motor (50) comprises a motor circuit board (561), and the motor circuit board (561) is fastened to the stationary carrier (51); and
the motor circuit board (561) comprises a first surface (5614) and a second surface (5615) that are arranged in the third direction, the first drive coil (531) is fastened to the first surface (5614) of the motor circuit board (561), and the second drive coil (532) is fastened to the second surface (5615) of the motor circuit board (561).

28. The image-stabilization motor (50) according to claim 27, wherein the stationary carrier (51) is provided with a mounting hole (5111), and the mounting hole (5111) is in communication with inner space of the stationary carrier (51); and
at least a part of the first drive coil (531) is located in the mounting hole (5111).

29. The image-stabilization motor (50) according to any one of claims 25 to 28, wherein the drive coil (53) comprises a third drive coil (533), and the third drive coil (533) faces the first drive magnetic sub-piece (551), to drive the movable carrier (52) to rotate relative to the stationary carrier (51).

30. The image-stabilization motor (50) according to claim 29, wherein there are a plurality of third drive coils (533), and the plurality of third drive coils (533) are located on two sides of the second drive coil (532) in a length direction, or the plurality of third drive coils (533) are located on a same side of the second drive coil (532) in a width direction.

31. The image-stabilization motor (50) according to any one of claims 25 to 30, wherein the drive coil (53) comprises a fourth drive coil (534), and the fourth drive coil (534) and the second drive coil (532) are disposed at a same layer;
the second drive magnetic piece (55) comprises a second drive magnetic sub-piece (552), and the second drive magnetic sub-piece (552) and the first drive magnetic sub-piece (551) are disposed at a same layer; and
the fourth drive coil (534) faces the second drive magnetic sub-piece (552), to drive the movable carrier (52) to move relative to the stationary carrier (51) in the first direction.

32. The image-stabilization motor (50) according to any one of claims 24 to 31, wherein the movable carrier (52) comprises a first bracket (521) and a second bracket (522), wherein
the first bracket (521) comprises a bottom plate (5211), a first bump (5212), and a second bump (5213), the first bump (5212) and the second bump (5213) are convexly disposed on a same side of the bottom plate (5211), the second bracket (522) is fastened to the first bump (5212) and the second bump (5213), and is disposed opposite to the bottom plate (5211) at a spacing, and at least a part of the stationary carrier (51) is located between the bottom plate (5211) and the second bracket (522); and
the first drive magnetic piece (54) is fastened to the bottom plate (5211), and the second drive magnetic piece (55) is fastened to the second bracket (522).

33. The image-stabilization motor (50) according to any one of claims 24 to 32, wherein the movable carrier (52) is movably connected to the stationary carrier (51) through a connecting piece (581).

34. The image-stabilization motor (50) according to claim 33, wherein the stationary carrier (51) is provided with a magnetic-attractive piece (59), the movable carrier (52) is provided with a magnetic-attractive magnetic piece (582), and a magnetic attraction force between the magnetic-attractive magnetic piece (192) and the magnetic-attractive piece (59) enables the stationary carrier (51), the connecting piece (581), and the movable carrier (52) to remain in contact.

35. The image-stabilization motor (50) according to claim 34, wherein there are a plurality of connecting pieces (581), and the plurality of connecting pieces (581) are disposed around the magnetic-attractive magnetic piece (192).

36. The image-stabilization motor (50) according to any one of claims 24 to 35, wherein the image-stabilization motor (50) further comprises a movable circuit board (57), the movable circuit board (57) comprises a first stationary portion (571), an elastic portion (572), and a second stationary portion (573), and the elastic portion (572) is connected between the first stationary portion (571) and the second stationary portion (573);
the movable carrier (52) is fastened to the first stationary portion (571), and the stationary carrier (51) is fastened to the second stationary portion (573); and
the image sensor module (20) is fastened to a side, away from the movable carrier (52), of the first stationary portion (571).

37. The image-stabilization motor (50) according to claim 36, wherein the drive coil (53) is electrically connected to the second stationary portion (573) of the movable circuit board (57) through the motor circuit board (561).

38. An image sensor assembly (101), comprising an image sensor module (20) and the image-stabilization motor (10) according to any one of claims 1 to 23, wherein the image sensor module (20) is fastened to the movable carrier (12); or
comprising an image sensor module (20) and the image-stabilization motor (50) according to any one of claims 24 to 37, wherein the image sensor module (20) is fastened to the movable carrier (52).

39. The image sensor assembly (101) according to claim 38, wherein the image sensor module (20) is fastened to a side, away from the first drive coil (14), of the movable carrier (12); or
the image sensor module (20) is fastened to a side, away from the first drive magnetic piece (54), of the movable carrier (52).

40. A camera module (100), comprising a first optical element (103) and the image sensor assembly (101) according to claim 38 or 39, wherein the image sensor assembly (101) is located on an image side of the first optical element (103).

41. The camera module (100) according to claim 40, wherein the camera module (100) comprises a first optical path conversion element (102), the first optical path conversion element (102) is located between the first optical element (103) and the image sensor assembly (101), and the first optical path conversion element (102) is configured to change an optical-axis direction of the camera module (100).

42. The camera module (100) according to claim 41, wherein the first optical path conversion element (102) comprises a first side surface (1021), a second side surface (1022), and a third side surface (1023) that are connected to each other, and after passing through the first optical element (103), light enters the first optical path conversion element (102), is totally reflected by the second side surface (1022) of the first optical path conversion element (102) and reflected by the third side surface (1023) of the first optical path conversion element (102), and is then propagated to the image sensor assembly (101); and
the image sensor assembly (101) is located on a side on which the third side surface (1023) of the first optical path conversion element (102) is located.

43. The camera module (100) according to any one of claims 40 to 42, wherein the camera module (100) further comprises a second optical conversion element (104), the second optical conversion element (104) is located on an object side of the first optical element (103), and the second optical conversion element (104) is configured to change the optical-axis direction of the camera module (100).

44. An electronic device (1000), comprising a device housing (200) and the camera module (100) according to any one of claims 40 to 43, wherein the camera module (100) is disposed in the device housing (200).
